(19) Europäisches Patentamt

European Patent Office

Office européen des brevets

(11) Veröffentlichungsnummer: **0 433 351 B1**

(12) **EUROPÄISCHE PATENTSCHRIFT**

(45) Veröffentlichungstag der Patentschrift: **02.02.94**

(51) Int. Cl.5: **G05D 1/02**, G01S 13/93

(21) Anmeldenummer: **89910096.0**

(22) Anmeldetag: **07.09.89**

(86) Internationale Anmeldenummer:
**PCT/EP89/01042**

(87) Internationale Veröffentlichungsnummer:
**WO 90/02985 (22.03.90 90/07)**

(54) **VERFAHREN UND VORRICHTUNG ZUR AUTOMATISCHEN KOLLISIONSVERMEIDUNG FÜR AUTOMATISCH FÜHRBARE FAHRZEUGE.**

(30) Priorität: **09.09.88 DE 3830790**

(43) Veröffentlichungstag der Anmeldung:
**26.06.91 Patentblatt 91/26**

(45) Bekanntmachung des Hinweises auf die Patenterteilung:
**02.02.94 Patentblatt 94/05**

(84) Benannte Vertragsstaaten:
**DE FR GB IT SE**

(56) Entgegenhaltungen:
**GB-A- 1 365 508
US-A- 3 737 902
US-A- 3 869 601
US-A- 4 072 945
US-A- 4 153 935**

(73) Patentinhaber: **FREUND, Eckhard
Am Hausbruch 7
D-58239 Schwerte(DE)**

(72) Erfinder: **FREUND, Eckhard
Am Hausbruch 7
D-5840 Schwerte(DE)**
Erfinder: **LAMMEN, Benno
Egerstr. 12
D-4600 Dortmund 50(DE)**

(74) Vertreter: **Flach, Dieter Dipl.-Phys. et al
Patentanwälte Dipl.-Phys. Dieter Flach
Dipl.-Chem. Dr. Steffen Andrae
Dipl.-Ing. Dietmar Haug
Dipl.-Chem. Dr. Richard Kneissl
Prinzregentenstrasse 24
D-83022 Rosenheim (DE)**

R. Blatt et al. "A Real-Time Guidance System for an Atonomous Vehicle"; Proceedings 1987 IEEE INTERNATIONAL CONFERENCE ON ROBOTICS AND AUTOMATION march 31-April 3, 1987, Computer Society Press, Sponsored by IEEE Council on Robotics and Automation, pages 1785-1791

**Beschreibung**

**2. Anwendungsgebiet**

Die Erfindung betrifft die Erkennung von Kollisionsgefahren für Fahrzeuge, basierend auf sensorisch ermittelten Daten über das Fahrzeug, andere Verkehrsteilnehmer, Hindernisse und Umweltbedingungen sowie die Berechnung kollisionsfreier Sollbahnen in Echtzeit für eine automatische Fahrzeugführung.

**3. Zweck**

In kritischen Verkehrssituationen, in denen der Führer eines Kraftfahrzeuges nicht schnell genug und situationsgerecht auf Gefährdungen durch Hindernisse oder andere Verkehrsteilnehmer reagieren kann, leitet die automatische Kollisionsvermeidung Notfallfahrmanöver ein und gibt der Fahrzeugregelung eine situationsabhängige in Echtzeit berechnete kollisionsfreie Sollbann vor.

**4. Stand der Technik**

Ein gattungsbildendes Verfahren sowie eine zugehörige Vorrichtung ist aus der US-PS 3, 869, 691 bekannt geworden. Es handelt sich dort um ein Verfahren sowie eine Vorrichtung zur Vermeidung von Kollisionen, insbesondere bei Schiffen. Mittels dieses Verfahrens kann unter Berücksichtigung der Antriebsdrehzahl der Schraube sowie des Steuerradeinschlags die Ist-Position, Ist-Geschwindigkeit und der Ist-Kurswinkel des einen Schiffes und über Radar, d.h. also Sensoren im allgemeinen, die Position eines anderen Schiffes als möglicherweise kollidierendes Hindernis erfaßt und die entsprechenden Daten verarbeitet werden. Dabei werden von dem bewegten Hindernis ebenfalls wieder die Ist-Koordinaten, die Ist-Geschwindigkeit und der Ist-Kurswinkel ermittelt, um dann schließlich den zu erwartenden engsten Abstand und die Zeit bis zum Erreichen des voraussichtlich engsten Abstandes zu bestimmen. In diesem Fall kann dann unter Umständen auch automatisch ein Kollisionsvermeidungskurs errechnet und die Aktuatoren des Fahrzeugs entsprechend angesteuert werden.

Das vorbekannte Verfahren aber eignet sich nur sehr bedingt für ein derartiges Kollisionsvermeidungsverfahren. Vor allem ist es bei Straßenfahrzeugen praktisch kaum tragbar. Denn nicht berücksichtigt wird bei dem vorbekannten Verfahren und bei der vorbekannten Vorrichtung beispielsweise auch die Ermittlung einer Beschleunigung am bewegten Hindernis. Vor allem stellt sich überhaupt nicht das Problem, daß nur eine vorgegebene Fahrbahn für die Fahrzeuge zur Verfügung steht, wobei auch bei einem Kollisionsvermeidungsmanöver diese Fahrbahn nicht verlassen werden soll.

Aus der Vorveröffentlichung Bhatt, R.; Gaw, D.; Meyste, A.: "A Real-Time Guidance System for an Autonomous Vehicle", Proc. 1987 IEEE Int. Conf. of Robotics and Automation, Raleigh, North Carolina, March 31-April 13, S. 1785-1791 ist ein Echtzeitverfahren zur automatischen Fahrzeugführung beschrieben, welches in eine hierarchische Struktur zur Weg-Planung integriert ist.

Ausgehend von einer obersten Planungsebene für einen Bereich von ca. 5 x 5 Meilen mit einem vorgegebenen Zielpunkt wird über mehrere Planungsschritte in den niedrigeren Ebenen mit jeweils kleinerem Planungshorizont und größerer Auflösung ein Sollweg für das Fahrzeug gesucht. Von Ebene zu Ebene werden neue Unterziele generiert. In der PILOT-Ebene, die Hauptgegenstand dieser Veröffentlichung ist, wird die lokale Umgebung des Fahrzeugs sensorgestützt in ein Gitter freier bzw. als Hindernis klassifizierter Sektoren eingeteilt. Durch wahlweise Anwendung von Optimierungsverfahren oder regelbasierten Strategien wird ein kollisionsfreier Weg zum lokalen Unterziel gesucht. Für die Anwendung der regelbasierten Ansätze werden typische Situation in der Nähe von Hindernissen durch Auswertung eines künstlichen Potentialfeldes um das Fahrzeug klassifiziert. Wenn eine Situation für die regelbasierten Ansätze nicht erkannt werden kann, muß mit Hilfe von Optimierungsstrategien ein kollisionsfreier Weg gesucht werden.

Gemäß dieser Vorveröffentlichung können aber nur stationäre sensorisch erfaßbare Hindernisse in eine Verfeinerung der Sollbahnplanung miteinbezogen werden.

In Zusammenarbeit zwischen Martin Marietta Denver Aerospace und der Carnegie Mellon University ist in den letzten Jahren in den USA im Rahmen des Autonomous Land Vehicle (ALV) Programms der Defence Advanced Research Projects Agency (DARPA) erfolgreich an der Entwicklung autonomer Landfahrzeuge gearbeitet worden. Es existieren Testfahrzeuge, die in der Lage sind, selbständig in einem Testgelände zu navigieren und Hindernisse zu erkennen und in ihrer Position zu bestimmen. Hierzu werden die Daten eines Sensors ausgewertet, der am Fahrzeug angebracht ist und die Szene vor dem Fahrzeug mittels eines Lasers abtastet (SPIE Vol. 727 Mobile Robots, 1986; S. 110 - 115; S. 261 - 266).

An der Universität der Bundeswehr München ist ein automatisch geführtes Fahrzeug entwickelt worden, das mit Geschwindigkeiten bis zu 100 km/h selbständig in einer autobahnähnlichen Umgebung, d. h. ohne Gegenverkehr und Kreuzungen, fährt. Die Algorithmen zur Fahrzeugführung basieren auf der Bestimmung der Kurvenkrümmung als charakterisierender Größe für den Fahrbahnverlauf. Die Kurvenkrümmung wird aus den Bildern verschiedener am Fahrzeug angebrachter Kameras, die die Gesamtszene vor dem Fahrzeug und einzelne Ausschnitte der Szene im Verlauf der Fahrbahnbegrenzung beobachten (SPIE Vol. 727 Mobile Robots, 1986; S. 161 - 168), ermittelt.

Der augenblickliche Stand der Technik erlaubt es, den Verlauf der Fahrbahn (Sollkurswinkel für das Fahrzeug, Krümmungsradius in Kurven) und die Position des Fahrzeuges auf der Fahrbahn sensorisch zu ermitteln und das Fahrzeug automatisch auf seinem Sollkurs zu führen. Darüber hinaus ist es möglich, Hindernisse im interessanten Verkehrsraum zu erkennen und aus der Positionsänderung die Geschwindigkeit und den Kurswinkel sowie die Beschleunigung und den Krümmungswinkel der Hindernisbahn zu bestimmen.

Die bekannten Verfahren zur automatischen Fahrzeugführung erlauben es bisher aber nicht, über die Hinderniserkennung hinaus in kritischen Verkehrssituationen zur Vermeidung von Kollisionen in Echtzeit kollisionsfreie Sollbahnen für die Fahrzeugführung vorzugeben und damit einem Hindernis auszuweichen und es zu passieren. In die bekannten Verfahren gehen bei Notfallmanövern auch nicht die physikalisch oder fahrzeugseitig bedingten Begrenzungen für Beschleunigungen und Bremsmanöver oder der begrenzte Raum für Ausweichmanöver quer zur Kursrichtung ein.

## 5. Aufgaben

Demgegenüber ist es Aufgabe der vorliegenden Erfindung, ausgehend von einem vorgegebenen Verkehrsraum die Bewegung eines Hindernisses sowie die Bewegung des eigenen Fahrzeuges so zu erfassen und extrapolieren, um eine Kollisionsgefahr zu erkennen und mittels einer in Echtzeit arbeitenden Vorrichtung zur Kollisionsvermeidung unter Berücksichtigung vorgegebener Beschränkungen Ausweichbahnen zu bestimmen.

## 6. Lösung

Die Aufgabe wird bezüglich des Verfahrens entsprechend den im Anspruch 1 und bezüglich der Vorrichtung entsprechend den im Anspruch 14 bzw. 22 angegebenen Merkmalen gelöst. Vorteilhafte Ausgestaltungen der Erfindung sind in den Unteransprüchen angegeben.

Der erzielte Vorteil der Erfindung besteht darin, daß die automatische Kollisionsvermeidung in der Lage ist, schnell, d.h. ohne Schrecksekunde, kritische Verkehrssituationen zu erkennen und bei Kollisionsgefahr ohne Verzögerung in Echtzeit situationsgerechte Ausweichmanöver einleitet. Damit ist es möglich, in Situationen, in denen der Führer eines Fahrzeuges nicht mehr rechtzeitig und richtig reagieren kann, durch automatische Fahrmanöver Unfälle zu vermeiden und die Sicherheit im Straßenverkehr zu erhöhen. Darüber hinaus werden bei der Einleitung von Kollisionsvermeidungsmanövern vorgegebene Beschränkungen, wie z. B. die begrenzte Fahrbahnbreite und die maximale Beschleunigung und Verzögerung des Fahrzeugs berücksichtigt.

Es wird nochmals angemerkt, daß die gesamte Schaltungsanordnnung in Digital- oder Analogtechnik ausgeführt sein kann. Ebenso möglich ist eine fest verdrahtete Vorrichtung, wobei aber genauso das gesamte Verfahren und die Vorrichtung unter Verwendung eines Mikroprozessors mit nur entsprechend einem Softwareprogramm aktuell hergestellten Rechen-, Steuer- bzw. Schaltzuständen eine entsprechende funktionelle Steuerung durchgeführt werden kann.

Die Erfindung wird in den Abschnitten 6.1 bis 6.6 beschrieben und an Ausführungsbeispielen dargestellt.

Zur weiteren Erläuterung sind die folgenden Figuren beigefügt:

Figur 1: Schematischer Aufbau eines automatisch führbaren Fahrzeugs mit Kollisionsvermeidungsvorrichtung

Figur 2: Gesamtstruktur der Fahrzeugführung

Figur 3: Einrichtung B zur Bestimmung der Fahrzeugsollbeschleunigung $a_F$

Figur 4: Block 1 zur Ermittlung der Kollisionsparameter bei geradenförmiger Bahnabschätzung

Figur 5: Block 1.1 (Bestandteil des Blocks 1)

Figur 6: Block 1.2 (Bestandteil des Blocks 1)

Figur 7: Block 1.3 (Bestandteil des Blocks 1)

Figur 8: Block 1.4 (Bestandteil des Blocks 1)

Figur 9:  Block 1.5 (Bestandteil des Blocks 1)

Figur 10:  Block 1.6 (Bestandteil des Blocks 1)

Figur 11:  Block 1.7 (Bestandteil des Blocks 1)

Figur 12:  Bahnabschätzung für die Kollisionsparameterbestimmung

Figur 13:  Einrichtung KP zur Kollisionsparameterbestimmung

Figur 14:  Einrichtung KE zur Kollisionserkennung

Figur 15:  Einrichtung S zur dynamischen Festlegung des Mindestabstandes

Figur 16:  Sonderfall der Kollisionsvermeidung durch Bremsmanöver

Figur 17:  Einrichtung KV1 zur Kollisionsvermeidung durch Brems- oder Beschleunigungsmanöver

Figur 18:  Block 1.8 (Bestandteil des Blocks KV1)

Figur 19:  Bestimmung der Positionsquerverschiebung für seitliche Ausweichmanöver

Figur 20:  Einrichtung KV2 zur Kollisionsvermeidung durch seitliche Ausweichmanöver

Figur 21:  Block 2.1 (Bestandteil der Einrichtung KV2)

Figur 22:  Block 2.2 (Bestandteil der Einrichtung KV2)

Block 23:  Block 2.3 (Bestandteil der Einrichtung KV2)

Figur 24:  Einrichtung R zur Rückführung der Sollbahn nach einem seitlichen Ausweichmanöver

Figur 25:  Einrichtung KV3 zur Kollisionsvermeidung durch Folgen

Figur 26:  Anwendungsbeispiel 1

Figur 27:  Einrichtung KV-AUS zur Sollgrößenfestlegung

Figur 28:  Einrichtung KV4 für eine vereinfachte Kollisionsvermeidung

Figur 29:  Einrichtung R4 zur Rückführung der Sollbahn nach einem Ausweichmanöver mittels der Einrichtung KV4

Figur 30:  Anwendungsbeispiel 2

Figur 31:  Einrichtung KV4-AUS zur Sollgrößenfestlegung

## 6.1 Kollisionsvermeidung für automatisch führbare Fahrzeuge

Die Aufgabe wird erfindungsgemäß durch ein Verfahren zur automatischen Kollisionsvermeidung in Echtzeit für automatisch führbare Fahrzeuge gelöst. Dies erfolgt dadurch, daß aktuelle Daten über die Sollposition, den Sollkurswinkel, die Sollgeschwindigkeit, die Sollbeschleunigung und den Krümmungsradius der Sollbahn des Fahrzeugs sowie über die Position, den Kurswinkel, die Geschwindigkeit, die Beschleunigung und den Krümmungsradius der Bahn eines Hindernisses durch am Fahrzeug angebrachte Sensoren ermittelt werden und/oder ganz oder teilweise durch eine externe Einrichtung mittels Datenübertragung zum Fahrzeug übermittelt werden und/oder ganz oder teilweise aus der zeitlichen Änderung der Fahrzeugsollposition und der Hindernisposition bestimmt werden. Ferner ist vorgesehen, daß die Kollisionsvermeidungsvorrichtung anhand der vorgegebenen Daten die Bahn des Hindernisses und die Sollbahn des Fahrzeugs vorausschauend abschätzt, den Zeitpunkt der engsten Annäherung zwischen dem Fahrzeug und dem Hindernis sowie mindestens den Abstand der engsten Annäherung, gegebenenfalls zusätzlich den Winkel der engsten Annäherung, auf den abgeschätzten Bahnen bestimmt, anhand der noch verbleibenden Zeit bis zur engsten Annäherung und des Abstandes der engsten Annäherung eine eventuelle Kollisionsgefahr feststellt und gegebenenfalls die Sollposition und den Sollkurswinkel oder die Sollgeschwindigkeit und die Sollbeschleunigung dahingehend verändert, daß das Fahrzeug das Hindernis unter Einhaltung eines Mindestabstandes passiert oder ihm folgt. Schließlich wirken die ursprünglichen oder die im Fall einer Kollisionsgefahr veränderten Sollbahndaten durch eine Einrichtung zur Fahrzeugregelung auf Stellglieder für die Lenkung und/oder den Antrieb und die Bremsanlage des Fahrzeugs.

### 6.1.1 Aufbau und Gesamtstruktur der Fahrzeugführung

Der erfindungsgemäßen Lösung der Aufgabenstellung liegt ein hierarchisch strukturiertes Konzept der Fahrzeugführung zugrunde.

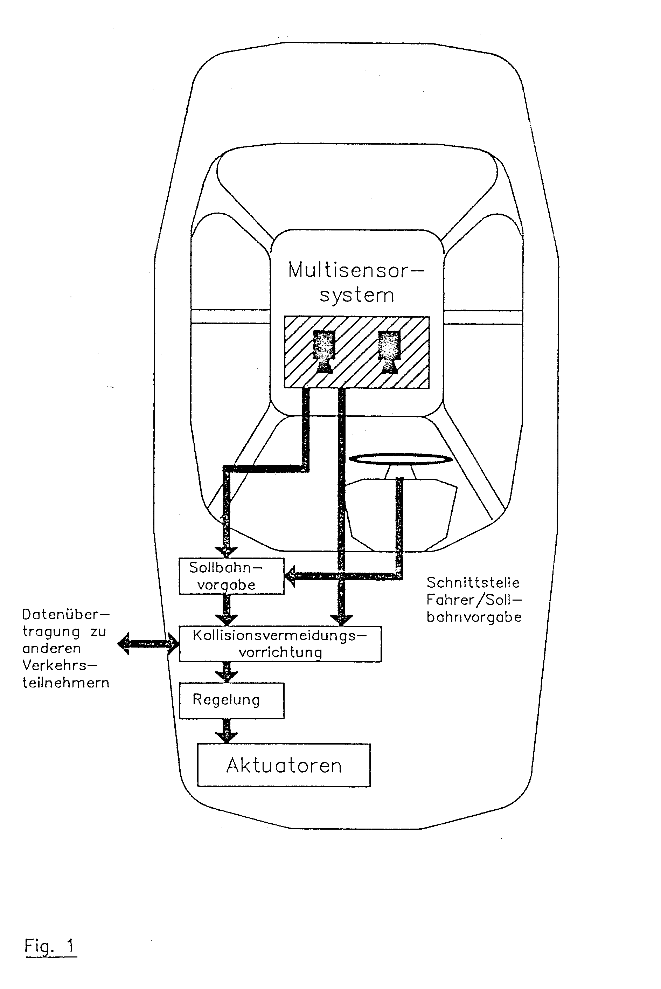

Ein am Fahrzeug angebrachtes Multisensorsystem beobachtet den Verkehrsraum vor dem Fahrzeug (Fig. 1). Aus den Sensordaten und vom Fahrer vorgegebenen Daten, z. B. über eine Sollgeschwindigkeit oder einen Sollkurswinkel, werden Sollgrößen für die Position $(x_F, y_F)$, die Geschwindigkeit $v_F$ und den Kurswinkel $\nu_F$ des Fahrzeuges sowie der Krümmungsradius des Fahrbahnverlaufes $r_F$ bestimmt. Mittels Datenübertragung können diese Daten auch an andere Verkehrsteilnehmer weitergegeben werden.

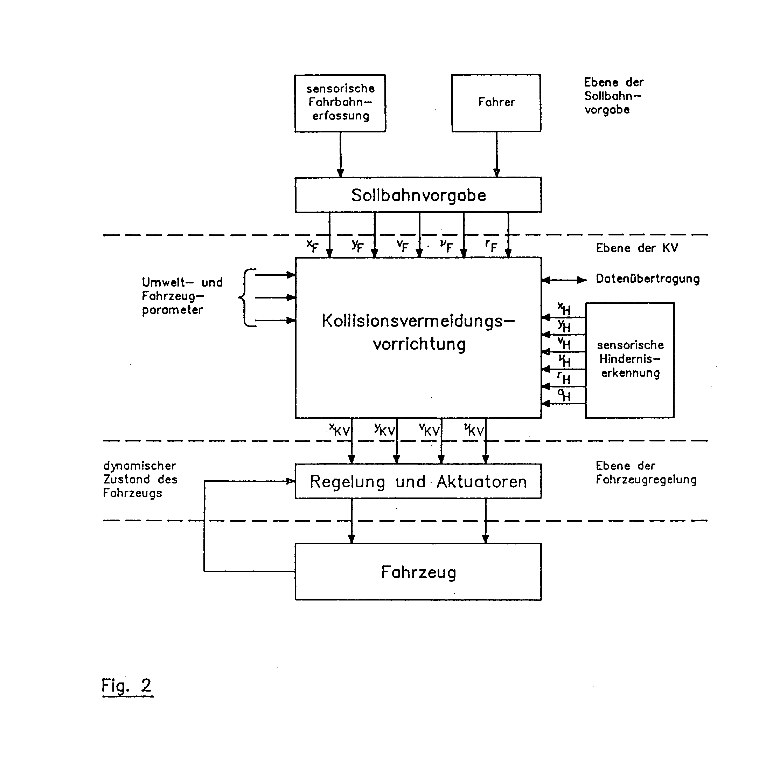

Die Sollwertvorgabe bildet die obere Ebene der hierarchischen Struktur der Fahrzeugführung (Fig. 2). Die Ebene der Sollwertvorgabe übergibt die Sollgrößen $x_F$, $y_F$, $v_F$, $\nu_F$ und $r_F$ an die darunterliegende Ebene der Kollisionsvermeidung. Aufgabe der Ebene der Kollisionsvermeidung ist es, vorausschauend anhand

5

noch näher zu erläuternder Verfahren die vorgegebenen Sollwerte daraufhin zu überprüfen, ob Kollisionsgefahr mit Hindernissen oder anderen Verkehrsteilnehmern besteht und nötigenfalls neue Sollwerte für ein Fahrmanöver zur Vermeidung einer Kollision zu bestimmen. Hierbei werden andere Verkehrsteilnehmer im Sinne der Kollisionsvermeidungsstrategie auch als Hindernisse betrachtet.

Das bordeigene Multisensorsystem erkennt Hindernisse und andere Verkehrsteilnehmer in der Umgebung des Fahrzeugs.Die Position ($x_H$, $y_H$) eines Hindernisses, dessen Geschwindigkeit $v_H$, Kurswinkel $\nu_H$, Beschleunigung $a_H$ und Bahnkrümmungsradius $r_H$ werden ermittelt oder aus der zeitlichen Positionsänderung bestimmt und der Kollisionsvermeidungsvorrichtung übergeben. Die Krümmungsradien der Hindernisbahn und der Fahrzeugsollbahn werden in Linkskurven positiv und in Rechtskurven negativ gerechnet.

Durch Datenübertragung zwischen verschiedenen Verkehrsteilnehmern und möglichen zentralen Einrichtungen können ferner sensorisch nicht oder nur ungenau erfaßbare Daten ausgetauscht. Wenn die Kollisionsvermeidungsvorrichtung anhand der Daten über das eigene Fahrzeug und über andere Verkehrsteilnehmer bzw. Hindernisse keine Kollisionsgefahr feststellt, werden die Sollwerte der Sollbahnvorgabe direkt auf die Ebene der Fahrzeugregelung durchgeschaltet. Im Falle einer Kollisionsgefahr werden die neu berechneten kollisionsfreien Sollwerte weitergegeben.

Auf der Ebene der Fahrzeugregelung werden mit Hilfe geeigneter Regelungsverfahren die Stellgrößen (Beschleunigungs- bzw. Bremskräfte, Lenkwinkel) bestimmt, die auf die Fahrzeugdynamik wirken. Insoweit wird auch auf die vom gleichen Anmelder am gleichen Tag eingereichte Patentanmeldung mit dem Titel "Verfahren und Vorrichtung zur automatischen Führung der Längs- und Querbewegungen von Fahrzeugen" verwiesen, deren Offenbarungsgehalt im vollem Umfange und ohne jede Beschränkung ausdrücklich zum Inhalt dieser Anmeldung gemacht wird.

## 6.1.2 Verfahren und Einrichtung KP zur Kollisionsparameterbestimmung

Das erfindungsgemäße Verfahren zur Kollisionsvermeidung beinhaltet eine Abschätzung des zu erwartenden künftigen Verlaufes der Sollbahn des Fahrzeuges und der Bahn des Hindernisses anhand aktueller Daten über die Sollbahn des Fahrzeuges und die Bahn des Hindernisses. Aus der Abschätzung der Bahnverläufe ermittelt eine Vorrichtung zur Kollisionsparameterbestimmung die drei Kollisionsparameter Kollisionsabstand $r_K$, Kollisionswinkel $\phi_K$ und Kollisionszeit $t_K$. Die Kollisionszeit $t_K$ gibt die noch verbleibende Zeitspanne $t_K$ bis zur erwarteten engsten Annäherung des Fahrzeuges und des Hindernisses an. Zum Zeitpunkt der engsten Annäherung befinden sich das Fahrzeug und das Hindernis im Kollisionsabstand $r_K$ und im Kollisionswinkel $\phi_K$ zueinander. Der Kollisionswinkel $\phi_K$ bezieht sich auf ein ortsfestes Koordinatensystem.

Mit Hilfe der Kollisionsparameter $t_K$ und $r_K$ wird eine Kollisionsgefahr erkannt (Abschnitt 6.1.3). Darüber hinaus gehen die Kollisionsparameter auch in die Sollwertbestimmung für Kollisionsvermeidungsmanöver ein.

Die Kollisionsparameter werden während der Fahrt ständig auf Basis der aktuellen Sensordaten über die Sollbahn des Fahrzeuges und die Bahn des Hindernisses nach dem im folgenden beschriebenen Verfahren neu bestimmt.

Zur Erläuterung des Verfahrens wird zunächst angenommen, daß die Kurswinkel bis zur engsten Annäherung konstant sind. Die zukünftigen Verläufe der Fahrzeugsollbahn und der Hindernisbahn werden geradenförmig abgeschätzt. Die Kollisionsvermeidungsvorrichtung erhält aus der Ebene der Sollbahnvorgabe die Sollwerte für die Position ($x_F$, $y_F$), die Geschwindigkeit $v_F$ und den Kurswinkel $\nu_F$ des Fahrzeuges sowie durch die sensorische Hinderniserkennung die Position ($x_H$, $y_H$), die Geschwindigkeit $v_H$, die Beschleunigung $a_H$ und den Kurswinkel $\nu_H$ des Hindernisses (Fig. 2). Die Krümmungsradien $r_F$ und $r_H$ bleiben bei den geradenförmigen Bahnabschätzungen unberücksichtigt. Alle Eingangssignale der Kollisionsvermeidungseinrichtung werden in zeitlichen Abständen $\Delta t$ durch Sample & Hold-Glieder abgetastet und für die weitere Signalverarbeitung über einen Zeitschritt $\Delta t$ konstant gehalten.

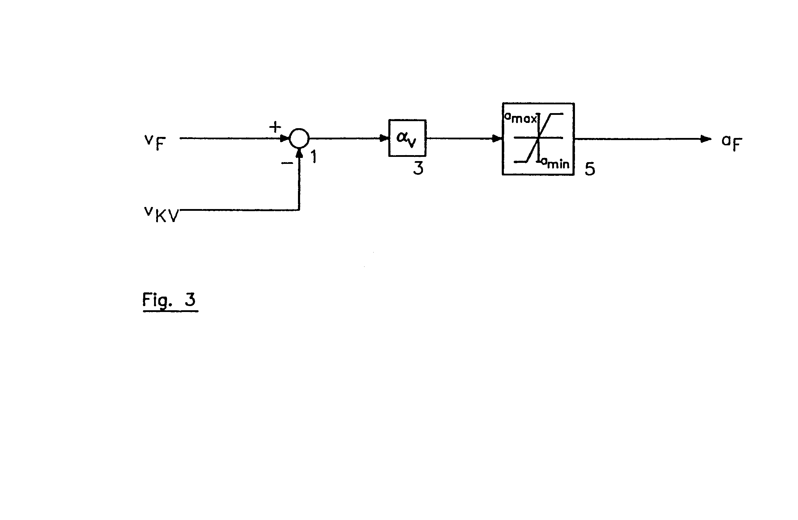

Für die Bestimmung der Kollisionsparameter wird zusätzlich die Sollbeschleunigung $a_F$ benötigt, die mit Hilfe der in Fig. 3 dargestellten Vorrichtung B ermittelt wird oder auch als zusätzliche Eingangsgröße aus der Ebene der Sollbahnvorgabe vorgegeben wird. Eingangsgrößen der Vorrichtung B sind die Sollgeschwindigkeit $v_F$ aus der Ebene der Sollwertvorgabe und die Sollgeschwindigkeit $v_{KV}$, die als Ausgangsgröße der Kollisionsvermeidung an die Ebene der Regelung weitergegeben wird. $v_{KV}$ wird vom Ausgang der Kollisionsvermeidungseinrichtung auf den Eingang der Vorrichtung B zurückgekoppelt.

Die im Summierer 1 gebildete Differenz $v_F$ - $v_{KV}$ wird im Multiplizierer 3 mit dem Faktor $\alpha_V$ multipliziert und im Sättigungsglied 5 auf den Bereich [$a_{min}$, $a_{max}$] beschränkt.

$a_{max}$ und $a_{min}$ sind frei vorgebbare Höchstwerte für die Fahrzeugsollbeschleunigung bzw. -verzögerung.

Mit den Größen $x_F$, $y_F$, $\nu_F$, $v_{KV}$, $a_F$, $x_H$, $y_H$, $\nu_H$, $v_H$, $a_H$ zum Zeitpunkt $t_0$ kann vorausschauend für $t > t_0$ der weitere Bahnverlauf $\tilde{x}_F(t)$, $\tilde{y}_F(t)$ des Fahrzeuges und $\tilde{x}_H(t)$, $\tilde{y}_H(t)$ des Hindernisses in kartesischen Koordinaten abgeschätzt werden. Im folgenden wird zuerst das Verfahren erläutert, das der Bestimmung der Kollisionsparameter $t_K$, $r_K$ und $\phi_K$ zugrunde liegt und dann die Vorrichtung beschrieben. Anschließend werden das Verfahren und die Vorrichtung für nicht geradenförmige Bahnabschätzungen erweitert.

Wenn man, ohne die Allgemeinheit der Betrachtungen einzuschränken, $t_0$ gleich Null setzt, gelten die Abschätzungen

$$\tilde{x}_F(t) = x_F + \left(v_{KV}t + \frac{1}{2} a_F t^2\right) \cos \nu_F$$

$$\tilde{y}_F(t) = y_F + \left(v_{KV}t + \frac{1}{2} a_F t^2\right) \sin \nu_F$$

$$\tilde{x}_H(t) = x_H + \left(v_H t + \frac{1}{2} a_H t^2\right) \cos \nu_H$$

$$\tilde{y}_H(t) = y_H + \left(v_H t + \frac{1}{2} a_H t^2\right) \sin \nu_H \ .$$

Für die zeitliche Abstandsänderung $r_x$, $r_y$ in kartesischen Koordinaten zwischen Fahrzeug und Hindernis ergibt sich

$$r_x(t) = \tilde{x}_F(t) - \tilde{x}_H(t)$$

$$r_y(t) = \tilde{y}_F(t) - \tilde{y}_H(t) \ .$$

Mit den Abkürzungen

$x = x_F - x_H$
$y = y_F - y_H$
$v_x = v_{KV} \cos \nu_F - v_H \cos \nu_H$
$v_y = v_{KV} \sin \nu_F - v_H \sin \nu_H$
$a_x = a_F \cos \nu_F - a_H \cos \nu_H$
$a_y = a_F \sin \nu_F - a_H \sin \nu_H$

kann man für $r_x(t)$ und $r_y(t)$ auch schreiben:

$r_x(t) = x + v_x t + \frac{1}{2} a_x t^2$
$r_y(t) = y + v_y t + \frac{1}{2} a_y t^2 \ .$

Der Abstand $r(t)$ zwischen Fahrzeug und Hindernis berechnet sich zu

$r(t) = \sqrt{r_x(t)^2 + r_y(t)^2} \ .$

Als Kollisionszeit $t_K$ wird von der Kollisionsvermeidungseinrichtung die noch verbleibende Zeit bis zum nächsten zukünftigen Minimum der Funktion $r(t)$ bestimmt. Der Zeitpunkt $t_K$ ergibt sich aus der zeitlichen Ableitung der Funktion $r(t)$ durch die Forderung:

$$\frac{d}{dt} r(t) \Bigg|_{t = t_K} \overset{!}{=} 0$$

bzw.

$$\left[x + v_x t_K + \frac{1}{2} a_x t_K^2\right]\left[v_x + a_x t_K\right] + \left[y + v_y t_K + \frac{1}{2} a_y t_K^2\right]\left[v_y + a_y t_K\right] \overset{!}{=} 0$$

Es müssen die Nullstellen der kubischen Gleichung

$$t_K^3 + c_2 t_K^2 + c_1 t_K + c_0 = 0$$

bestimmt werden.

Für die Koeffizienten $c_2$, $c_1$ und $c_0$ gilt:

$$c_2 = 3 \frac{a_x v_x + a_y v_y}{a_x^2 + a_y^2}$$

$$c_1 = 2 \frac{v_x^2 + x a_x + v_y^2 + y a_y}{a_x^2 + a_y^2}$$

$$c_0 = 2 \frac{x v_x + y v_y}{a_x^2 + a_y^2}$$

Dies geschieht in einfacher Weise mit Hilfe der in der Literatur bekannten Cardanischen Lösungsformel (s. z.B. Bronstein/Semendjajew: Taschenbuch der Mathematik 19. Auflage, S. 183). Man erhält eine reelle Lösung $t_{K0}$ oder drei reelle Lösungen $t_{K1}$, $t_{K2}$ und $t_{K3}$ der kubischen Gleichung. Damit die Funktion $r(t)$ ein Minimum in einer der drei Lösungen hat, muß weiterhin die Forderung

$$\frac{d}{dt^2} r(t) \Bigg|_{t = t_K} \overset{!}{>} 0$$

bzw.

$$3 t_K^2 + 2 c_2 t_K + c_1 \overset{!}{>} 0$$

erfüllt sein. Bei der Existenz von drei reellen Lösungen der kubischen Gleichung erhält die Kollisionsvermeidungseinrichtung durch Überprüfung dieser Forderung zwei Minima des Abstands r(t), von denen das zeitlich nächstliegende zükünftige Minimum die relevante Kollisionszeit $t_K$ bis zur engsten Annäherung zwischen Fahrzeug und Hindernis angibt.

Zum Zeitpunkt $t_K$ befinden sich das Fahrzeug und das Hindernis in x- und in y-Koordinaten in den Abständen

$$r_{Kx} = x + v_x t_K + \frac{1}{2} a_x t_K^2$$

$$r_{Ky} = y + v_y t_K + \frac{1}{2} a_y t_K^2$$

zueinander.

Die Kollisionsvermeidungseinrichtung ermittelt den Kollisionsabstand $r_K$ und den Kollisionswinkel $\phi_K$ als

$$r_K = \sqrt{r_{Kx}^2 + r_{Ky}^2} \ ,$$

$$\varphi_K = \arctan \frac{r_{Ky}}{r_{Kx}} \ .$$

Im Falle einer unbeschleunigten relativen Bewegung zwischen dem Hindernis und dem Fahrzeug ($a_x = a_y = 0$) vereinfacht sich die kubische Gleichung zu einer linearen Gleichung und die Kollisionsvermeidungseinrichtung bestimmt die Kollisionszeit $t_K = t_{K4}$ als

$$t_{K4} = - \frac{x v_x + y v_y}{v_x^2 + v_y^2} \ .$$

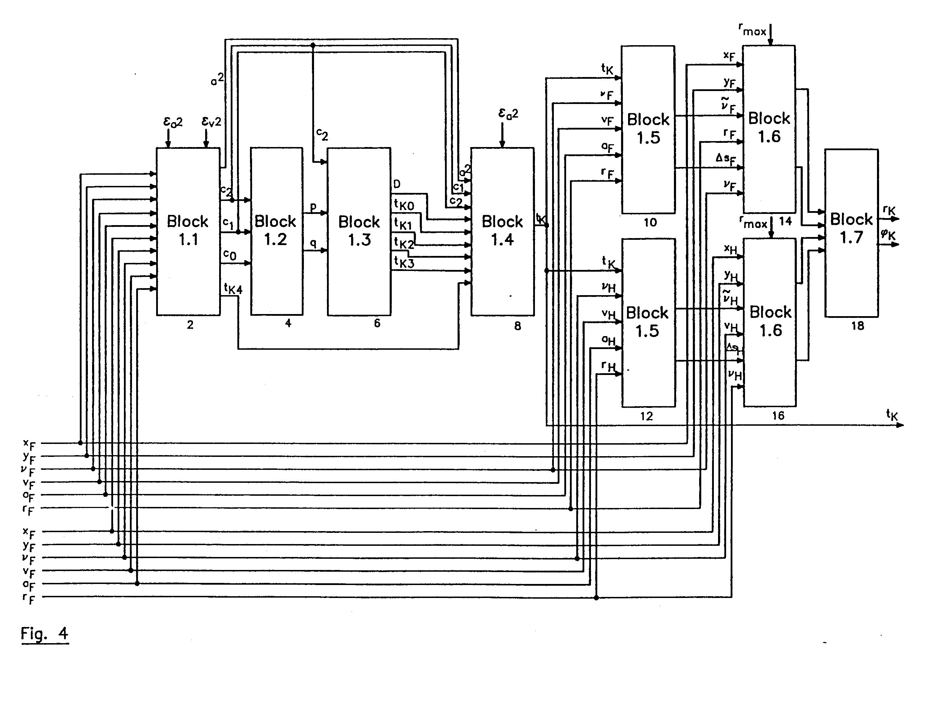

Die mit Block 1 bezeichnete Einrichtung in Fig. 4 bestimmt nach dem oben beschriebenen Verfahren die Kollisionsparameter $t_K$, $r_K$ und $\phi_K$ mit Hilfe geradenförmiger Bahnabschätzungen.

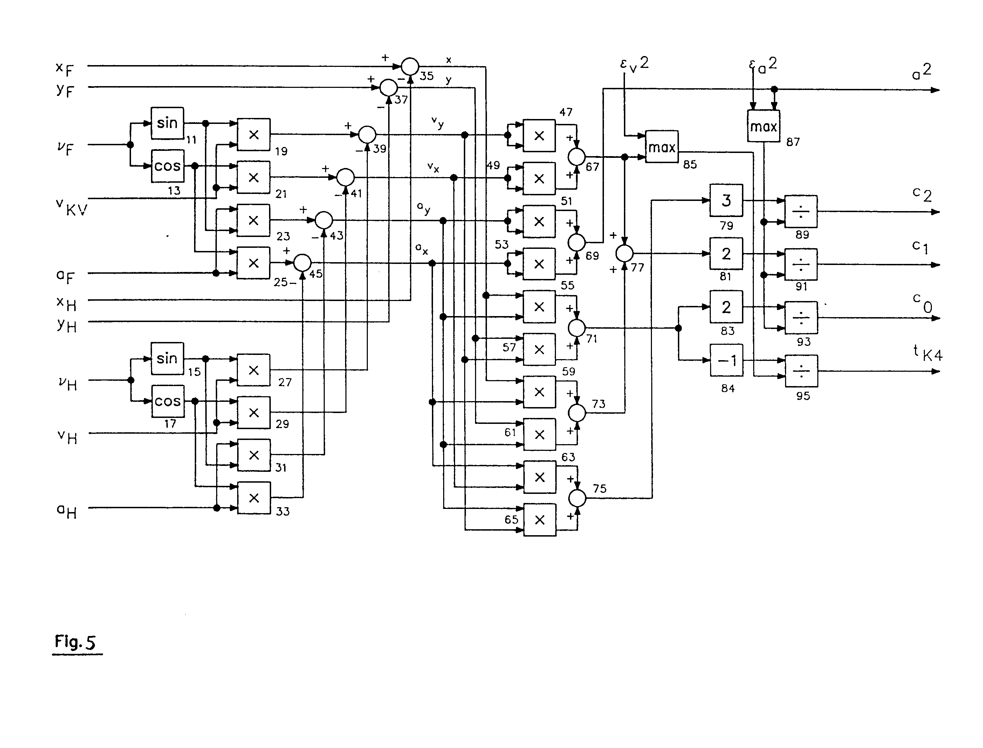

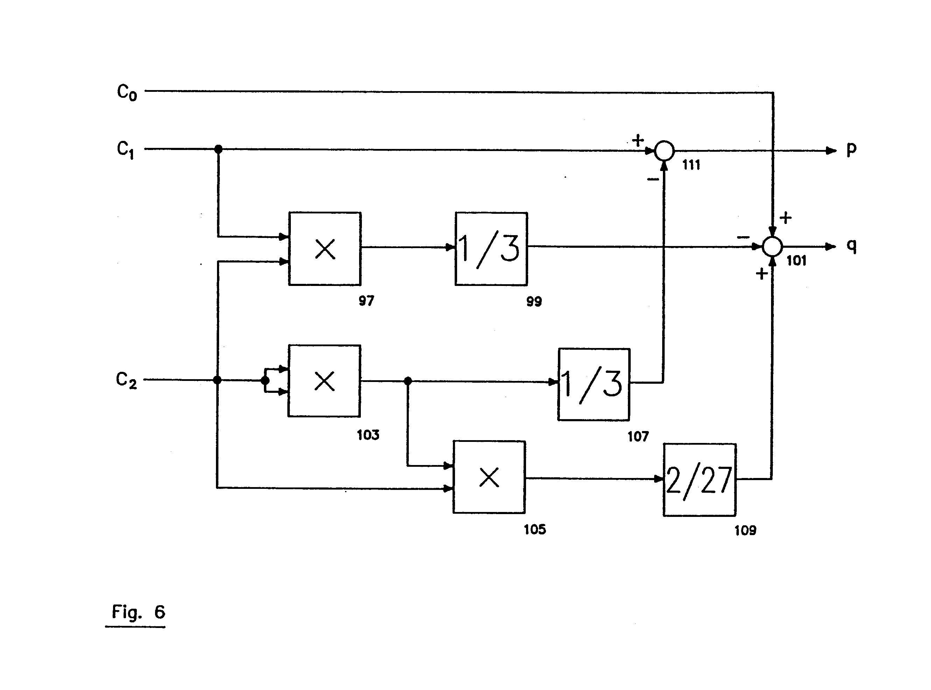

Block 1 ist unterteilt in die Unterblöcke 1.1 bis 1.7 (Übertragungsglieder 2, 4, 6, 8, 10, 12, 14, 16 und 18), die in den Figuren 5 bis 11 noch einmal einzeln dargestellt sind.

Block 1.1 (Fig. 5) bestimmt aus den Eingangssignalen $x_F$, $y_F$, $\nu_F$, $v_{KV}$, $a_F$, $x_H$, $y_H$, $\nu_H$, $v_H$ und $a_H$ die Koeffizienten $c_2$, $c_1$ und $c_0$ der kubischen Gleichung. Außerdem ermittelt Block 1.1 die Kollisionszeit $t_{K4}$, die sich im Fall

$$a_x^2 + a_y^2 \approx 0$$

9

durch Lösung der vereinfachten linearen Gleichung ergibt. $t_{K4}$ und das Beschleunigungsquadrat

$$a^2 = a_x^2 + a_y^2$$

sind neben $c_2$, $c_1$ und $c_0$ Ausgangsgrößen von Block 1.1.

Nach der Bestimmung der Sinuswerte (Sinusglied 11 und 15) und der Cosinuswerte (Cosinusglied 13 und 17) der Kurswinkel $\nu_F$ und $\nu_H$ und der Zerlegung der Geschwindigkeiten $v_{KV}$ (Multiplizierer 21 und 19), $v_H$ (Multiplizierer 29 und 27) und der Beschleunigungen $a_F$ (Multiplizierer 25 und 23), $a_H$ (Multiplizierer 33 und 31) in ihre Anteile in x- und y-Richtung ergeben sich die Relativposition x, y (Summierer 35 und 37), die Relativgeschwindigkeiten $v_x$, $v_y$ (Summierer 41 und 39) und die Relativbeschleunigungen $a_x$, $a_y$ - (Summierer 45 und 43). Als nächstes werden die Größen $v_y^2$ (Multiplizierer 47), $v_x^2$ (Multiplizierer 49), $a_y^2$ (Multiplizierer 51), $a_x^2$ (Multiplizierer 51), $a_x^2$ (Multiplizierer 53), $xv_x$ (Multiplizierer 55), $yv_y$ (Multiplizierer 57), $xa_x$ (Multiplizierer 59), $ya_y$ (Multiplizierer 61), $a_xv_x$ (Multiplizierer 63) und $a_yv_y$ (Multiplizierer 65) bestimmt. Der Summierer 69 addiert $a_x^2$ und $a_y^2$ zur Ausgangsgröße $a^2$. Die Größen $v_x^2$ und $v_y^2$ werden im Summierer 67 addiert. Um Divisionen durch Nullen in den Dividierern 89, 91, 93 oder 95 Zu vermeiden, werden die Ausgangsgrößen der Summierer 67 und 69 in den Maximumgliedern 85 und 87 beim Unterschreiten der Werte $\epsilon_{v2}$ oder $\epsilon_{a2}$ durch $\epsilon_{v2}$ bzw. $\epsilon_{a2}$ ersetzt.

Der Dividierer 89 bestimmt $c_2$, indem er die Summe der Signale $a_x v_x$ und $a_y v_y$ (Summierer 75), die zuvor im Proportionalglied 79 mit dem Faktor 3 multipliziert wird, durch das Ausgangssignal des Maximumgliedes 87 dividiert. Der Dividierer 91 bestimmt die Ausgangsgröße $c_1$ des Blocks 1.1, indem er die Summe der Größe $v_x^2$, $v_y^2$, $xa_x$ und $ya_y$ (Summierer 67, 73 und 77), die im Proportionalglied 81 mit dem Faktor 2 multipliziert wird, durch das Ausgangssignal des Maximumgliedes 87 dividiert. Die Größen $xv_x$ und $yv_y$ werden im Summierer 71 addiert, im Proportionalglied 83 mit dem Faktor 2 multipliziert und im Dividierer 93 durch das Ausgangssignal des Maximumgliedes 87 dividiert. Damit liegt die Größe $c_0$ als Ausgangssignal des Dividierers 93 vor. Der Dividierer 95 bestimmt die Ausgangsgröße $t_{K4}$, indem er das Ausgangssignal des Summierers 71, das im Proportionalglied 84 invertiert wird, durch das Ausgangssignal des Maximumgliedes 85 dividiert.

Der Block 1.2 dient dazu, die Koeffizienten $c_2$, $c_1$ und $c_0$, die Ausgangsgrößen des Blocks 1.1 sind, auf die Koeffizienten der reduzierten kubischen Gleichung (s. Bronstein/Semendjajew: Taschenbuch der Mathematik, 19. Auflage, S. 183) zu transformieren. Hierzu wird die Größe $c_2$ im Multiplizierer 97 mit $c_1$ multipliziert und das Ergebnis im Proportionalglied 99 mit dem Faktor 1/3 gewichtet. Im Multiplizierer 103 wird $c_2$ quadriert und das Quadrat im Multiplizierer 105 noch einmal mit $c_2$ multipliziert. Die Ausgangssignale der Multiplizierer 103 und 105 werden durch die Proportionalglieder 107 bzw. 109 mit den Faktoren 1/3 bzw. 2/27 multipliziert. Die Ausgangsgröße p ergibt sich durch Subtraktion (Summierer 111) des Ausgangssignals des Proportionalgliedes 107 von der Eingangsgröße $c_1$. Der Summierer 101 bildet die Ausgangsgröße q durch Addition der Eingangsgröße $c_0$ mit dem Ausgangssignal des Proportionalgliedes 109 und Subtraktion des Ausgangssignals des Proportionalgliedes 99.

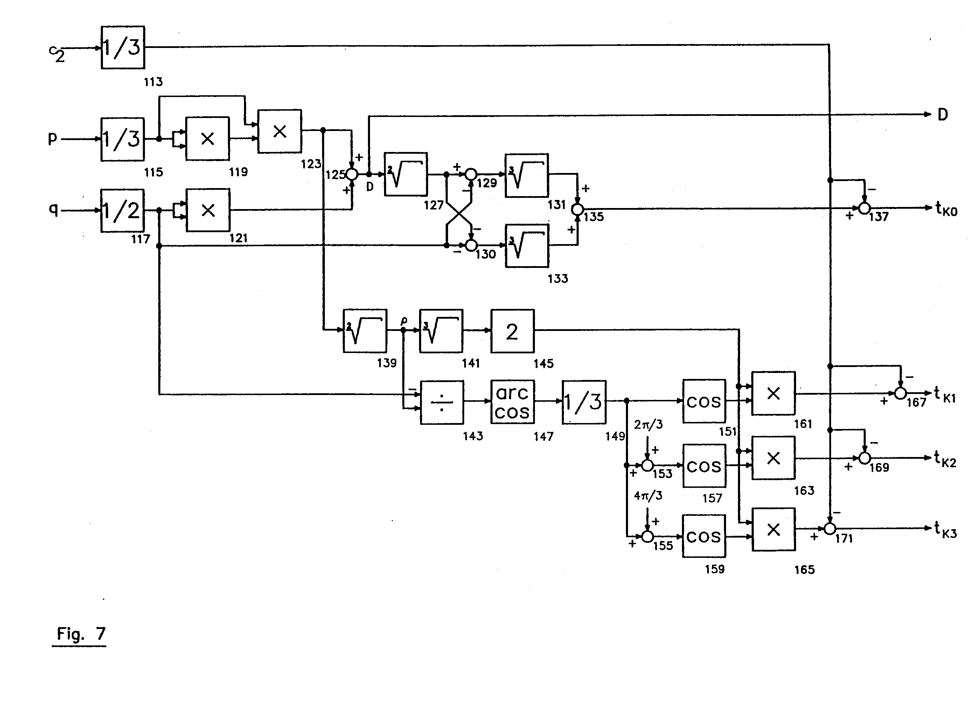

Nachdem im Block 1.1 die Koeffizienten $c_2$, $c_1$ und $c_0$ des kubischen Polynoms bestimmt wurden und Block 1.2 diese auf die Koeffizienten p und q eines reduzierten Polynoms transformiert hat, ermittelt Block 1.3 (Fig. 7) nun die Nullstellen des reduzierten Polynoms und transformiert sie zurück auf das ursprüngliche Polynom.

Hierzu werden als erstes aus den Eingangssignalen p und q, die die Größen D und $\rho$ bestimmt. $\rho$ ist das Ausgangssignal des Wurzelgliedes 139. Das Eingangssignal des Wurzelgliedes 139 wird durch Multiplikation von p mit dem Faktor 1/3 (Proportionalglied 115), anschließendes Quadrieren (Multiplizierer 119) und nochmalige Multiplikation mit p/3 (Multiplizierer 123) bestimmt. Die Größe D ist das Ausgangssignal des Summierers 125, der zum Ausgangssignal des Multiplizierers 123 das Quadrat (Multiplizierer 121) der mit 1/2 gewichteten Eingangsgröße q addiert (Proportionalglied 117). Die Größe D ist Ausgangssignal des Blocks 1.3. Wenn D größer ist als Null, hat die kubische Gleichung nur eine reelle Lösung $t_{K0}$ - (Summierer 137). Andernfalls gibt es drei reelle Lösungen $t_{K1}$, $t_{K2}$ und $t_{K3}$ (Summierer 167, 169 und 171).

Zur Bestimmung von $t_{K0}$ wird die Quadratwurzel aus D berechnet (Wurzelglied 127). Vom positiven Wert (Summierer 129) und vom negativen Wert der Quadratwurzel (Summierer 130) wird das Ausgangssignal q/2 des Proportionalgliedes 117 subtrahiert. Aus den Ausgangssignalen der Summierer 130 und 129 wird in den Wurzelgliedern 131 und 133 die dritte Wurzel gezogen und anschließend werden beide Signale im Summierer 135 addiert. Das Ausgangssignal des Summierers 135 ist die reelle Lösung des reduzierten Polynoms im Falle D größer Null. Durch Subtraktion von $c_2/3$ (Proportionalglied 113) im Summierer 137 ergibt sich die entsprechende Lösung $t_{K0}$ des ursprünglichen Polynoms.

Zur Bestimmung der Lösungen $t_{K1}$, $t_{K2}$ und $t_{K3}$ im Fall D kleiner Null wird die Ausgangsgröße q/2 des Proportionalgliedes 117 mit negativem Vorzeichen im Dividierer 143 durch die Größe $\rho$ (Ausgangsgröße des Wurzelgliedes 139) dividiert. Vom Ergebnis der Division wird im Arcuscosinusglied 147 der Arcuscosinus berechnet und dieser anschließend im Proportionalglied 149 mit dem Faktor 1/3 multipliziert. Das Ausgangssignal des Proportionalgliedes 149 geht auf die Summierer 153 und 155, wo die Werte $2\pi/3$ bzw. $4\pi/3$ aufaddiert werden. Auf die Cosinusglieder 151, 157 und 159 werden die Ausgangssignale des Proportionalgliedes 149 bzw. der Summierer 153 und 155 geschaltet. Die Lösungen der reduzierten Gleichung ergeben sich als Ausgangssignale der Multiplizierer 161, 163 und 165, die die Cosinussignale der Cosinusglieder 151, 157 und 159 mit dem Ausgangssignal des Proportionalgliedes 145 multiplizieren. Das Proportionalglied 145 multipliziert die im Wurzelglied 141 gebildete dritte Wurzel der Große $\rho$ - (Ausgangssignal des Wurzelgliedes 139) mit dem Faktor 2. Durch Subtraktion des Ausgangssignales des Proportionalgliedes 113 von den Ausgangssignalen der Multiplizierer 161, 163 und 165 in den Summierer 167, 169 und 171 werden die Ausgangsgrößen $t_{K1}$, $t_{K2}$ und $t_{K3}$ des Blocks 1.3 gebildet.

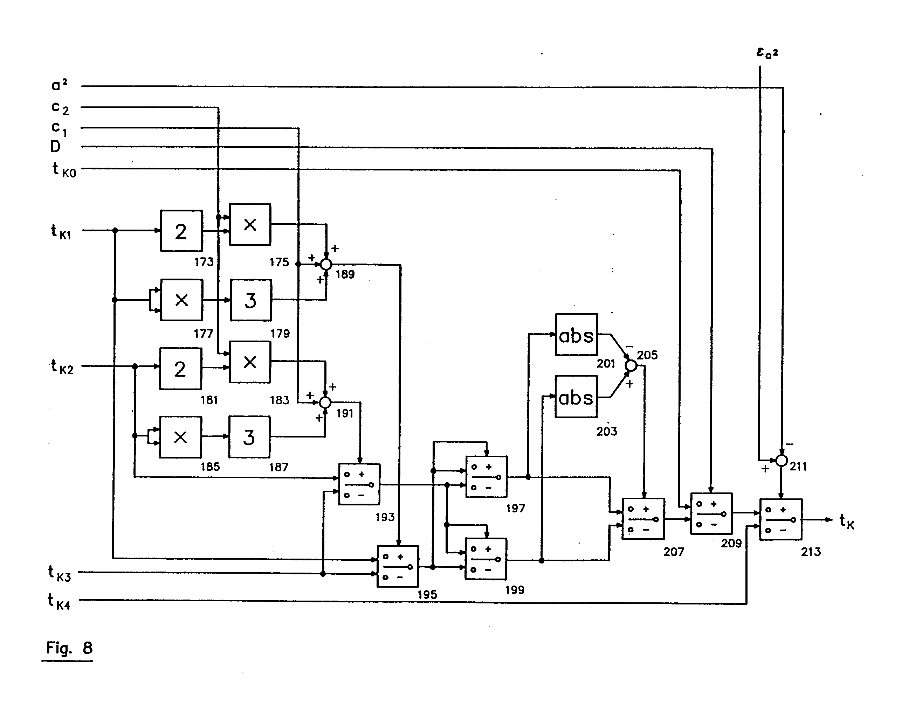

Die Ausgangssignale $a^2$, $c_2$, $c_1$ und $t_{K4}$ des Blocks 1.1 sowie die Ausgangssignale D, $t_{K0}$, $t_{K1}$, $t_{K2}$ und $t_{K3}$ des Blocks 1.3 sind Eingangssignale des Blocks 1.4 (Fig. 8), der die Kollisionszeit $t_K$ bestimmt. Die im folgenden häufig verwendeten Schaltglieder (z.B. Schaltglied 213) schalten bei positivem Signal am Steuereingang das mit "+" gekennzeichnete Eingangssignal durch. Andernfalls wird das mit "-" gekennzeichnete Eingangssignal weitergeschaltet. Wenn das am Steuereingang des Schaltgliedes 213 anliegende Ausgangssignal des Summierers 211, der den Parameter $\epsilon_{a2}$ vom Eingangssignal $a^2$ subtrahiert negativ ist, d.h. wenn das Eingangssignal $a^2$ des Blocks 1.4 kleiner ist als der frei einstellbare Parameter $\epsilon_{a2}$, wird das Eingangssignal $t_{K4}$ des Blocks 1.4 direkt als Ausgangssignal $t_K$ durchgeschaltet. Als Parameter $\epsilon_{a2}$ wird der untere Grenzwert eingestellt, ab dem $a^2$ als gleich Null gilt. Wenn $a^2$ größer ist als $\epsilon_{a2}$ wird das Ausgangssignal des Schaltgliedes 209 weitergeschaltet. Als Steuersignal des Schaltgliedes 209 dient das Eingangssignal D, so daß bei positivem D das Eingangssignal $t_{K0}$ des Blocks 1.4 auf den positiven Eingang des Schaltgliedes 213 durchgeschaltet wird. Bei negativem D schaltet das Schaltglied 209 das Ausgangssignal des Schaltgliedes 207 durch. Das Ausgangssignal des Schaltgliedes 207 gibt bei der Existenz von drei reellen Nullstellen des kubischen Polynoms (negatives D) die relevante Kollisionszeit $t_K$ an.

Um diese zu ermitteln wird das Eingangssignal $t_{K1}$ im Proportionalglied 173 mit dem Faktor 2 gewichtet und dann im Multiplizierer 175 mit der Eingangsgröße $c_2$ multipliziert. Im Summierer 189 wird das Ausgangssignal des Multiplizierers 175 zur Eingangsgröße $c_1$ und zur Ausgangsgröße des Proportionalgliedes 179 addiert, welche sich ergibt aus dem Quadrat der Eingangsgröße $t_{K1}$ (Multiplizierer 177) multipliziert mit dem Faktor 3 (Proportionalglied 179). Analog wird das Eingangssignal $t_{K2}$ im Proportionalglied 181 mit dem Faktor 2 gewichtet und dann im Multiplizierer 183 mit der Eingangsgröße $c_2$ multipliziert. Im Summierer 191 wird das Ausgangssignal des Multiplizierers 183 zur Eingangsgröße $c_1$ und zur Ausgangsgröße des Proportionalgliedes 187 addiert, welche sich ergibt aus dem Quadrat der Eingangsgröße $t_{K2}$ - (Multiplizierer 185) multipliziert mit dem Faktor 3 (Proportionalglied 187).

Die Ausgangssignale der Summierer 191 und 189 sind die Steuersignale der Schaltglieder 193 und 195. Bei positivem Ausgangssignal des Summierers 191 schaltet das Schaltglied 193 die Eingangsgröße $t_{K2}$ durch. Ansonsten wird die Eingangsgröße $t_{K3}$ durchgeschaltet. Bei positivem Ausgangssignal des Summierers 189 schaltet das Schaltglied 195 die Eingangsgröße $t_{K1}$ durch. Ansonsten wird die Eingangsgröße $t_{K3}$ durchgeschaltet. Die beiden Ausgangssignale der Schaltglieder 193 und 195 geben die Zeitpunkte der Abstandsminima an.

Das Ausgangssignal des Schaltgliedes 193 geht auf den Steuereingang und den positiven Eingang des Schaltgliedes 199 sowie auf den negativen Eingang des Schaltgliedes 197. Umgekehrt geht das Ausgangssignal des Schaltgliedes 195 auf den Steuereingang und den positiven Eingang des Schaltgliedes 197 und auf den negativen Eingang des Schaltgliedes 199. In dem Sonderfall, daß eines der Ausgangssignale der Schaltglieder 193 und 195 positiv ist und eines negativ ist, wird sowohl vom Schaltglied 197, als auch vom Schaltglied 199 das positive Signal weitergegeben. Die Ausgangssignale der Schaltglieder 197 und 199 gehen auf die Betragsglieder 201 bzw. 203. Im Summierer 205 wird vom Ausgangssignal des Betragsgliedes 203 das Ausgangssignal des Betragsgliedes 201 subtrahiert. Das Ausgangssignal des Summierers 205 ist Steuersignal des Schaltgliedes 207. Am positiven Eingang des Schaltgliedes 207 liegt das Ausgangssignal des Schaltgliedes 197. Am negativen Eingang des Schgaltgliedes 207 liegt das Ausgangssignal des Schaltgliedes 199.

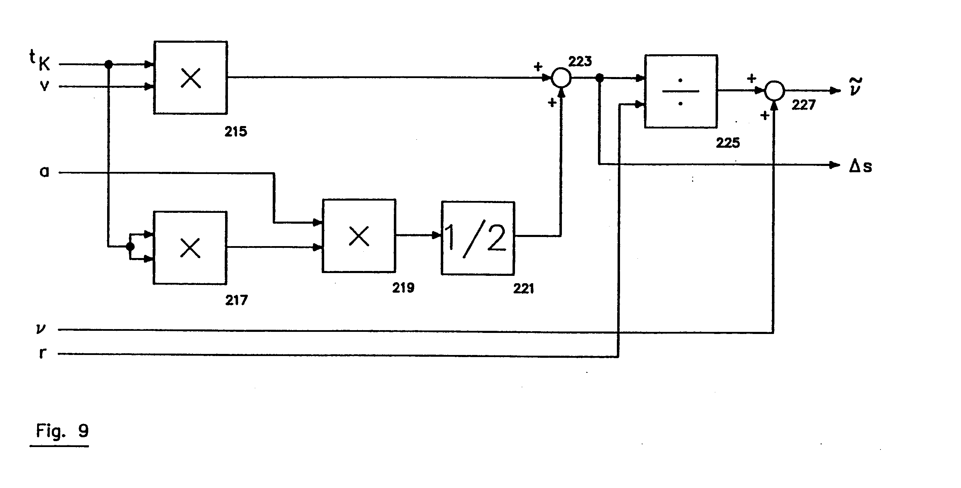

Der in Block 1 (Fig. 4) zweifach (Fahrzeug und Hindernis, Übertragungsglied 10 und 12) verwendete Block 1.5 (Fig. 9) bestimmt die zurückgelegte Strecke $\Delta s$ (Ausgangsgröße des Summierers 223) und den Kurswinkel $\tilde{\nu}$ (Ausgangsgröße des Summierers 227) des Fahrzeugs bzw. des Hindernisses nach Ablauf der Kollisionszeit $t_K$. Eingangsgrößen des Blocks sind die Kollisionszeit $t_K$, die Geschwindigkeit v, die Beschleu-

nigung a, der Kurswinkel $\nu$ und der Krümmungsradius r. Der Summierer 223 addiert das Produkt der Eingangsgrößen $t_K$ und v (Multiplizierer 215) zu dem Produkt des Quadrates der Eingangsgröße $t_K$ - (Multiplizierer 217) mit der Eingangsgröße a (Multiplizierer 219) und dem Faktor 1/2 (Proportionalglied 221). Ausgangsgröße des Summierers 223 ist die Strecke $\Delta$s. Der Dividierer 225 dividiert $\Delta$s durch den Krümmungsradius r. Das Ausgangssignal des Dividierers wird im Summierer 227 mit der Eingangsgröße $\nu$ addiert.

Das Ergebnis der Summation ist die Ausgangsgröße $\tilde{\nu}$ des Blocks 1.5. Bei geradenförmiger Sollbahnabschätzung (unendlicher Krümmungsradius) ist das Ausgangssignal des Dividierers 225 gleich Null, so daß die Eingangsgröße $\nu$ des Blocks direkt als Ausgangsgröße $\tilde{\nu}$ durchgeschaltet ist.

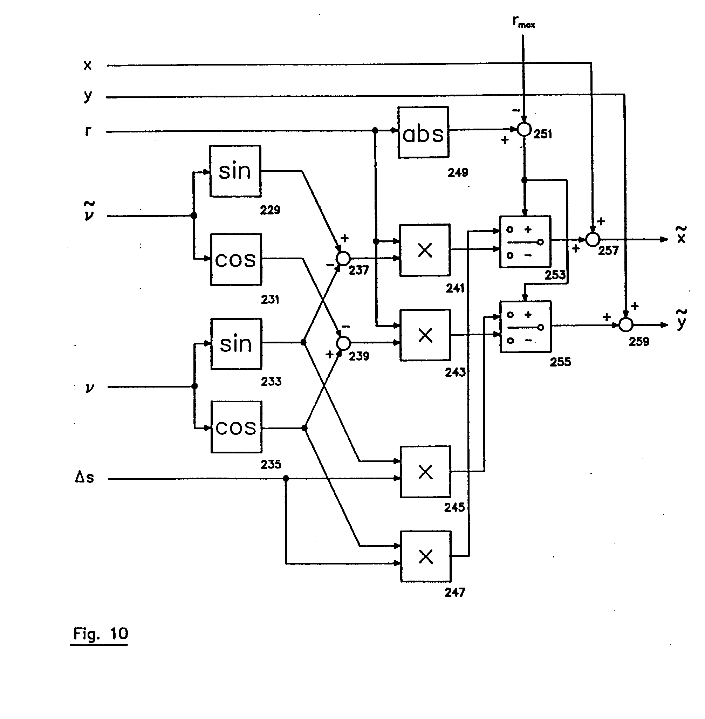

Ebenso wie Block 1.5 ist auch der folgende Block 1.6 (Fig. 10) doppelt (d.h. einmal für das Fahrzeug und einmal für das Hindernis, Übertragungsglied 14 und 16) in Block 1 (Fig. 4) vorhanden. Block 1.6 bestimmt die Position des Fahrzeugs bzw. des Hindernisses in x-Koordinate (Ausgangssignal des Summierers 257) und y-Koordinate (Ausgangssignal des Summierers 259) nach Ablauf der Zeit $t_K$. Eingangssignale des Blocks 1.6 sind die augenblickliche Position (x, y), der Krümmungsradius r, der von Block 1.5 bestimmte Kurswinkel $\tilde{\nu}$ nach Ablauf der Zeit $t_K$, der augenblickliche Kurswinkel $\nu$ und die von Block 1.5 bestimmte Strecke $\Delta$s. Das Sinusglied 229 und das Cosinusglied 231 ermitteln den Sinus bzw. den Cosinus des Winkels $\tilde{\nu}$. Das Sinusglied 233 und das Cosinusglied 235 ermitteln den Sinus bzw. Cosinus des Winkels $\nu$. Der Summierer 237 subtrahiert den Sinus des Winkels $\nu$ vom Sinus des Winkels $\tilde{\nu}$. Der Summierer 239 subtrahiert den Cosinus des Winkels $\tilde{\nu}$ vom Cosinus des Winkels $\nu$. Die Differenzen der Sinus- bzw. Cosinuswerte werden in den Multiplizierern 241 und 243 mit dem Krümmungsradius r multipliziert. Außerdem werden der Sinus- und der Cosinuswert des Winkels $\nu$ in den Multiplizierern 245 und 247 mit dem Signal $\Delta$s multipliziert. Im Betragsglied 249 wird der Betrag des Krümmungsradius gebildet. Der Summierer 251 subtrahiert den frei vorgebbaren Parameter $r_{max}$ vom Betrag des Krümmungsradius. Das Ausgangssignal des Summierers 251 ist Steuersignal der Schaltglieder 253 und 255.

Wenn der Betrag des Krümmungsradius größer als der Parameter $r_{max}$ ist, werden $\tilde{x}$ und $\tilde{y}$ auf geradenförmigen Bahnabschätzungen bestimmt. Bei positivem Steuersignal, d.h. wenn der Betrag des Krümmungsradius größer ist als der Parameter $r_{max}$, schaltet das Schaltglied 253 das Ausgangssignal des Multiplizierers 247 und das Schaltglied 255 das Ausgangssignal des Multiplizierers 245 durch. Andernfalls schaltet das Schaltglied 253 das Ausgangssignal des Multiplizierers 241 und das Schaltglied 255 das Ausgangssignal des Multiplizierers 243 durch. Der Summierer 257 addiert die Ausgangsgröße des Schaltgliedes 253 zur Eingangsgröße x und ermittelt so die Ausgangsgröße $\tilde{x}$ des Blocks 1.6. Die Ausgangsgröße $\tilde{y}$ wird vom Summierer 259 durch Addition der Eingangsgröße y zur Ausgangsgröße des Schaltgliedes 255 gebildet.

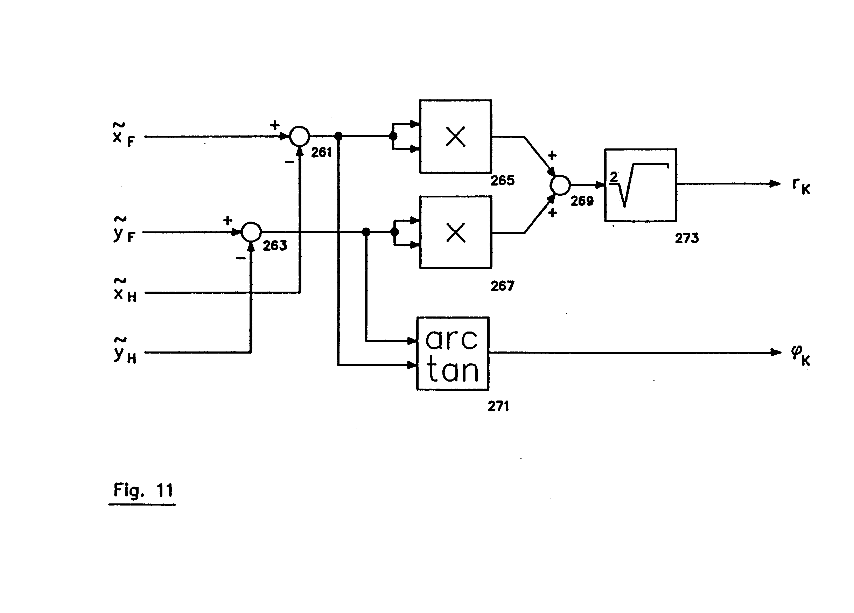

Die Ausgangssignale der beiden Blöcke 1.6 sind Eingangssignale als Block 1.7 (Fig. 11) gekennzeichneten Übertragunggliedes 18 in Figur 4, der die Kollisionsparameter $r_K$ und $\phi_K$ bestimmt. Im Summierer 261 wird die x-Position $\tilde{x}_H$ des Hindernisses von der x-Position $\tilde{x}_F$ des Fahrzeugs subtrahiert. Genauso wird im Summierer 263 die y-Position $\tilde{y}_H$ des Hindernisses von der y-Position $\tilde{y}_F$ des Fahrzeugs subtrahiert. Das Arcustangensglied bildet den Winkel $\phi_K$ aus dem Ausgangssignal des Summierers 263 als Gegenkathete und des Summierers 261 als Ankathete. Der Multiplizierer 265 quadriert das Ausgangssignal des Summierers 261 und der Multiplizierer 267 quadriert das Ausgangssignal des Summierers 263. Die beiden Quadrate werden im Summierer 269 addiert. Aus der Summe bestimmt das Wurzelglied 273 die Quadratwurzel. Das Ausgangssignal $r_K$ des Wurzelgliedes 273 ist zusammen mit $\phi_K$ Ausgangssignal des Blocks 1.7. Gleichzeitig sind $r_K$ und $\phi_K$ zusammen mit der Kollisionszeit $t_K$ (Ausgangssignal des Schaltgliedes 213 in Block 1.4) die Ausgangssignale des übergeordneten Blocks 1.

Die Berechnung der Kollisionsparameter $t_K$, $r_K$ und $\phi_K$ mit der als Block 1 bezeichneten Vorrichtung basiert auf einer geradenförmigen Abschätzung der Fahrzeugsollbahn und der Hindernisbahn für $t > t_0$. Bei einer Änderung der Kurswinkel ist diese Abschätzung nicht mehr exakt. Bei größeren Kurswinkeländerungen müssen deshalb die Krümmungsradien berücksichtigt werden.

Durch eine nicht geradenförmige Abschätzung der Bahnen läßt sich das Abstandsminimum zum Zeitpunkt der engsten Annäherung zwischen Fahrzeug und Hindernis nicht mehr analytisch bestimmen, da nichtlineare Terme auftreten. Deshalb muß die Kollisionszeit $t_K$, die angibt, wieviel Zeit vom augenblicklichen Zeitpunkt $t_0$ bis zum Kollisionszeitpunkt $t_0 + t_K$ vergeht, näherungsweise berechnet werden.

Mit der Annahme, daß der Krümmungsradius der Bahnen sich nur unwesentlich ändert, kann eine kreisförmige Abschätzung der Bahnen erfolgen. Wenn sensorisch Änderungen des Krümmungsradius mit hinreichender Genauigkeit erfaßbar sind, können auch diese in die Abschätzung der Bahnen einbezogen werden. In diesem Fall werden die Bahnen nicht kreisförmig mit konstantem Krümmungsradius, sondern mit sich stetig vergrößerndem oder verkleinerndem Krümmungsradius abgeschätzt. Das im folgenden erläuterte Verfahren zur Kollisionsparameterbestimmung für kreisförmige Bahnabschätzungen ist grundsätzlich auch auf andere nicht geradenförmige Abschätzungen anwendbar.

Erfindungsgemäß wird bei nicht geradenförmigen Bahnverläufen des Fahrzeuges oder des Hindernisses eine kreisförmige Abschätzung der künftigen Bahnverläufe vorgenommen.

In äquidistanten Zeitabständen $\Delta t$ werden die Sensorsignale abgetastet und die Kollisionsvermeidungsvorrichtung führt eine neue Bestimmung der aktuellen Kollisionsparameter durch. Aus dem vorherigen Zeitschritt zum Zeitpunkt $t_0 - \Delta t$ ist die Kollisionszeit $t_{K,alt}$ bekannt. Als voraussichtlicher Kollisionszeitpunkt ergibt sich nach dem letzten Zeitschritt der Zeitpunkt $t_0 - \Delta t + t_{K,alt}$. Im neuen Zeitschritt werden nun die Positionen des Fahrzeuges und des Hindernisses auf den kreisförmig abgeschätzten Bahnen zum Kollisionszeitpunkt $t_0 - \Delta_t + t_{K,alt}$ bestimmt. Im ersten Schritt wird $t_{K,alt} = \Delta t$ gesetzt, so daß die zu bestimmenden Positionen gleich den augenblicklichen Positionen sind.

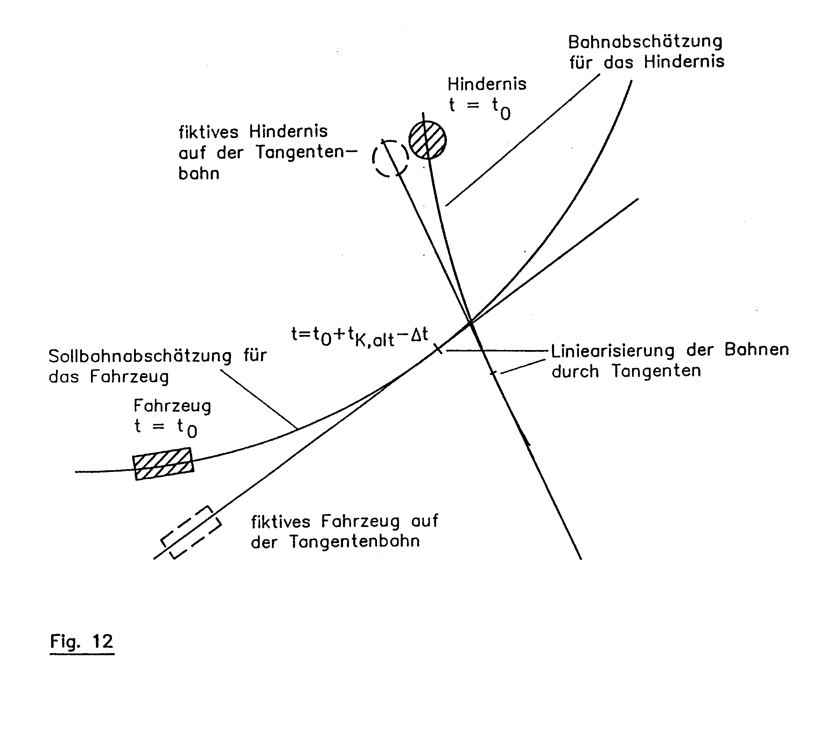

An die Positionen des Fahrzeuges und des Hindernisses zum Zeitpunkt $t_0 - \Delta t + t_{K,alt}$ auf den abgeschätzten Bahnen werden Tangenten gelegt. Zur Berechnung der aktuellen Kollisionszeit werden nun ein fiktives Fahrzeug und ein fiktives Hindernis eingeführt; die sich auf den Tangentenbahnen bewegen (Fig. 12). Die Kollisionsvermeidungseinrichtung linearisiert also die Kreisbahnen um den Punkt der erwarteten engsten Annäherung. Dabei passieren das reale und das fiktive Fahrzeug bzw. Hindernis zum Zeitpunkt $t_0 - \Delta t + t_{K,alt}$ den jeweiligen Berührungspunkt der Tangenten und der Kreisbahnen. Zu diesem Zeitpunkt stimmen die Kurswinkel, die Geschwindigkeiten und die Positionen des fiktiven und des realen Fahrzeuges bzw. Hindernisses überein. Die Berechnung der aktuellen Kollisionszeit durch die Kollisionsvermeidungsvorrichtung erfolgt, indem das vorher beschriebene Verfahren für geradenförmige Bahnabschätzungen nun auf das fiktive Fahrzeug und Hindernis auf den Tangentenbahnen angewandt wird.

Zusammenfassend kann die erfindungsgemäße Bestimmung der Kollisionsparameter $t_K$, $r_K$ und $\phi_K$ durch die Kollisionsvermeidungsvorrichtung folgendermaßen beschrieben werden.

Bei geradenförmiger Bahnabschätzung wird die Kollisionszeit $t_K$ direkt durch Berechnung des nächsten Minimums der Abstandsabschätzung zwischen Fahrzeug und Hindernis bestimmt. Bei nicht geradenförmiger Bahnabschätzung werden die Bahnverläufe durch Tangenten an die erwarteten Punkte der engsten Annäherung aus dem vorherigen Schritt linearisiert und die Kollisionszeit $t_K$ durch Bestimmung des Abstandsminimums für die Tangentenbahnen berechnet. Mit Hilfe der Kollisionszeit $t_K$ wird aus den Bahnabschätzungen der Kollisionsabstand $r_K$ und der Kollisionswinkel $\phi_K$ zwischen Fahrzeug und Hindernis ermittelt.

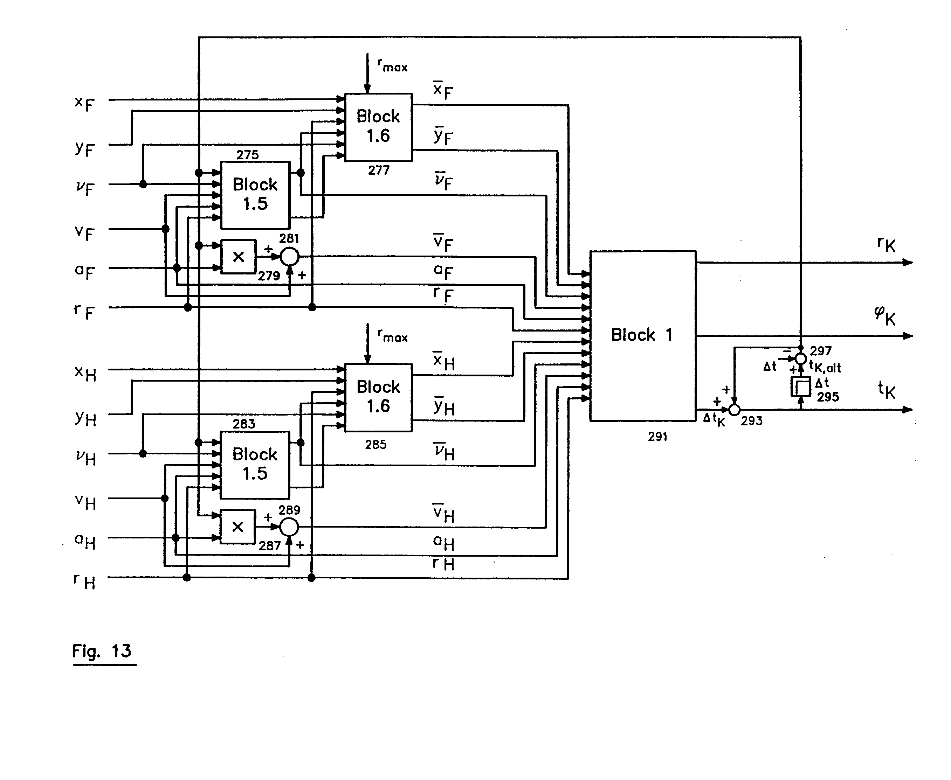

Zur Bestimmung der Kollisionsparameter $t_K$, $r_K$ und $\phi_K$ nach dem beschriebenen Verfahren mittels kreisförmiger Bahnabschätzung wird die als Block 1 (Fig. 4) bezeichnete Einrichtung KP (Fig. 13) erweitert. Block 1 ist als Übertragungsglied 291 Bestandteil der Einrichtung KP. Die ursprünglichen Eingangssignale $x_F$, $y_F$, $\nu_F$, $v_F$, $x_H$, $y_H$, $\nu_H$ und $v_H$ des Blocks 1 werden ersetzt durch $\bar{x}_F$, $\bar{y}_F$, $\bar{\nu}_F$, $\bar{v}_F$, $\bar{x}_H$, $\bar{y}_H$, $\bar{\nu}_H$, und $\bar{v}_H$.

$\bar{x}_F$ und $\bar{y}_F$ sind die Ausgangssignale des als Übertragungsglied 277 gekennzeichneten Blocks 1.6. $\bar{\nu}_F$ ist Ausgangssignal des Blocks 1.5 (Übertragungsglied 275). Dieser Block bestimmt aus der Ausgangsgröße des Summierers 297, die die zu erwartende Kollisionszeit $t_{K,alt} - \Delta t$ nach der Berechnung im letzten Zeitschritt angibt, und den Eingangsgrößen $\nu_F$, $v_F$, $a_F$ und $r_F$ den Kurswinkel $\bar{\nu}_F$ der Tangentenbahn des fiktiven Fahrzeugs und die verbleibende Strecke bis zum Zeitpunkt $t_0 - \Delta t + t_{K,alt}$. Der Block 1.6 (Übertragungsglied 277) ermittelt die Position $\bar{x}_F$, $\bar{y}_F$ des Fahrzeugs zum Zeitpunkt $t_0 - \Delta t + t_{K,alt}$ aus den Eingangssignalen $x_F$, $y_F$, $\nu_F$ und $r_F$ und den Ausgangsgrößen des Blocks 1.5 (Übertragungsglied 275). Der Multiplizierer 279 multipliziert das Eingangssignal $a_F$ mit dem Ausgangssignal des Summierers 297. Der Summierer 281 bestimmt das Signal $\bar{v}_F$, das Eingangssignal des Blocks 1 (Übertragungsglied 291) ist, durch Addition des Eingangssignals $v_F$ zum Ausgangssignal des Multiplizierers 279.

$\bar{x}_H$ und $\bar{y}_H$ sind die Ausgangssignale des als Übertragungsglied 285 gekennzeichneten Blocks 1.6. $\bar{\nu}_H$ ist Ausgangssignal des Blocks 1.5 (Übertragungsglied 283). Dieser Block bestimmt aus der Ausgangsgröße des Summierers 297, die die zu erwartende Kollisionszeit $t_{K,alt} - \Delta t$ nach der Berechnung im letzten Zeitschritt angibt und den Eingangsgrößen $\nu_H$, $v_H$, $a_H$ und $r_H$ den Kurswinkel $\bar{\nu}_H$ der Tangentenbahn des fiktiven Hindernisses und die verbleibende Strecke bis zum Zeitpunkt $t_0 - \Delta t + t_{K,alt}$. Der Block 1.6 (Übertragungsglied 285) ermittelt die Position $\bar{x}_H$, $\bar{y}_H$ des Hindernisses zum Zeitpunkt $t_0 - \Delta t + t_{K,alt}$ aus den Eingangsgrößen $x_H$, $y_H$, $\nu_H$ und $r_H$ und den Ausgangsgrößen des Blocks 1.5 (Übertragungsglied 283). Der Multiplizierer 287 multipliziert das Eingangssignal $a_H$ mit dem Ausgangssignal des Summierers 297. Der Summierer 289 bestimmt das Signal $\bar{v}_H$, das Eingangssignal des Blocks 1 (Übertragungsglied 291) ist, durch Addition des Eingangssignals $v_H$ zum Ausgangssignal des Multiplizierers 287.

Die Ausgangsgrößen $r_K$ und $\phi_K$ des Blocks 1 (Übertragungsglied 291) sind direkt auch Ausgangsgrößen der Einrichtung KP. Die dritte Ausgangsgröße des Blocks 1, die in Figur 4 als Kollisionszeit $t_K$ bezeichnet ist, gibt in der Einrichtung KP nicht mehr direkt die Kollisionszeit, sondern die Änderung $\Delta t_K$ der Kollisionszeit gegenüber dem Ausgangssignal $t_{K,alt} - \Delta t$ des Summierers 297 an. Der Summierer 293 addiert die Änderung $\Delta t_K$ zum Ausgangssignal des Summierers 297 und bestimmt so das Ausgangssignal

$t_K$ der Einrichtung KP. Das Totzeitglied 295 verzögert das Ausgangssignal $t_K$ um einen Zeitschritt $\Delta t$. Der Summierer 297 bildet das Signal $t_{K,alt} - \Delta t$, indem er vom Ausgangssignal des Totzeitgliedes 295 die Zeitschrittwerte $\Delta t$ subtrahiert.

### 6.1.3 Verfahren und Einrichtung KE zur Kollisionserkennung

Anhand der Ausgangssignale $t_K$ und $r_K$ der Einrichtung KP (Fig. 13), die in Abschnitt 6.1.2 beschrieben wurde, bestimmt die Kollisionserkennungseinrichtung das Signal kg. Bei positivem kg ist Kollisionsgefahr gegeben. Ansonsten hat kg einen negativen Wert. Wenn Kollisionsgefahr erkannt wird, muß die Kollisionsvermeidungsvorrichtung neue Sollwerte bestimmen und an die Ebene der Fahrzeugregelung weitergeben.

Erfindungsgemäß wird das Signal kg durch die Kollisionserkennungseinrichtung wie folgt bestimmt.

$$kg = \begin{cases} 1 & \text{für } (r_K < hy \cdot r_{mind}) \wedge (t_K < hy \cdot t_{krit}) \wedge (t_K > 0) \\ -1 & \text{sonst} \end{cases}$$

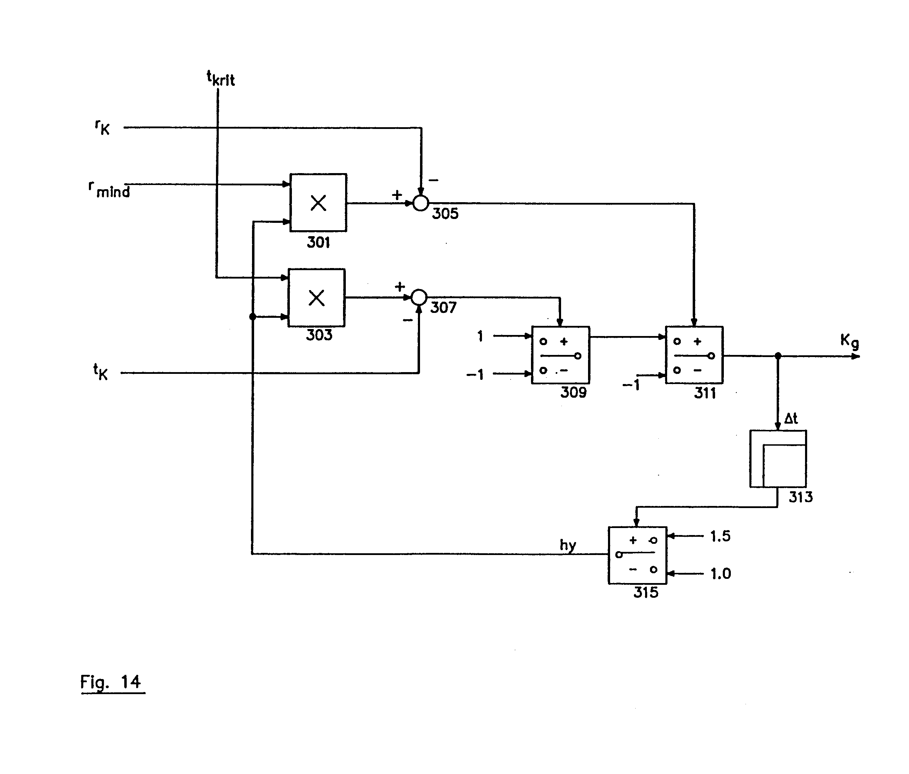

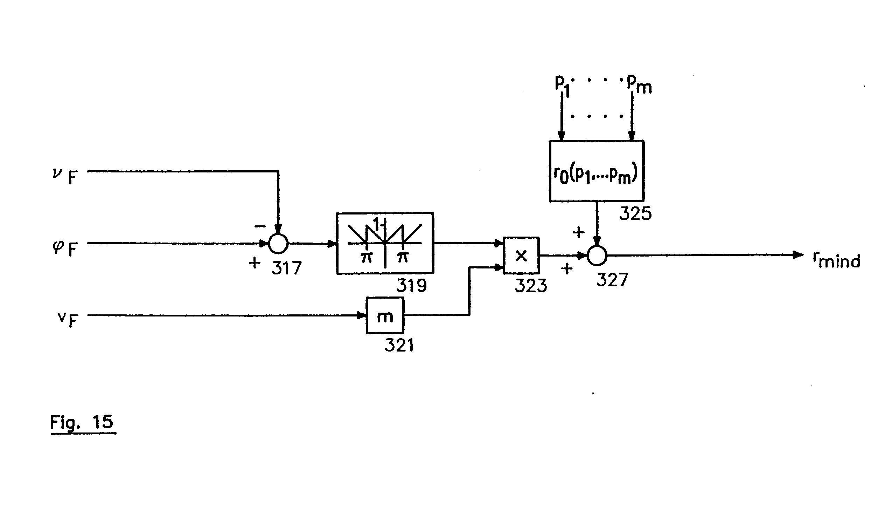

Hierbei gibt $r_{mind}$ einen Mindestabstand an, der beim Passieren des Hindernisses eingehalten werden muß. $r_{mind}$ kann der Kollisionserkennungseinrichtung (Fig. 14) als frei wählbarer fester Parameter, aber auch als zeitlich veränderliche Größe in Abhängigkeit, z. B. von der Geschwindigkeit $v_F$, dem Kurswinkel $\nu_F$ und dem Kollisionsparameter $\phi_F$ sowie von Fahrzeugparametern $p_1$ bis $p_m$ durch eine Einrichtung S (Fig. 15) vorgegeben werden. Die Zeit $t_{krit}$ gibt die sogenannte kritische Zeitspanne an, ab der die automatische Kollisionsvermeidung frühestens eingreift. Als $t_{krit}$ wird die Zeitspanne vorgegeben, die ein Fahrer benötigt, um selbständig und gezielt ein Kollisionsvermeidungsmanöver durchzuführen. Der Faktor hy wird abhängig vom Wert $kg_{alt}$ des Signals kg im vorherigen Zeitschritt gesetzt.

$$hy = \begin{cases} 1 & \text{für } kg_{alt} = -1 \\ 1,5 & \text{für } kg_{alt} = 1 \end{cases}$$

Durch Wahl eines Wertes hy größer 1 für $kg_{alt} = 1$ wird ein ständiges Wechseln der Größe kg bei Werten $r_K$ und $t_K$ in der Nähe von $r_{mind}$ und $t_{krit}$ verhindert.

Die Einrichtung KE zur Kollisionserkennung ist in Figur 14 dargestellt. Im Multiplizierer 301 wird das Eingangssignal $r_{mind}$ mit dem Faktor hy, der Ausgangssignal des Schaltgliedes 315 ist, multipliziert. Ebenso wird der Parameter $t_{krit}$ im Multiplizierer 303 mit dem Faktor hy multipliziert. Im Summierer 305 wird das Eingangssignal $r_K$ vom Ausgangssignal des Multiplizierers 301 subtrahiert. Im Summierer 307 wird das Eingangssignal $t_K$ vom Ausgangssignal des Multiplizierers 303 subtrahiert. Das Ausgangssignal des Summierers 307 ist Steuersignal des Schaltgliedes 309, das bei positivem Steuersignal den Wert + 1 und sonst den Wert -1 durchschaltet. Das Ausgangssignal des Summierers 305 ist Steuersignal des Schaltgliedes 311, das bei positivem Steuereingang das Ausgangssignal des Schaltgliedes 309 und sonst den Wert -1 durchschaltet. Das Ausgangssignal des Schaltgliedes 311 stellt das Ausgangssignal kg der Einrichtung KE dar. Im Totzeitglied 313 wird das Signal kg um einen Zeitschritt $\Delta t$ verzögert. Das Ausgangssignal des Totzeitgliedes 313 steuert das Schaltglied 315. Bei positivem Steuersignal wird der Wert 1.5, ansonsten der Wert 1.0 als Faktor hy durchgeschaltet.

Der Mindestabstand $r_{mind}$ kann durch die in Figur 15 dargestellte Einrichtung S bestimmt werden. Im Summierer 317 wird das Eingangssignal $\nu_F$ vom Eingangssignal $\phi_K$ subtrahiert. Das Kennlinienglied 319 bildet das Ausgangssignal des Summierers 317 entsprechend der im Kennlinienglied skizzierten Kennlinie auf den Wertebereich 0 bis + 1 ab. Das Eingangssignal $v_F$ wird im Proportionalglied 321 mit dem frei vorgebbaren Faktor m multipliziert. Die Ausgangssignale des Proportionalgliedes 321 und des Kennliniengliedes 319 werden im Multiplizierer 323 miteinander multipliziert. Der Summierer 327 addiert zum Ausgangssignal des Multiplizierers 323 den Wert $r_0$, der im Übertragungsglied 325 abhängig von Parame-tern $p_1, p_2, ...$ bis $p_m$ festgelegt wird. Über die Parameter $p_1, p_2$ bis $p_m$ gehen die Fahrzeugabmessungen und die Genauigkeit der Sensoren in die Bestimmung von $r_{mind}$ ein. Das Ausgangssignal des Summierers 327 stellt das Ausgangssignal $r_{mind}$ der Einrichtung S dar.

14

## 6.2 Verfahren und Einrichtung KV1 zur Kollisionsvermeidung durch Brems- oder Beschleunigungsmanöver

Ziel der Strategie der Kollisionsvermeidung durch Brems- oder Beschleunigungsmanöver ist es, eine Beschleunigung (bzw. Verzögerung) $a_{KV1}$ zu finden, die sicherstellt, daß das Fahrzeug das Hindernis in einem Mindestabstand $r_{mind}$ passiert.

In Abschnitt 6.1.2 ist ein Verfahren und eine Einrichtung KP zur Kollisionsparameterbestimmung erläutert worden, die in Abhängigkeit von den Größen $r_H$, $x_H$, $y_H$, $v_H$, $\nu_H$, $a_H$ für das Hindernis und $r_F$, $x_F$, $y_F$, $v_{KV}$, $\nu_F$, $a_F$ für das Fahrzeug den Kollisionsabstand $r_K$ bestimmen. Wenn man sämtliche Eingangsgrößen mit Ausnahme der Fahrzeugbeschleunigung als Konstanten und die Fahrzeugbeschleunigung als Variable a auffaßt, so kann man den Kollisionsabstand als eine Funktion r(a) der Variablen a interpretieren, deren Funktionswerte mit dem oben erläuterten Verfahren bestimmt werden. Insbesondere gilt

$$r\,(a_F)\ =\ r_K\ .$$

Ziel der Kollisionsvermeidung durch Brems- oder Beschleunigungsmanöver ist es, eine Beschleunigung $a = a_{KV1}$ zu finden, für die sich ein Kollisionsabstand

$$r\,(a_{KV1})\ =\ r_{mind}$$

ergibt, d. h. das Fahrzeug so zu bremsen oder zu beschleunigen, daß das Hindernis in einem Mindestabstand $r_{mind}$ passiert wird.

Erfindungsgemäß wird $a_{KV1}$ näherungsweise von der Kollisionsvermeidungsvorrichtung wie folgt bestimmt:

$$a_{KV1} = a_{KV1,alt} + \frac{\Delta a\,(r_{mind} - r(a_{KV1,\,alt}))}{r(a_{KV1,alt} + \Delta a) - r\,(a_{KV1,alt})}\ .$$

Hierbei ist $a_{KV1,alt}$ der Wert des Signals $a_{KV1}$ im letzten Zeitschritt. Im ersten Schritt wird $a_{KV1,alt}$ zu $a_F$ gewählt. $\Delta a$ ist ein vorgebbarer Parameter.

Die Kollisionsvermeidungseinrichtung KV1 muß in jedem Zeitschritt für die Bestimmung von $a_{KV1}$ zweimal entsprechend dem in 6.1.2 beschriebenen Verfahren einen Kollisionsabstand berechnen. Aus den so erhaltenen Werten für die Kollisionsabstände $r(a_{KV1,alt} + \Delta a)$ und $r(a_{KV1,alt})$ ergibt sich nach der obigen Rechenvorschrift die neue Sollbeschleunigung $a_{KV1}$.

Für die Änderung der Beschleunigung $a_{KV1}$ pro Zeitschritt wird eine betragsmäßige Obergrenze $\Delta a_{KV1,max}$ eingeführt.

$$|a_{KV1} - a_{KV1,alt}| < \Delta a_{KV1,max}$$

Die vom Fahrzeug realisierbare Beschleunigung bzw. Verzögerung ist aufgrund der maximalen Motorleistung und der begrenzten Verzögerung bei einem Bremsmanöver (Haftreibung Reifen-Straße) auf ein Intervall $[a_v, a_b]$ beschränkt.

Wenn das Signal Wert $a_{KV1}$ außerhalb des Intervalles $[a_v, a_b]$ liegt, kann das Fahrzeug das Hindernis durch ein Brems- oder Beschleunigungsmanöver nicht passieren.

Bei einem Fahrmanöver mit $a_{KV1}$ aus dem Intervall $[a_v, a_b]$ ist gesichert, daß der geforderte Mindestabstand $r_{mind}$ zum Hindernis nicht unterschritten wird.

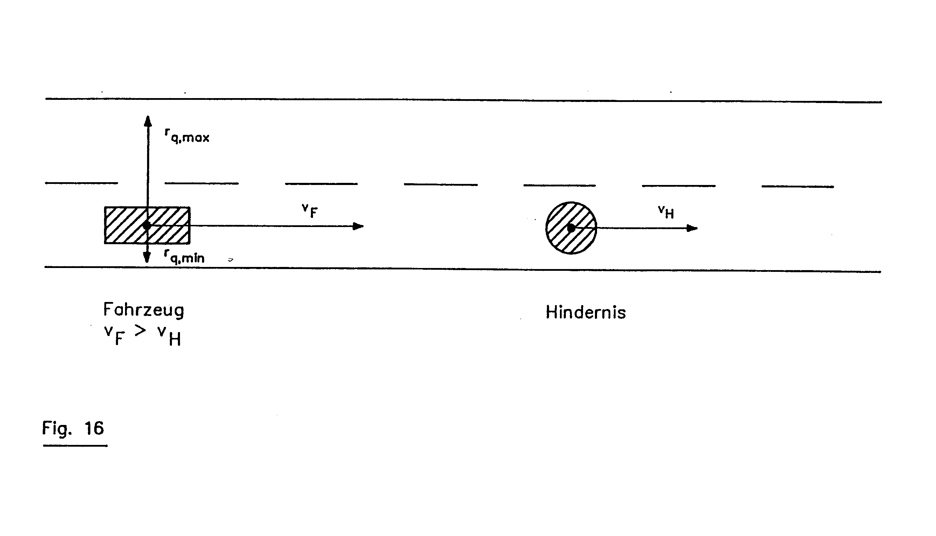

Wie in Figur 16 anschaulich dargestellt ist, können aber Fälle auftreten, bei denen das Fahrzeug das Hindernis nicht passiert. In Figur 16 ist eine Situation gegeben, in der sich das Fahrzeug mit hoher Geschwindigkeit von hinten einem Hindernis nähert, welches sich mit geringer Geschwindigkeit und dem gleichen Kurswinkel auf der Fahrbahn des Fahrzeuges bewegt. Das Fahrzeug würde ohne einen Eingriff der Kollisionsvermeidungseinrichtung nach Ablauf der Kollisionszeit $t_K$ auf das Hindernis auffahren. Durch ein leichtes Bremsmanöver könnte eine Kollision nicht verhindert werden, da sich nur die Kollisionszeit vergrößert. Erst wenn die Verzögerung $a_{KV1}$ so groß wird, daß das Fahrzeug hinter dem Hindernis auf die Hindernisgeschwindigkeit abgebremst wird, findet keine Kollision statt. In diesem Falle wird das Hindernis aber auch nicht passiert. Nach dem Zeitpunkt der engsten Annäherung im Abstand $r_{mind}$ bestünde keine Kollisionsgefahr mehr und das Fahrzeug würde erneut beschleunigt. Nach kurzer Zeit würde die Kollisionsvermeidungseinrichtung aber wieder eine Kollisionsgefahr erkennen, so daß es zu einem ständigen Hin- und Herschalten der Größe kg käme.

Um diesen Sonderfall zu erkennen, berechnet die Kollisionsvermeidungseinrichtung die Fahrzeuggeschwindigkeit $\hat{v}_F$ und die Hindernisgeschwindigkeit $\hat{v}_H$ sowie die Kurswinkel $\hat{\nu}_F$ und $\hat{\nu}_H$ des Fahrzeuges und des Hindernisses zum Zeitpunkt der engsten Annäherung bei einer Beschleunigung $a_{KV1}$ des Fahrzeuges.

$$\hat{v}_F = v_{KV} + a_{KV1}\, t_K$$
$$\hat{v}_F = v_H + a_H\, t_K$$

$$\hat{\nu}_F = \nu_F + \frac{v_{KV}\, t_K + \frac{1}{2}\, a_{KV1}\, t_K^2}{r_F}$$

$$\hat{\nu}_H = \nu_H + \frac{v_H\, t_K + \frac{1}{2}\, a_H\, t_K^2}{r_H}$$

Zum Zeitpunkt der engsten Annäherung bewegen sich Fahrzeug und Hindernis mit der Geschwindigkeit $v_{rel}$ zueinander.

$$V_{rel} = \sqrt{(\hat{v}_F \cos \hat{\nu}_F - \hat{v}_H \cos \hat{\nu}_H)^2 + (\hat{v}_F \sin \hat{\nu}_H - \hat{v}_H \sin \hat{\nu}_H)^2}$$

Wenn $v_{rel}$ gleich Null ist bzw. kleiner als ein Grenzwert $\epsilon_v$, der durch die begrenzte Genauigkeit der Signalverarbeitung bedingt wird, liegt der oben dargestellte Sonderfall vor.

Das Hindernis kann nur durch ein seitliches Abweichen von der Sollbahn passiert werden. Wenn zu einem solchen Überholmanöver nicht genügend Platz zur Verfügung steht, muß das Fahrzeug dem Hindernis unter Einhaltung eines Mindestabstandes $r_{mind}$ folgen.

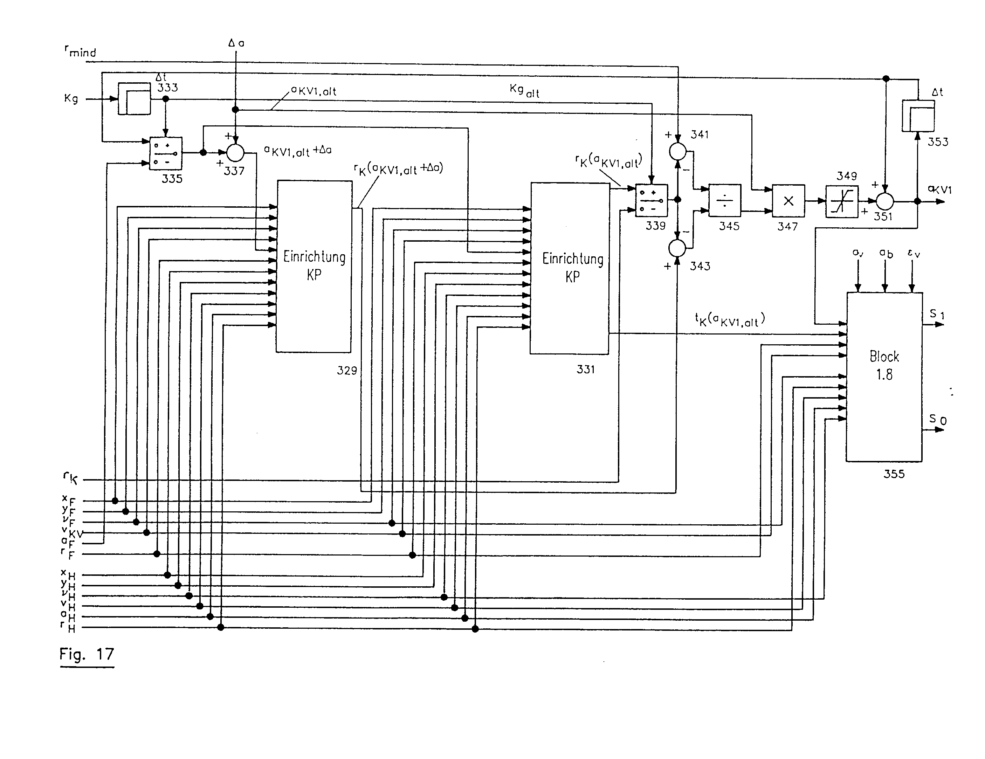

Die in Fig. 17 dargestellte Vorrichtung KV1 bestimmt nach dem beschriebenen Verfahren entsprechend Anspruch 1 eine Beschleunigung $a_{KV1}$, die die Einhaltung des Mindestabstands $r_{mind}$ zwischen Fahrzeug und Hindernis sichert.

In die Vorrichtung KV1 sind zwei Blöcke vom Typ Block KP zur Bestimmung von Kollisionsparametern (Übertragungsglied 329 und 331) integriert, deren Aufbau in Fig. 13 dargestellt ist und in Abschnitt 6.1.2 bereits erläutert wurde. Das Übertragungsglied 331 unterscheidet sich dadurch von der in Abschnitt 6.1.2 beschriebenen Vorrichtung, daß der Ausgang $\phi_K$ nicht ausgeführt ist, d.h. das Übertragungsglied 271 (Block 1.7, Fig. 11) entfällt. Im Übertragungsglied 329 wird darüberhinaus der Ausgang des Summierers 293 (Fig. 13) nicht nach außen geführt.

Eingangssignale der beiden Übertragungsglieder 329 und 331 vom Typ der Einrichtung KP sind die Signale $x_F$, $y_F$, $\nu_F$, $v_{KV}$, $r_F$, $x_H$, $y_H$, $\nu_H$, $v_H$, $a_H$ und $r_H$ sowie beim Übertragungsglied 329 das Ausgangssignal $a_{KV1,alt} + \Delta a$ des Summierers 337 bzw. beim Übertragungsglied 331 das Ausgangssignal $a_{KV1,alt}$ des Schaltgliedes 335. Ausgangssignal des Übertragungsgliedes 329 ist die Größe $r(a_{KV1,alt} + \Delta a)$. Entsprechend ist die Größe $r(a_{KV1,alt})$ Ausgangssignal des Übertragungsgliedes 331, welches als zweites Ausgangssignal die Größe $t_K(a_{KV1,alt})$ auf den Eingang des Blocks 1.8 (Übertragungsglied 355) gibt. Das Ausgangssignal des Totzeitgliedes 353 liegt am positiven Eingang des Schaltgliedes 335. Am negativen Eingang des Schaltgliedes 335 liegt das Eingangssignal $a_F$ der Einrichtung KV1. Als Steuersignal des Schaltgliedes 335 dient das Ausgangssignal $kg_{alt}$ des Totzeitgliedes 333, welches das Signal kg um einen Zeitschritt $\Delta t$ verzögert. Das Signal $a_{KV1,alt} + \Delta a$ wird im Summierer 337 durch Addition des Parameters $\Delta a$ zum Ausgangssignal des Schaltgliedes 335 gebildet.

Als Steuersignal des Schaltgliedes 339 dient das Ausgangssignal $kg_{alt}$ des Totzeitgliedes 333. Bei positivem $kg_{alt}$ schaltet das Schaltglied 339 das Ausgangssignal $r(a_{KV1,alt})$ des Übertragungsgliedes 331 weiter. Ansonsten wird das Eingangssignal $r_K$ der Einrichtung KV1 durchgeschaltet. Der Summierer 341 subtrahiert das Ausgangssignal des Schaltgliedes 339 vom Eingangssignal $r_{mind}$. Der Summierer 343 subtrahiert das Ausgangssignal des Schaltgliedes 339 vom Ausgangssignal $r(a_{KV1,alt} + \Delta a)$ des Übertragungsgliedes 329. Das Ausgangssignal des Summierers 341 wird im Dividierer 345 durch das Ausgangssignal des Summierers 343 dividiert. Der Multiplizierer 347 multipliziert das Ergebnis der Division mit dem

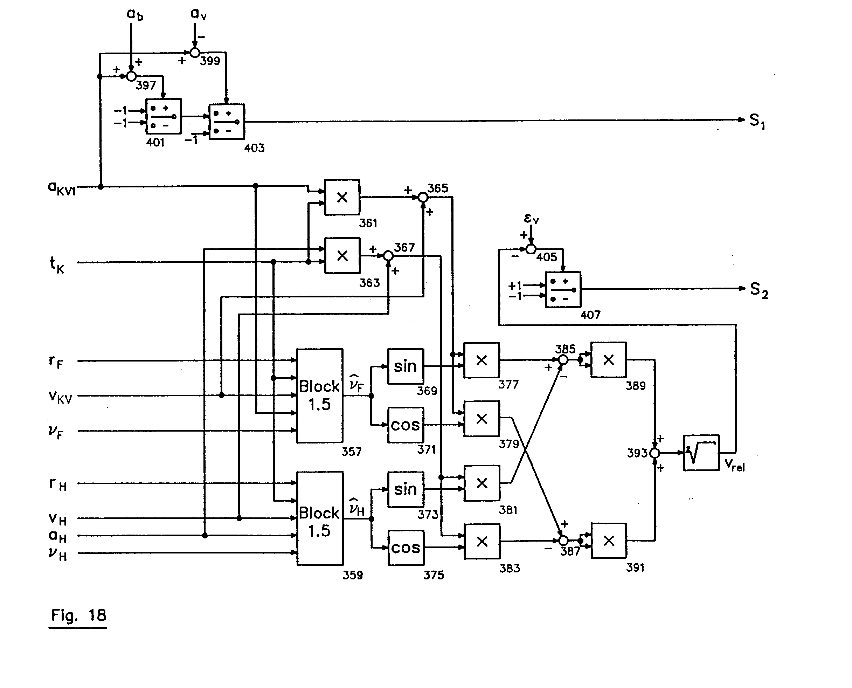

Parameter $\Delta a$. Das Ausgangssignal des Multiplizierers 347 wird im Sättigungsglied 349 auf den Bereich zwischen $+\Delta a_{KV1,max}$ und $-\Delta a_{KV1,max}$ beschränkt und im Summierer 351 zur Ausgangsgröße des Totzeitgliedes 353 addiert. Das Ausgangssignal des Summierers 351 ist Eingangssignal des Totzeitgliedes 353 und gleichzeitig Ausgangssignal $a_{KV1}$ der Vorrichtung KV1. Außerdem ist es neben dem Ausgangssignal $t_K$-($a_{KV1,alt}$) des Übertragungsgliedes 331 und den Signalen $r_F$, $v_{KV}$, $\nu_F$, $r_H$, $v_H$, $a_H$ und $\nu_H$ Eingangssignal des als Block 1.8 (Fig. 18) bezeichneten Übertragungsgliedes 355.

In Block 1.8 sind zwei Übertragungsglieder (357 und 359) vom Typ Block 1.5 (Fig. 9) enthalten. Der Ausgang $\Delta s$ (Summierer 223) wird bei beiden Blöcken nicht nach außen geführt. Das Übertragungsglied 357 bestimmt aus den Eingangssignalen $r_F$, $t_K$, $v_{KV}$, $a_{KV1}$ und $\nu_F$ das Signal $\widehat{\nu}_F$. Das Übertragungsglied 359 bestimmt aus den Eingangssignalen $r_H$, $t_K$, $v_H$, $a_H$ und $\nu_H$ das Signal $\widehat{\nu}_H$. Das Sinusglied 369 ermittelt den Sinus von $\widehat{\nu}_F$ und das Cosinusglied 371 ermittelt den Cosinus von $\widehat{\nu}_F$. Entsprechend bestimmen das Sinusglied 373 und das Cosinusglied 375 den Sinus bzw. den Cosinus von $\widehat{\nu}_H$. Der Multiplizierer 361 multipliziert die Eingangssignale t und a. Auf das Ergebnis der Multiplikation wird im Summierer 365 das Eingangssignal $v_{KV}$ addiert. Auf das Ausgangssignal des Multiplizierers 363, der die Eingangssignale $t_K$ und $a_H$ multipliziert, addiert der Summierer 367 das Eingangssignal $v_H$. Das Ausgangssignal des Summierers 365 wird im Multiplizierer 377 mit dem Ausgangssignal des Sinusgliedes 369 und im Multiplizierer 379 mit dem Ausgangssignal des Cosinusgliedes 371 multipliziert. Das Ausgangssignal des Summierers 367 wird im Multiplizierer 381 mit dem Ausgangssignal des Sinusgliedes 373 und im Multiplizierer 383 mit dem Ausgangssignal des Cosinusgliedes 375 multipliziert. Das Ausgangssignal des Summierers 385, der das Ausgangssignal des Multiplizierers 381 vom Ausgangssignal des Multiplizierers 377 subtrahiert, wird im Multiplizierer 389 quadriert. Das Ausgangssignal des Summierers 387, der das Ausgangssignal des Multiplizierers 383 vom Ausgangssignal des Multiplizierers 379 subtrahiert, wird im Multiplizierer 391 quadriert. Der Summierer 393 addiert die Ausgangssignale der Multiplizierer 389 und 391. Aus dem Ergebnis der Summation zieht das Wurzelglied 395 die Quadratwurzel $v_{rel}$, welche im Summierer 405 vom Parameter $\epsilon_v$ subtrahiert wird. Das Ausgangssignal des Summierers 405 ist Steuersignal des Schaltgliedes 407, welches bei positivem Steuersignal den Wert $+1$ und sonst den Wert $-1$ durchschaltet. Das Ausgangssignal $S_0$ des Schaltgliedes 407 ist Ausgangssignal des Blocks 1.8 und der Einrichtung KV1.

Das Ausgangssignal des Summierers 397, der das Eingangssignal $a_{KV1}$ vom Parameter $a_b$ subtrahiert, ist Steuersignal des Schaltgliedes 401. Bei positivem Steuersignal, d.h. wenn $a_{KV1}$ kleiner als $a_b$ ist, wird der Wert $+1$ durchgeschaltet. Andernfalls wird der Wert $-1$ durchgeschaltet. Der Summierer 399 subtrahiert den Parameter $a_v$ von dem Eingangssignal $a_{KV1}$. Das Ausgangssignal des Summierers 399 liegt am Steuereingang des Schaltgliedes 403. Bei positivem Steuersignal, d.h. wenn $a_{KV1}$ größer als $a_v$ ist, schaltet das Schaltglied 403 das Ausgangssignal des Schaltgliedes 401 durch. Andernfalls wird der Wert $-1$ weitergegeben. Das Ausgangssignal des Schaltgliedes 403 ist Ausgangssignal $S_1$ des Blocks 1.8 und auch Ausgangssignal der Einrichtung KV1.

### 6.3 Verfahren und Einrichtung KV2 zur Kollisionsvermeidung durch seitliche Ausweichmanöver

Zur Erlauterung des Grundgedankens des Verfahrens zur Kollisionsvermeidung durch seitliche Ausweichmanöver nehme man an, es existiere ein fiktives Fahrzeug, daß sich mit der gleichen Geschwindigkeit, Beschleunigung und Kurswinkel bewege, wie das tatsächliche Fahrzeug. Das fiktive Fahrzeug sei in seiner Position aber gegenüber dem tatsächlichen Fahrzeug seitlich, d.h. quer zum Kurswinkel, um den Abstand $r_q$ versetzt. $r_q$ wird positiv gerechnet, wenn das fiktive Fahrzeug in Fahrtrichtung links vom tatsachlichen Fahrzeug liegt. Wenn das fiktive Fahrzeug rechts liegt, wird $r_q$ negativ gerechnet. Der Bahnkrümmungsradius $r_{Fq}$ des fiktiven Fahrzeuges ergibt sich zu

$$r_{Fq} = r_F - r_q .$$

Dazu sei noch einmal darauf hingewiesen, daß vereinbarungsgemäß der Krümmungsradius in Linkskurven positiv und in Rechtskurven negativ gerechnet wird (s. Abschnitt 6.1.1). Die Position $(x_{Fq}, y_{Fq})$ des fiktiven Fahrzeuges lautet

$$x_{Fq} = x_F - r_q \sin \nu_F$$
$$y_{Fq} = y_F + r_q \cos \nu_F .$$

Mit dem in Abschnitt 6.1.2 erläuterten Verfahren kann der Kollisionsabstand $r_{Kq}$ des fiktiven Fahrzeuges abhängig von der normalen Positionsverschiebung $r_q$ als Funktion $r_{Kq}(r_q)$ bestimmt werden. Dazu werden die Größen $x_F$, $y_F$ und $r_F$ des tatsächlichen Fahrzeuges durch $x_{Fq}$, $y_{Fq}$ und $r_{Fq}$ ersetzt. Die Beschleunigung

wird nicht variiert. Ziel der Kollisionsvermeidung durch seitliche Ausweichmanöver ist es nun, die normale Positionsverschiebung $r_q$ so zu bestimmen, daß

$$r_{Kq} (r_q) = r_{mind}$$

gilt.

In der noch verbleibenden Zeit $t_K$ bis zur engsten Annäherung wird die Sollposition des Fahrzeuges dann in einem stetigen Übergang in die um $r_q$ quer verschobene Position des fiktiven Fahrzeuges überführt.

Erfindungsgemäß führt die Kollisionsvermeidungseinrichtung KV2, der das beschriebene Verfahren zugrundeliegt, die folgenden Schritte aus. Zunächst wird der Kollisionsabstand $r_{Kq}$, der Kollisionswinkel $\phi_{Kq}$ und die Kollisionszeit $t_{Kq}$ bei einer Positionsverschiebung $r_{q,alt}$ bestimmt. $r_{q,alt}$ ist der im letzten Zeitschritt bestimmte Wert für $r_q$. Im ersten Zeitschritt wird $r_{q,alt}$ gleich $r_{mind}$ gesetzt.

Der Kollisionsabstand $r_{Kq}$ wird im folgenden mit positivem Vorzeichen gerechnet, wenn das Hindernis zum Zeitpunkt der engsten Annäherung rechts vom Sollkurs liegt. Ansonsten geht $r_{Kq}$ mit negativem Vorzeichen ein. $r_{Kq}$ wird deshalb mit dem Faktor

$$\gamma_q = \text{sign} \left[ \varphi_{Kq} - \nu_F - (v_F t_{Kq} + a_F \frac{t_{Kq}^2}{2}) / (r_F - r_{q,alt}) \right]$$

multipliziert. Über den letzten Term im Argument der Signum-Funktion wird die Kurswinkeländerung während der Kollisionszeit $t_{Kq}$ berücksichtigt. Ebenso wie $r_{Kq}$ geht auch der Kollisionsabstand $r_K$ des Fahrzeuges in seiner ursprünglichen Sollposition mit einem Faktor

$$\gamma = \text{sign} \left[ \varphi_K - \nu_F - (v_{KV} t_K + a_F \frac{t_K^2}{2})/r_F \right]$$

ein.

Nachdem die Kollisionsvermeidungseinrichtung KV2 die Größen $\gamma$ und $\gamma_q$ bestimmt hat, werden die Verschiebungen $r_{q,li}$ und $r_{q,re}$ für ein Ausweichmanöver nach links oder nach rechts ermittelt

$$r_{q,li} = \frac{r_{q,alt} (r_{mind} - \gamma \, r_K)}{\gamma_q \, r_{Kq} - \gamma \, r_K}$$

$$r_{q,re} = \frac{r_{q,alt} (-r_{mind} - \gamma \, r_K)}{\gamma_q \, r_{Kq} - \gamma \, r_K} \, .$$

Die Positionsverschiebung $r_q$ wird von der Kollisionsvermeidungseinrichtung KV2 entsprechend der Regel

$$r_q = \begin{cases} r_{q,li} & \text{für } |r_{q,li} - g(t_K) r_{q,alt}| \leq |r_{q,re} - g(t_K) r_{q,alt}| \wedge r_{q,li} < r_{q,max} \\[3ex] r_{q,re} & \text{für } |r_{q,re} - g(t_K) r_{q,alt}| < |r_{u,li} - g(t_K) r_{q,alt}| \wedge r_{q,re} > r_{q,min} \end{cases}$$

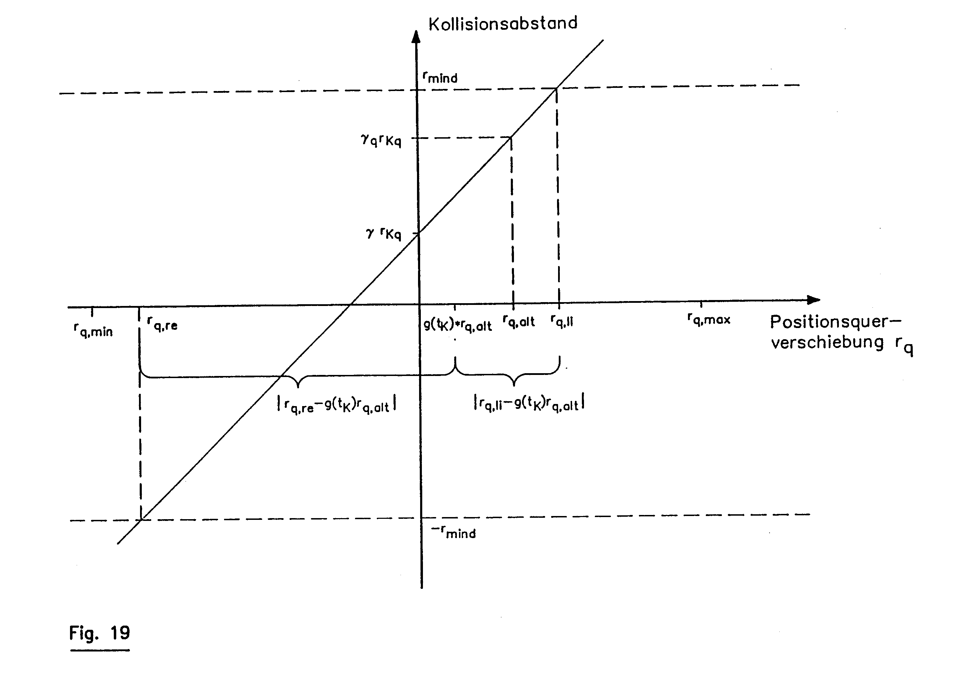

festgelegt (s. Fig. 19). Die Werte $r_{q,max}$ und $r_{q,min}$ geben die maximal zulässigen normalen Abweichungen von der Sollbahn an (Fahrbahnbreite). $g(t_K)$ ist eine Übergangsfunktion, die in Abhängigkeit von $t_K$ Werte zwischen 0 und 1 annimmt.

Die Übergangsfunktion $g(t_K)$ dient dazu, die Sollposition des Fahrzeuges in einem stetigen Übergang bis zum Zeitpunkt der engsten Annäherung in die um $r_q$ verschobene Lage zu überführen. $g(t_K)$ muß die folgenden Eigenschaften haben:

$$g(0) = 1$$
$$g(t_{krit}) = 0$$

$$\frac{d}{dt_K} g(t_K)\bigg|_{t_K = 0} = 0$$

$$\frac{d}{dt_K} g(t_K)\bigg|_{t_K = t_{krit}} = 0 \ .$$

Die Übergangsfunktion

$$g(t_K) = 2 \left(\frac{t_K}{t_{krit}}\right)^3 - 3 \left(\frac{t_K}{t_{krit}}\right)^2 + 1$$

erfüllt die obigen Forderungen.

Die Querverschiebung $r_q$ wird so festgelegt, daß die Begrenzungen $r_{q,max}$ und $r_{q,min}$ für Ausweichmanöver nach links und nach rechts nicht verletzt werden und die verbleibende Querverschiebung $|r_{q,li} - g(t_K) r_{q,alt}|$ bzw. $|r_{q,re} - g(t_K) r_q|$ möglichst klein ist. Wenn sowohl $r_{q,li}$ als auch $r_{q,re}$ außerhalb des zulässigen Bereiches $[r_{q,min}, r_{q,max}]$ liegen, kann das Hindernis nicht durch ein seitliches Ausweichmanöver passiert werden.

Die Kollisionsvermeidungseinrichtung KV2 ermittelt die Sollposition $x_{KV2}$, $y_{KV2}$ auf der Ausweichbahn wie folgt:

$$x_{KV2} = x_F - g(t_K) r_q \sin(\nu_F)$$
$$y_{KV2} = y_F + g(t_K) r_q \cos(\nu_F) \ .$$

Die Kollisionsvermeidungseinrichtung KV2 berechnet außerdem einen neuen Kurswinkel für die Ausweichbahn. Das Fahrzeug erhält auf der Ausweichbahn einen zusützlichen Geschwindigkeitsanteil $v_q$ quer zum ursprünglichen Kurswinkel. Es gilt

$$g_v = \frac{d}{dt} t_K(t) \; \frac{d}{dt_K} g(t_K)$$

$$g_v = -\frac{6}{t_{krit}} \left( \frac{t_K^2}{t_{krit}^2} - \frac{t_K}{t_{krit}} \right)$$

$$v_q = g_v \, r_q$$

Der neue Kurswinkel ergibt sich zu

$$\nu_{KV2} = \nu_F + \arctan \frac{\dot{v}_q}{v_{KValt}} \; .$$

Die Kollisionsvermeidungseinrichtung KV2 greift nicht in die Sollgeschwindigkeit ein, d.h. der ursprüngliche Wert $a_F$ der Sollbeschleunigung wird unverändert zur Aufintegration der Sollgeschwindigkeit weitergegeben.

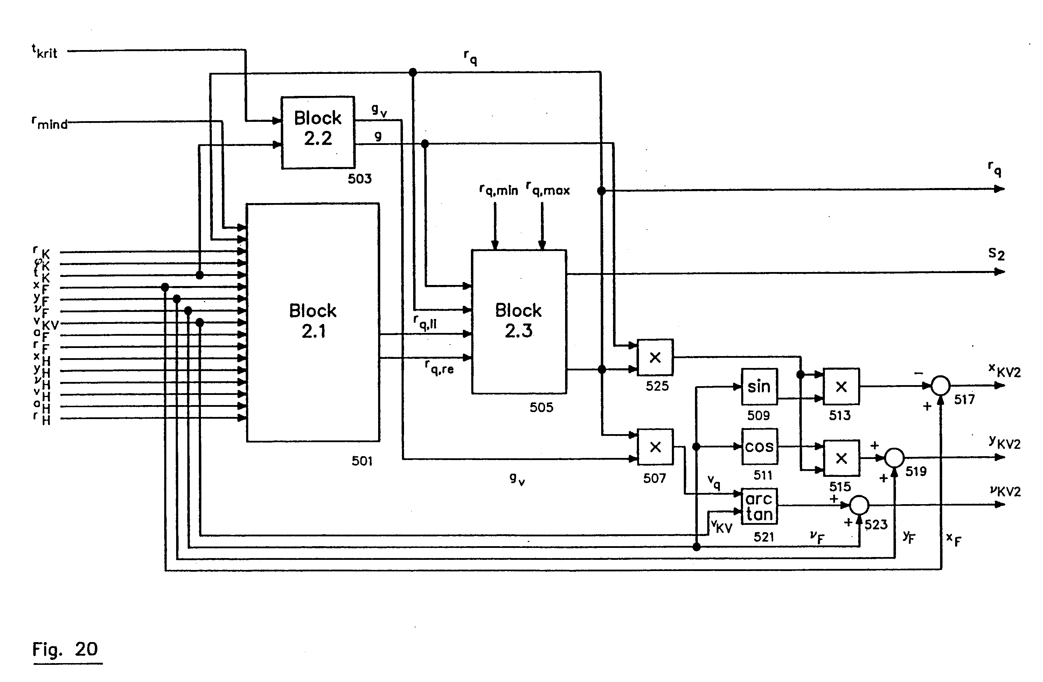

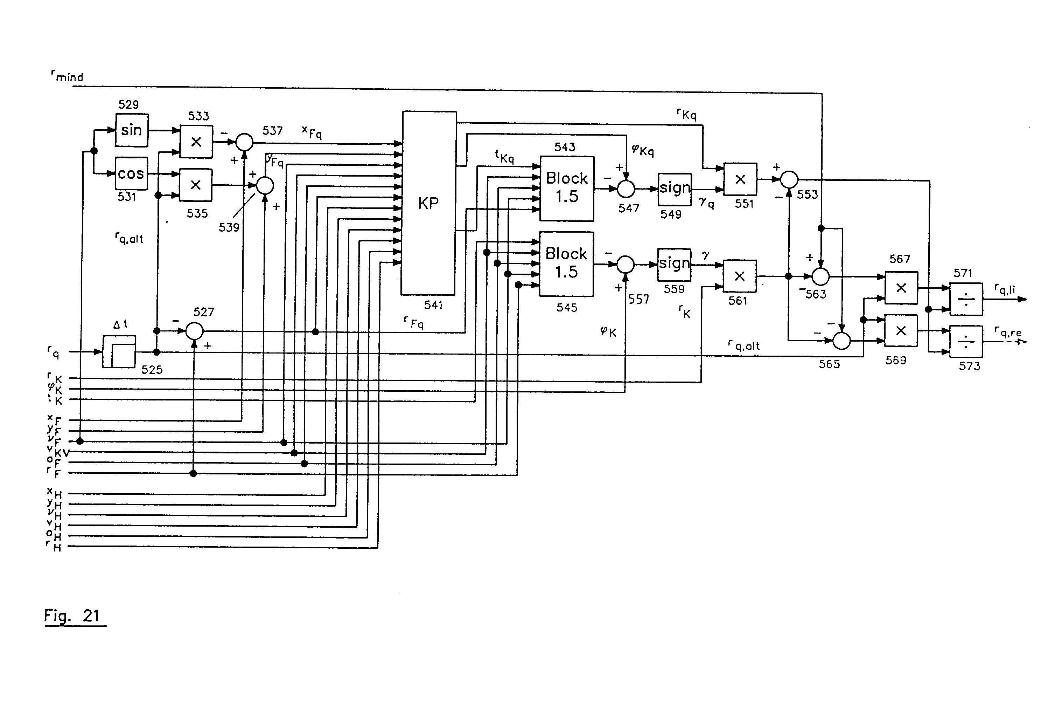

Die in Figur 20 dargestellte Kollisionsvermeidungseinrichtung KV2 beinhaltet die Blöcke 2.1 (Übertragungsglied 501), 2.2 (Übertragungsglied 503) und 2.3 (Übertragungsglied 505), die in den Figuren 21 bis 23 gesondert dargestellt sind.

Block 2.1 (Fig. 21) bestimmt aus den Eingangssignalen $r_{mind}$, $r_q$, $\phi_K$, $t_K$, $x_F$, $y_F$, $\nu_F$, $v_{KV}$, $a_F$, $r_F$, $x_H$, $y_H$, $a_H$, $\nu_H$, $v_H$ und $r_H$ die Querverschiebungen $r_{q,li}$ und $r_{q,re}$ für Ausweichmanöver nach links oder rechts quer zum Kurswinkel. Das Sinusglied 529 und das Cosinusglied 531 ermitteln den Sinus bzw. den Cosinus des Kurswinkels $\nu_F$. Das Eingangssignal $r_q$ wird im Totzeitglied 525 um einen Zeitschritt $\Delta t$ verzögert. Das Ausgangssignal $r_{q,alt}$ des Totzeitgliedes 525 wird im Multiplizierer 533 mit dem Sinus des Kurswinkels $\nu_F$ - (Sinusglied 529) und im Multiplizierer 535 mit dem Cosinus des Kurswinkels $\nu_F$ (Cosinusglied 531) multipliziert. Durch Subtraktion des Ausgangssignals des Multiplizierers 533 vom Eingangssignals $x_F$ bestimmt der Summierer 537 die Position $x_{Fq}$. Die Position $y_{Fq}$ wird vom Summierer 539 durch Addition der Eingangsgröße $y_F$ und des Ausgangssignals des Multiplizierers 539 gebildet. Der Summierer 527 bestimmt den Krümmungsradius $r_{Fq}$ durch Subtraktion des Ausgangssignals $r_{q,alt}$ des Totzeitgliedes 525 von der Eingangsgröße $r_F$. Die Signale $x_{Fq}$, $y_{Fq}$, $\nu_F$, $v_{KV}$, $a_F$, $r_{Fq}$, $x_H$, $y_H$, $\nu_H$, $v_H$, $a_H$ und $r_H$ sind die Eingangssignale der Einrichtung KP, die als Übertragungsglied 541 Bestandteil des Blocks 2.1 ist und die Größen $r_{Kq}$, $\phi_{Kq}$ und $t_{Kq}$ ermittelt. Block 2.1 beinhaltet weiterhin zwei Übertragungsglieder (543 und 545) vom Typ Block 1.5, bei denen der Ausgang des Summierers 223 im Gegensatz zur Darstellung in Fig. 9 nicht nach außen geführt ist. Das Übertragungsglied 543 bestimmt aus den Eingangssignalen $t_{Kq}$, $v_{KV}$, $a_F$, $\nu_F$ und $r_{Fq}$ den Kurswinkel des Fahrzeugs nach Ablauf der Zeit $t_{Kq}$ und bei einer Querverschiebung der Position um $r_{q,alt}$. Entsprechend bestimmt das Übertragungsglied 545 aus den Eingangssignalen $t_K$, $r_{KV}$, $a_F$, $\nu_F$ und $r_F$ den Kurswinkel des Fahrzeugs nach Ablauf der Zeit $t_K$ auf der originalen Sollbahn. Das Ausgangssignal des Übertragungsgliedes 543 wird im Summierer 547 vom Ausgangssignal $\phi_{Kq}$ der Einrichtung KP subtrahiert. Das Signumglied 549 bestimmt aus dem Ausgangssignal des Summierers 547 den Vorzeichenfaktor $\gamma_q$. Entsprechend bestimmt das Signumglied 559 aus dem Ausgangssignal des Summierers 557, der das Ausgangssignal des Übertragungsgliedes 545 von der Eingangsgröße $\phi_K$ subtrahiert, den Vorzeichenfaktor $\gamma$. Der Summierer 553 subtrahiert die im Multiplizierer 561 mit dem Vorzeichenfaktor $\gamma$ multiplizierte Größe $r_K$ von der im Multiplizierer 551 mit dem Vorzeichenfaktor $\gamma_q$ multiplizierten Größe $r_{Kq}$. Außerdem wird die mit $\gamma$ multiplizierte Größe $r_K$ im Summierer 563 vom Eingangssignal $r_{mind}$ und im Summierer 565 vom negativen Eingangssignal $-r_{mind}$ subtrahiert. Das Signal $r_{q,alt}$ (Totzeitglied 525) wird im Multiplizierer 567 mit dem Ausgangssignal des Summierers 563 und im Multiplizierer 569 mit dem Ausgangssignal des Summierers 565 multipliziert. Der Dividierer 571 bildet das Ausgangssignal $r_{q,li}$ des Blocks 2.1, indem er das Ausgangssignal des Multiplizierers 567 durch das Ausgangssignal des Summierers 553 dividiert. Entsprechend dividiert der Dividierer 573 das Ausgangssignal des Multiplizierers 569 durch das Ausgangssignal des Summierers 553 und bestimmt so das Ausgangssignal $r_{q,re}$ des Blocks 2.1.

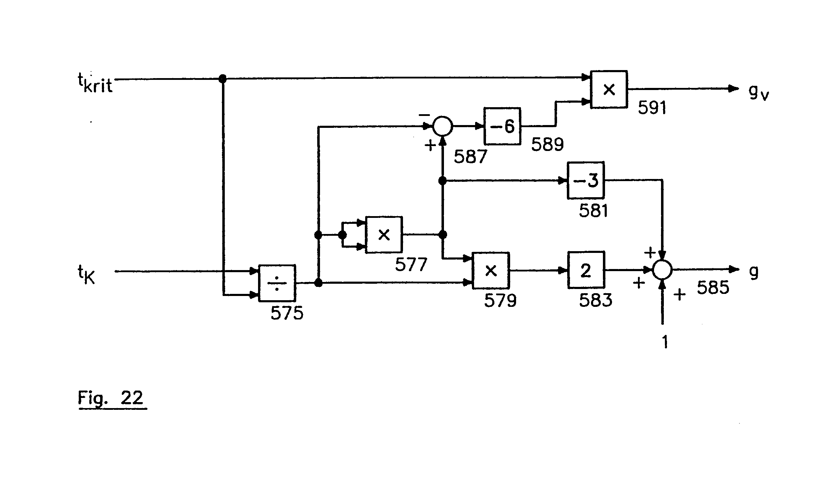

Block 2.2 (Übertragungsglied 503, Fig. 20) bestimmt abhängig von der Eingangsgröße $t_K$ und dem Parameter $t_{krit}$ den Wert g der Übertragungsfunktion und den Wert $g_v$ zur Bestimmung der Quergeschwindigkeit $v_q$. Wie in Fig. 22 dargestellt, bestimmt der Dividierer 575 das Signal $t_K/t_{krit}$, das im Multiplizierer 577 quadriert wird und dessen Quadrat im Multiplizierer 579 noch einmal mit $t_K/t_{krit}$ multipliziert wird. Der Summierer 585 bestimmt das Ausgangssignal g des Blocks 2.2, indem er das im Proportionalglied 583 mit dem Faktor 2 gewichtete Ausgangssignal des Multiplizierers 579 mit dem im Proportionalglied 581 mit dem Faktor -3 gewichteten Ausgangssignal des Multiplizierers 577 und der Konstanten 1 addiert. Der Summierer 587 subtrahiert das Ausgangssignal des Dividierers 575 vom Ausgangssignal des Multiplizierers 577. Das Ergebnis der Subtraktion wird im Proportionalglied 589 mit dem Faktor -6 gewichtet und im Multiplizierer 591 mit der Größe $t_{krit}$ multipliziert. Das Ausgangssignal des Multiplizierers 591 ist die Ausgangsgröße $g_v$ des Blocks 2.2.

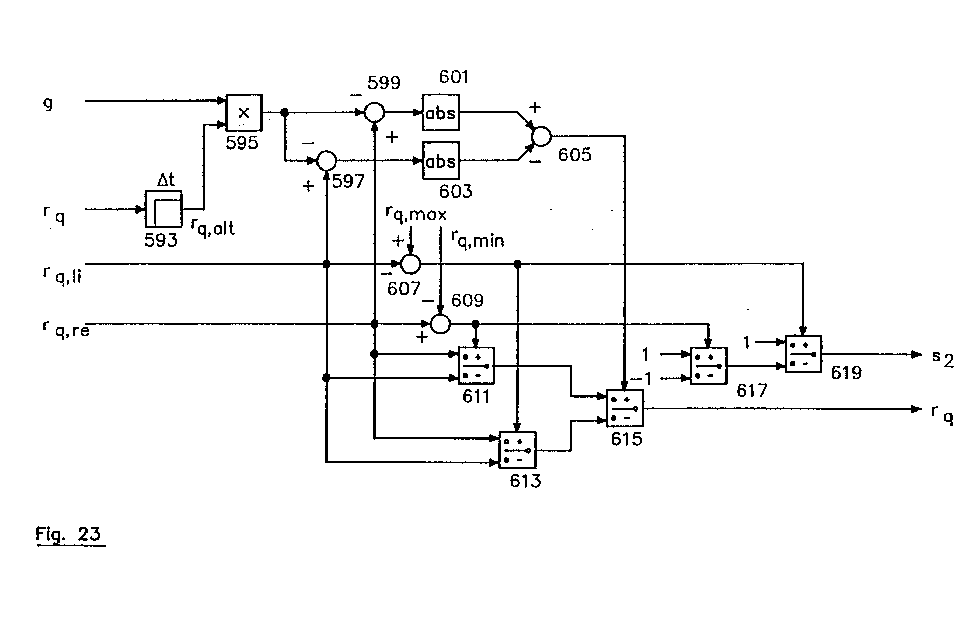

Eingangsgrößen des in Fig. 23 dargestellten Blocks 2.3, der als Übertragungsglied 505 (Fig. 20) Bestandteil der Einrichtung KV2 ist, sind die Ausgangssignale $r_{q,li}$ und $r_{q,re}$ des Blocks 2.1 und das Ausgangssignal g des Blocks 2.2 sowie das rückgekoppelte Ausgangssignal $r_q$ des Blocks 2.3. Das Totzeitglied 593 verzögert die rückgekoppelte Größe $r_q$ um einen Zeitschritt $\Delta t$ zur Größe $r_{q,alt}$, die im Multiplizierer 595 mit dem Eingangssignal g multipliziert wird und ausschließlich im Summierer 597 von der Eingangsgröße $r_{q,li}$ und im Summierer 599 von der Eingangsgröße $r_{q,re}$ subtrahiert wird. Das Absolutglied 601 bildet den Betrag des Ausgangssignals des Summierers 599 und gibt diesen auf den Summierer 605, der hiervon den im Absolutglied 603 gebildeten Betrag des Ausgangssignals des Summierers 597 subtrahiert und das Ergebnis der Subtraktion als Steuersignal auf das Schaltglied 615 gibt. Der Summierer 607 subtrahiert das Eingangssignal $T_{q,li}$ vom Parameter $r_{q,max}$. Der Summierer 609 subtrahiert den Parameter $r_{q,min}$ vom Eingangssignal $r_{q,re}$. Das Ausgangssignal des Summierers 609 ist Steuersignal der Schaltglieder 611 und 617. Wenn das Ausgangssignal des Summierers 609 positiv ist, d.h. wenn $r_{q,re}$ größer ist als $r_{q,min}$, schaltet das Schaltglied 611 die Eingangsgröße $r_{q,re}$ und das Schaltglied 617 den Wert 1 durch. Andernfalls schaltet das Schaltglied 611 die Eingangsgröße $r_{q,li}$ und das Schaltglied 617 den Wert -1 durch. Das Ausgangssignal des Summierers 607 ist Steuersignal der Schaltglieder 613 und 619. Wenn das Ausgangssignal des Summierers 607 positiv ist, d.h. $r_{q,li}$ kleiner ist als $r_{q,max}$, schaltet das Schaltglied 613 das Eingangssignal $r_{q,li}$ und das Schaltglied 619 den Wert 1 durch. Andernfalls schaltet das Schaltglied 613 das Eingangssignal $r_{q,re}$ und das Schaltglied 619 das Ausgangssignal des Schaltgliedes 617 durch. Die Größe $r_q$ ist Ausgangssignal des Schaltgliedes 615, das bei positivem Steuersignal das Ausgangssignal des Schaltgliedes 611 und sonst das Ausgangssignal des Schaltgliedes 613 durchschaltet. Das Ausgangssignal $S_2$ des Schaltgliedes 619 ist positiv, wenn $r_q$ innerhalb des Intervalls $[r_{q,min}, r_{q,max}]$ liegt.

Die Ausgangssignale $r_q$ und $S_2$ des Blocks 2.3 (Übertragungsglied 505, Fig. 20) sind Ausgangssignale der Einrichtung KV2. Das Signal $r_q$ wird im Multiplizierer 525 mit der Ausgangsgröße g des Blocks 2.2 und anschließend im Multiplizierer 513 mit dem im Sinusglied 509 bestimmten Sinus des Winkels $\nu_F$ und im Multiplizierer 515 mit dem im Cosinusglied 511 bestimmten Cosinus des Winkels $\nu_F$ multipliziert. Der Summierer 517 ermittelt die Ausgangsgröße $x_{KV2}$, indem er das Ausgangssignal des Multiplizierers 513 von der Eingangsgröße $x_F$ subtrahiert. Der Summierer 519 addiert das Ausgangssignal des Multiplizierers 515 zur Eingangsgröße $y_F$ und erhält so die Ausgangsgröße $y_{KV2}$. Das Arcustangensglied 521 bildet den Arcustangens der Größe $v_q/v_{KV}$, wobei $v_q$ das im Multiplizierer 507 bestimmte Produkt der Ausgangsgröße $r_q$ des Blocks 2.3 und der Ausgangsgröße $g_v$ des Blocks 2.2 ist. Das Ausgangssignal $\nu_{KV2}$ ergibt sich im Summierer 523 durch Addition der Ausgangsgröße des Arcustangensgliedes 521 und der Eingangsgröße $\nu_F$.

Nachdem das Fahrzeug das Hindernis mit einer normalen Positionsverschiebung $r_q$ im Sicherheitsabstand $r_{mind}$ passiert hat, führt eine Einrichtung R die Sollposition des Fahrzeuges in einem stetigen Übergang innerhalb der Zeit $t_{rück}$ auf die ursprüngliche Sollbahn zurück. Dazu wird zum Zeitpunkt der engsten Annäherung, d.h. wenn $t_K$ negativ wird und kg von 1 auf -1 umschaltet, die augenblickliche Querverschiebung $r_q$ gleich $r_{q,um}$ der Sollposition gespeichert. Während der Zeitspanne $t_{rück}$ nach dem Zeitpunkt der Umschaltung der Größe kg, der ohne Beschränkung der Allgemeinheit der folgenden Betrachtungen gleich Null gewählt wird, bestimmt die Rückführvorrichtung R die Sollposition $x_R$, $y_R$ und den Sollkurswinkel $\nu_R$ wie folgt:

$$x_R = x_F - \tilde{g}(t)\, r_{q,um}\, \sin(\nu_F)$$

$$y_R = y_F + \tilde{g}(t)\, r_{q,um}\, \cos(\nu_F)$$

$$\nu_R = \nu_F + \arctan\frac{r_{q,um}\ \tilde{g}_V}{v_{KV}}$$

mit

$$\tilde{g}(t) = 2\left(\frac{t}{t_{rück}}\right)^3 - 3\left(\frac{t}{t_{rück}}\right)^2 + 1$$

$$\tilde{g}_V = \frac{6}{t_{rück}}\left(\left(\frac{t}{t_{rück}}\right)^2 - \frac{t}{t_{rück}}\right)$$

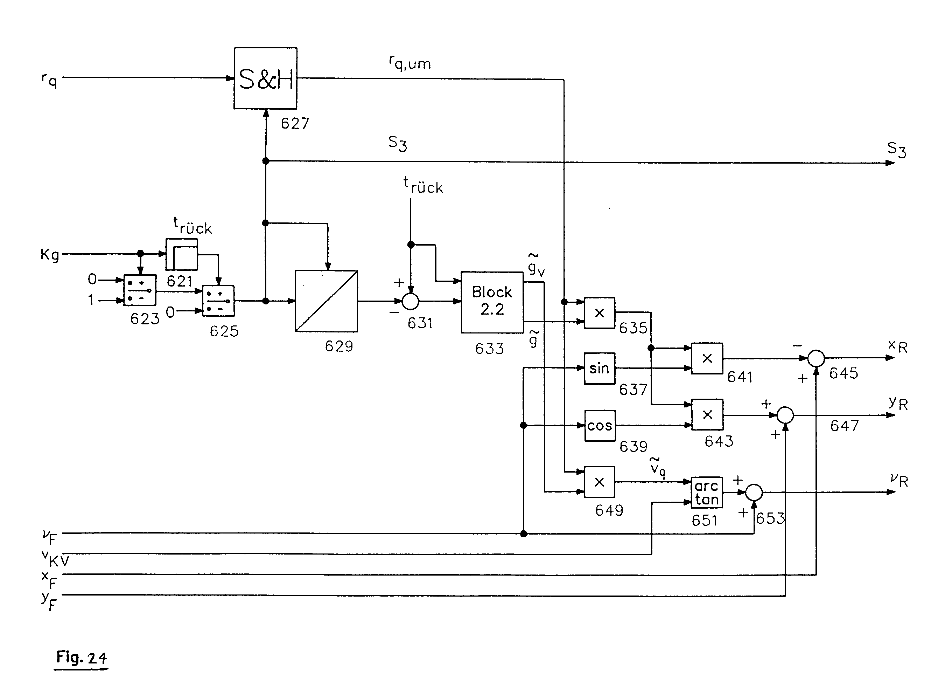

Eingangssignale der Einrichtung R (Fig. 24) zur Rückführung der Fahrzeugsollposition auf die ursprüngliche Sollbahn sind die Ausgangsgröße $r_q$ der Einrichtung KV2, die Ausgangsgröße kg der Einrichtung KE und die Signale $\nu_F$, $v_{KV}$, $x_F$ und $y_F$. Das Eingangssignal kg wird im Totzeitglied 621 um die Zeitspanne $t_{rück}$ verzögert. Die Größe kg ist Steuersignal des Schaltgliedes 623, das bei positivem kg den Wert 0 und sonst den Wert 1 durchschaltet. Das Ausgangssignal des Totzeitgliedes 621 steuert das Schaltglied 625, das bei positivem Steuersignal das Ausgangssignal des Schaltgliedes 623 und sonst den Wert 0 durchschaltet. Das mit $S_3$ bezeichnete Ausgangssignal des Schaltgliedes 625 nimmt nach dem Umschalten der Größe kg von +1 auf -1 für eine Zeitspanne $t_{rück}$ den Wert 1 an und hat sonst den Wert Null. Mit der positiven Flanke des Ausgangssignals des Schaltgliedes 625 wird der Intergrierer 629 auf den Wert 0 gesetzt und das Sample & Hold-Glied 627 tastet das Signal $r_q$ ab und hält den augenblicklichen Wert $r_{q,um}$ bis zur nächsten positiven Flanke. Der Integrierer 629 integriert das Ausgangssignal des Schaltgliedes 625 auf. Der Summierer 631 subtrahiert das Ausgangssignal des Integrierers 629 vom Parameter $t_{rück}$. Das Übertragungsglied 633 vom Typ Block 2.2 bestimmt aus der Größe $t_{rück}$ und dem Ausgangssignal des Summierers 631 die Größen $\tilde{g}$ und $\tilde{g}_v$. Das Ausgangssignal $r_{q,um}$ des Sample & Hold-Gliedes 627 wird im Multiplizierer 635 mit $\tilde{g}$ und anschließend im Multiplizierer 641 mit dem im Sinusglied 637 gebildeten Sinus des Eingangssignals $\nu_F$ bzw. im Multiplizierer 643 mit dem im Cosinusglied 639 gebildeten Cosinus des Eingangssignals $\nu_F$ multipliziert. Der Summierer 645 ermittelt die Ausgangsgröße $x_R$, indem er das Ausgangssignal des Multiplizierers 641 von der Eingangsgröße $x_F$ subtrahiert. Der Summierer 647 addiert das Ausgangssignal des Multiplizierers 643 zur Eingangsgröße $y_F$ und erhält so die Ausgangsgröße $y_R$. Das Arcustangensglied 651 bildet den Arcustangens der Größe $\tilde{v}_q/v_{KV}$, wobei $\tilde{v}_q$ das im Multiplizierer 649 gebildete Produkt aus $r_{q,um}$ und $\tilde{g}_v$ ist. Das Ausgangssignal $\nu_R$ ergibt sich im Summierer 653 durch Addition der Ausgangsgröße des Arcustangensgliedes 651 und der Eingangsgröße $\nu_F$.

## 6.4 Verfahren und Einrichtung KV3 zur Kollisionsvermeidung durch Folgen

Ziel des in Abschnitt 6.2 beschriebenen Verfahrens zur Kollisionsvermeidung durch Brems- oder Beschleunigungsmanöver ist es, ein Hindernis mit einem Mindestabstand $r_{mind}$ kollisionsfrei zu passieren.

Wie in Figur 16 anschaulich dargestellt und in Abschnitt 6.2 erläutert, können Sonderfälle auftreten, bei denen das Fahrzeug das Hindernis durch Brems- oder Beschleunigungsmanöver nicht passieren kann. In diesen Fällen muß das Fahrzeug das Hindernis durch ein Ausweichmanöver quer zur Kursrichtung passieren oder das Fahrzeug folgt dem Hindernis unter Einhaltung eines Mindestabstandes $r_{mind}$.

Um das Fahrzeug dem Hindernis unter Einhaltung eines Mindestabstandes $r_{mind}$ folgen zu lassen, wird erfindungsgemäß folgendes Verfahren verwandt:
Mit der Abweichung

$$d = r_{mind} - \sqrt{(x_F - x_H)^2 + (y_F - y_H)^2}$$

des Abstandes vom Mindestabstand $r_{mind}$ und der momentanen Relativgeschwindigkeit

$$\Delta v = v_{KV} - v_H \cos(\nu_F - \nu_H)$$

zwischen Fahrzeug und Hindernis in Kursrichtung des Fahrzeuges berechnet die Kollisionsvermeidungseinrichtung KV 3 die Beschleunigung $a_{KV3}$ zu

$$a_{KV3} = \begin{cases} -\dfrac{\Delta v^2}{2d} & \text{für } d > d_{um} \\[2em] \dfrac{\Delta v^2}{2d} & \text{für } d < -d_{um} \\[2em] -2\,\alpha\Delta v - \alpha^2 d & \text{sonst .} \end{cases}$$

Durch die Umschaltung für den Bereich $|d| < d_{um}$ werden betragsmäßig extrem hohe $a_{KV3}$ für $d \approx 0$ vermieden.

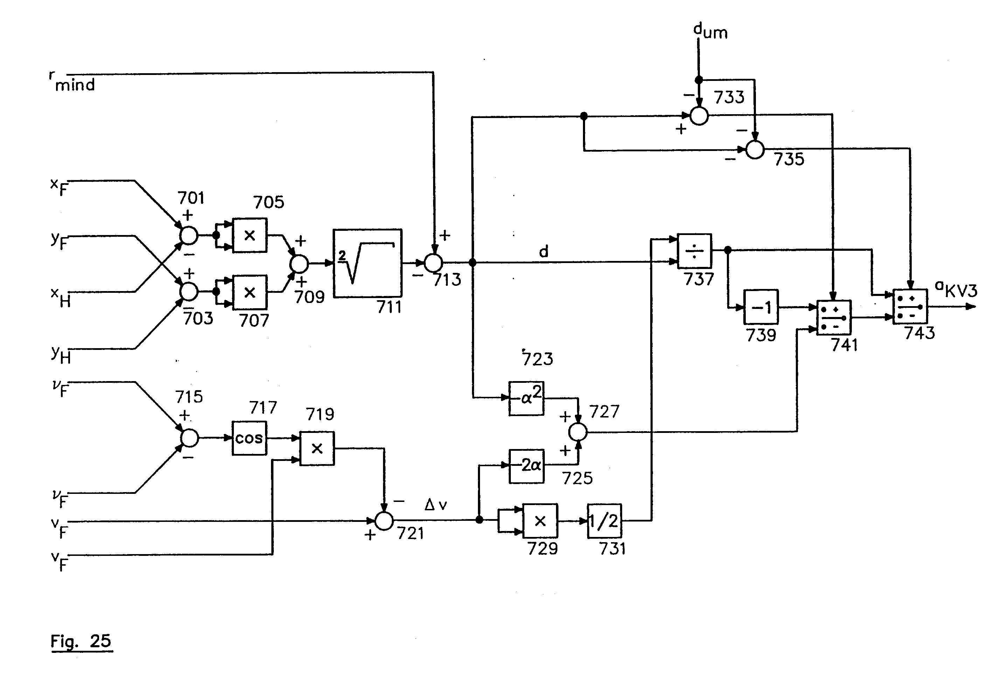

Die Einrichtung KV3 (Fig. 25) bestimmt entsprechend dem beschriebenen Verfahren die Beschleunigung $a_{KV3}$. Eingangsgrößen der Einrichtung KV3 sind die Signale $r_{mind}$, $x_F$, $y_F$, $x_H$, $y_H$, $\nu_F$, $\nu_H$, $v_{KV}$ und $v_H$.

Der Summierer 709 addiert das im Multiplizierer 705 bestimmte Quadrat der Ausgangsgröße des Summierers 701 und das im Multiplizierer 707 bestimmte Quadrat der Ausgangsgröße des Summierers 703, wobei der Summierer 701 die Eingangsgröße $x_H$ von der Eingangsgroße $x_F$ subtrahiert und der Summierer 703 die Eingangsgröße $y_H$ von der Eingangsgröße $y_F$ subtrahiert. Der Summierer 713 bildet die Größe d durch Subtraktion der im Wurzelglied 711 gebildeten Quadratwurzel des Ausgangssignals des Summierers 709 von der Eingangsgröße $r_{mind}$. Der Summierer 721 bildet die Größe $\Delta v$ durch Subtraktion des im Multiplizierer 719 bestimmten Produktes der Eingangsgröße $v_H$ mit dem Ausgangssignal des Cosinusgliedes 717 von der Eingangsgröße $v_{KV}$, wobei das Cosinusglied 717 den Cosinus des im Summierer 715 durch Subtraktion der Größe $\nu_H$ von der Größe $\nu_F$ ermittelten Differenzsignals bestimmt. Der Summierer 727 addiert die im Proportionalglied 723 mit dem Faktor $-\alpha^2$ multiplizierte Größe d zur im Proportionalglied 725 mit dem Faktor $-2\alpha$ multiplizierten Größe $\Delta v$, wobei $\alpha$ einen frei vorgebbaren Parameter darstellt. Der Dividierer 737 dividiert die im Multiplizierer 729 quadrierte und anschließend im Proportionalglied 731 mit dem Faktor 1/2 multiplizierte Größe $\Delta v$ durch das Ausgangssignal d des Summierers 713. Das Signal d wird im Summierer 733 zum Parameter $-d_{um}$ addiert und im Summierer 735 vom Parameter $-d_{um}$ subtrahiert. Das Ausgangssignal des Summierers 733 ist Steuersignal des Schaltgliedes 741, welches bei positivem Steuersignal die im Proportionalglied 739 mit -1 multiplizierte Ausgangsgröße des Dividierers 737 und ansonsten die Ausgangsgröße des Summierers 727 durchschaltet. Das Ausgangssignal des Summierers 735 ist Steuersignal des Schaltgliedes 743, welches bei positivem Steuersignal das Ausgangssignal des Dividierers 737 und ansonsten das Ausgangssignal des Schaltgliedes 741 als Ausgangsgröße $a_{KV3}$ der Einrichtung KV3 durchschaltet.

## 6.5 Ausführungsbeispiel 1 für eine Anordnung zur automatischen Kollisionsvermeidung

Dem Ausführungsbeispiel 1 liegen der Aufbau und die Gesamtstruktur der Fahrzeugführung zugrunde, wie sie in Figur 1 und 2 dargestellt und in Abschnitt 6.1 bereits erläutert wurden.

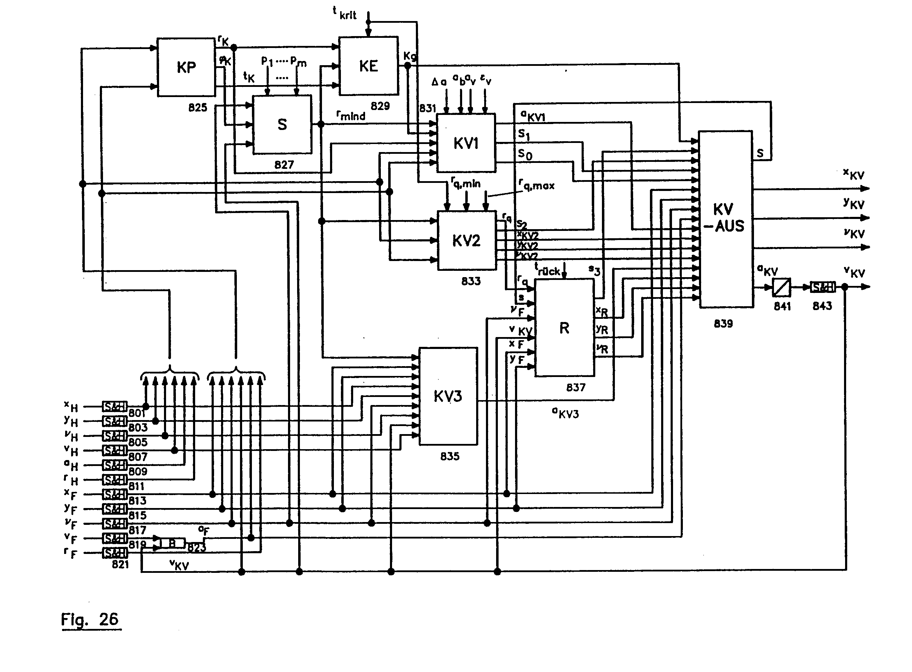

Die Anordnung (Fig. 26) setzt sich im wesentlichen aus den Einrichtungen B (823), KP (825), S (827), KE (829), KV1 (831), KV2 (833), KV3 (835), R (837) und dem Ausgangsblock KV-AUS zusammen. Eingangssignale der Anordnung sind die aus der Ebene der Sollbahnvorgabe bzw. der Hinderniserkennung vorgegebenen Größen $x_F$, $y_F$, $\nu_F$, $v_F$, $r_F$, $x_H$, $y_H$, $\nu_H$, $v_H$, $a_H$ und $r_H$. Die Eingangssignale werden von den Sample & Hold-Gliedern 801 bis 821 in Abständen $\Delta t$ abgetastet und über einen Zeitschritt $\Delta t$ konstant gehalten.

Der Block B (823) bestimmt aus der rückgekoppelten Ausgangsgröße $v_{KV}$ und dem Eingangssignal $v_F$ die Fahrzeugbeschleunigung $a_F$. Zusammen mit den Signalen $x_F,y_F$, $\nu_F$, $v_{KV}$, $rF$, $x_H$, $y_H$, $\nu_H$, $v_H$, $a_H$ und $r_H$ ist $a_F$ Eingangssignal der Vorrichtung KP (825) zur Bestimmung der Kollisionsparameter $r_K$ $\phi_K$ und $t_K$. Die Vorrichtung S (827) ermittelt aus den Größen $\phi_K$, $\nu_F$ und $v_{KV}$ den Mindestabstand $r_{mind}$. Aus den Eingangsgrößen $r_K$, $r_{mind}$ und $t_K$ sowie dem Parameter $t_{krit}$ legt die Einrichtung KE (829) zur Kollisionserkennung die Ausgangsgröße kg fest, die bei Kollisionsgefahr den Wert 1 und sonst den Wert -1 hat.

Die Kollisionsvermeidungseinrichtung KV1 (831) bestimmt aus den Eingangsgrößen $r_{mind}$, kg, $r_K$, $x_F$, $y_F$, $\nu_F$, $v_{KV}$, $a_F$, $r_F$, $x_H$, $y_H$, $\nu_H$, $v_H$, $a_H$ und $r_H$ sowie den Parametern $a_b$, $a_v$, $\epsilon_v$ und $\Delta a$ die Beschleunigung $a_{KV1}$ und die Schaltsignale $S_0$ und $S_1$.

Die Kollisionsvermeidungseinrichtung KV2 (833) ermittelt aus den Eingangsgrößen $r_{mind}$, $x_F$, $y_F$, $\nu_F$, $v_{KV}$, $a_F$, $r_F$, $x_H$, $y_H$, $\nu_H$, $v_H$, $a_H$, $r_H$ und den Parametern $t_{krit}$,$r_{q,min}$ und $r_{q,max}$ die Querpositionsverschiebung $r_q$, das Schaltsignal $S_2$, die Position $x_{KV2}$, $y_{KV2}$ und den Kurswinkel $\nu_{KV2}$. Die Kollisionsvermeidungseinrichtung KV3 (835) bestimmt aus den Eingangsgrößen $r_{mind}$, $x_F$, $y_F$, $x_H$, $y_H$, $\nu_F$, $\nu_H$, $v_{KV}$ und $v_H$ die Beschleunigung $a_{KV3}$. Die Einrichtung R (837) ermittelt aus den Größen $r_q$, S, $\nu_F$, $v_{KV}$, $x_F$ und $y_F$ das Schaltsignal $S_3$, die Position $x_R$, $y_R$ und den Kurswinkel $\nu_R$, wobei das Eingangssignal S der Einrichtung KV3 Ausgangssignal der Einrichtung KV-AUS ist und das Eingangssignal kg in Figur 24 ersetzt. Sämtliche Ausgangsgrößen der Einrichtungen KE (829), KV1 (831), KV2 (833), KV3 (835) und R (837) und zusätzlich die Signale $x_F$, $y_F$, $\nu_F$ und $a_F$ sind Eingangsgrößen der Einrichtung KV-AUS, die die Ausgangsgrößen S, $x_{KV}$, $y_{KV}$, $\nu_{KV}$ und $a_{KV}$ bestimmt. Das Schaltsignal S wird auf den Eingang der Einrichtung R zurückgeführt. Die Ausgangsgröße $v_{KV}$ der Anordnung wird durch Aufintegration (Integrierer 841) und anschließendes Abtasten in Zeitschritten $\Delta t$ und Halten über einen Zeitschritt $\Delta t$ (Sample & Hold-Glied 843) aus der Größe $a_{KV}$ gebildet. Die Signale $x_{KV}$, $y_{KV}$, $\nu_{KV}$ und $v_{KV}$ werden als Ausgangssignale der Kollisionsvermeidungsanordnung an die Ebene der Regelung weitergegeben.

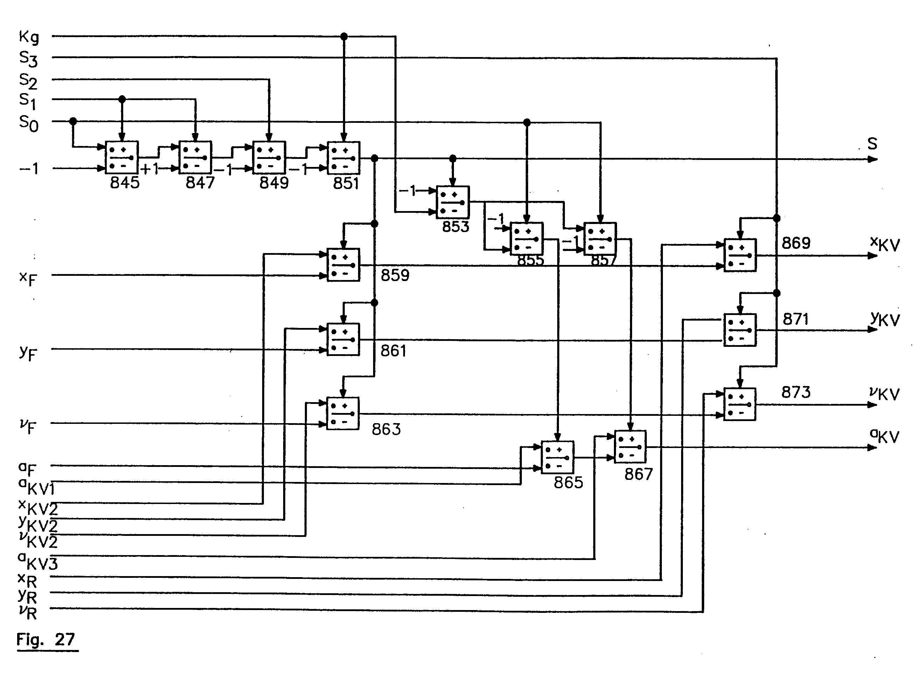

Der Aufbau der Einrichtung KV-AUS ist in Figur 27 dargestellt. Das Eingangssignal $S_1$ der Einrichtung KV-AUS ist Steuersignal der Schaltglieder 845 und 847, wobei Schaltglied 845 bei positivem $S_1$ das Eingangssignal $S_0$ und Schaltglied 847 das Ausgangssignal des Schaltgliedes 845 durchschaltet. Bei negativem $S_1$ schaltet Schaltglied 845 den Wert -1 und Schaltglied 847 den Wert $+1$ durch. Das Ausgangssignal des Schaltgliedes 847 nimmt den Wert 1 an, wenn $S_1$ negativ ist oder $S_1$ positiv und $S_0$ positiv ist. Das Signal $S_2$ ist Steuersignal des Schaltgliedes 849, welches bei positivem Steuersignal das Ausgangssignal des Schaltgliedes 847 und sonst den Wert -1 durchschaltet. Das Signal kg ist Steuersignal des Schaltgliedes 851, welches bei positivem Steuersignal das Ausgangssignal des Schaltgliedes 849 und sonst den Wert -1 durchschaltet. Das Ausgangssignal des Schaltgliedes 851 ist Ausgangssignal S der Vorrichtung KV-AUS. Bei positivem S wird die Kollision durch ein Ausweichmanöver quer zur Kursrichtung vermieden (KV2). Bei negativem S wird im Falle von Kollisionsgefahr ein Brems- oder Beschleunigungsmanöver durchgeführt (KV1, KV3). S ist Steuersignal der Schaltglieder 859, 861, 863 und 853. Bei positivem S schaltet Schaltglied 859 das Signal $x_{KV2}$, Schaltglied 861 das Signal $y_{KV2}$, Schaltglied 863 das Signal $\nu_{KV2}$ und Schaltglied 853 den Wert -1 durch. Bei negativem S schaltet Schaltglied 859 das Signal $x_F$, Schaltglied 861 das Signal $y_F$, Schaltglied 863 das Signal $\nu_F$ und Schaltglied 853 das Signal kg durch. Das Signal $S_0$ ist Steuersignal der Schaltglieder 855 und 857, wobei das Schaltglied 855 bei positivem $S_0$ den Wert -1 und sonst das Ausgangssignal des Schaltgliedes 853 durchschaltet und Schaltglied 857 bei positivem $S_0$ das Ausgangssignal des Schaltgliedes 853 und sonst den Wert -1 durchschaltet. Das Ausgangssignal des Schaltgliedes 855 steuert Schaltglied 865, welches bei positivem Steuersignal das Signal $a_{KV1}$ und sonst das Signal $a_F$ durchschaltet. Das Ausgangssignal des Schaltgliedes 857 steuert das Schaltglied 867, welches bei positivem Steuersignal das Signal $a_{KV3}$ und sonst das Ausgangssignal des Schaltgliedes 865 durchschaltet. Das Eingangssignal $S_3$ ist Steuersignal der Schaltglieder 869, 871 und 873, wobei bei positivem $S_3$ vom Schaltglied 869 das Signal $x_R$, vom Schaltglied 871 das Signal $y_R$ und vom Schaltglied 873 das Signal $\nu_R$ und bei negativem $S_3$ vom Schaltglied 869 das Ausgangssignal des Schaltgliedes 859, vom Schaltglied 871 das Ausgangssignal des Schaltgliedes 861 und vom Schaltglied 873 das Ausgangssignal des Schaltgliedes 863 durchgeschaltet werden.

Die Beschaltung der Schaltglieder 845, 847 und 849 ist so gewählt, daß ein Ausweichmanöver quer zur Kursrichtung nur dann durchgeführt wird, wenn $S_2$ positiv ist (d.h. es steht ein genügend großes Intervall [$r_{q,min}$, $r_{q,max}$] für seitliche Ausweichmanöver zur Verfügung) und wenn eine Kollision durch Brems- oder Beschleunigungsmanöver nicht vermieden werden kann ($S_1$ negativ) oder das Hindernis hierbei nicht passiert wird ($S_1$ positiv und $S_0$ positiv). Ansonsten wird eine Kollision durch Brems- oder Beschleunigungsmanöver vermieden.

Durch Abänderung der Einrichtung KV-AUS dergestalt, daß die Schaltglieder 845, 847 und 849 ersatzlos wegfallen und die Eingangsgröße $S_2$ direkt auf den "+" Eingang des Schaltgliedes 851 geschaltet ist, wird eine Kollision bei positivem $S_2$ immer durch ein seitliches Ausweichmanöver vermieden.

### 6.6 Vereinfachtes Verfahren und Einrichtung zur Kollisionsvermeidung

Mit Hilfe des in Abschnitt 6.1.2 beschriebenen Verfahrens, das der Einrichtung KP (Fig. 13) zugrunde liegt, werden die noch verbleibende Zeit $t_K$ bis zur engsten Annäherung zwischen Fahrzeug und Hindernis sowie der Abstand $r_K$ und der Winkel $\phi_K$ der engsten Annäherung bestimmt. Anhand der Größen $r_K$ und $t_K$ legt die Einrichtung KE zur Kollisionserkennung unter Berücksichtigung des Mindestabstandes $r_{mind}$ und der Zeitkonstanten $t_{krit}$ die Größe kg fest, die angibt, ob Kollisionsgefahr besteht.

Dem vereinfachten Verfahren zur Kollisionsvermeidung liegt die Idee zugrunde, die Einhaltung des Mindestabstandes $r_{mind}$ zum Zeitpunkt der engsten Annäherung dadurch zu sichern, daß die Sollposition des Fahrzeugs innerhalb der noch verbleibenden Zeit $t_K$ gegenüber der ursprünglichen Sollposition um die Länge

$$\Delta r = r_{mind} - r_K$$

in Richtung des Winkels $\phi_K$ verschoben wird. Durch die Positionsverschiebung unter dem Winkel $\phi_K$ wird die Lage in genau der Richtung geändert, die die größte Verbesserung des Abstandes der engsten Annäherung erwarten läßt. Im Gegensatz zu der Positionsverschiebung quer zur Sollbahn, wie sie in Abschnitt 6.3 beschrieben wird, ist bei einer Positionsverschiebung unter dem Winkel $\phi_K$ auch ein Anteil längs zur Kursrichtung enthalten. Die Verschiebung um $\Delta r$ geschieht in einem stetigen Übergang mittels einer Gewichtungsfunktion $g(t_K)$.

$$g(t_K) = 2\left(\frac{t_K}{t_{krit}}\right)^3 - \left(\frac{t_K}{t_{krit}}\right)^2 + 1$$

Für die neue Sollposition ergibt sich

$$x_{KV4} = x_F + g(t_K)\,\Delta_r\,\cos\phi_K$$
$$y_{KV4} = y_F + g(t_K)\,\Delta r\,\sin\phi_K\,.$$

Der neue Kurswinkel ergibt sich mit

$$g_V = -\frac{6}{t_{krit}}\left(\frac{t_K^2}{t_{krit}^2} - \frac{t_K}{t_{krit}}\right)$$

als

$$\nu_{KV4} = \arctan\frac{v_{KV}\sin\nu_F + \Delta r\,g_V\sin\varphi_K}{v_{KV}\cos\nu_F + \Delta r\,g_V\cos\varphi_K}\,.$$

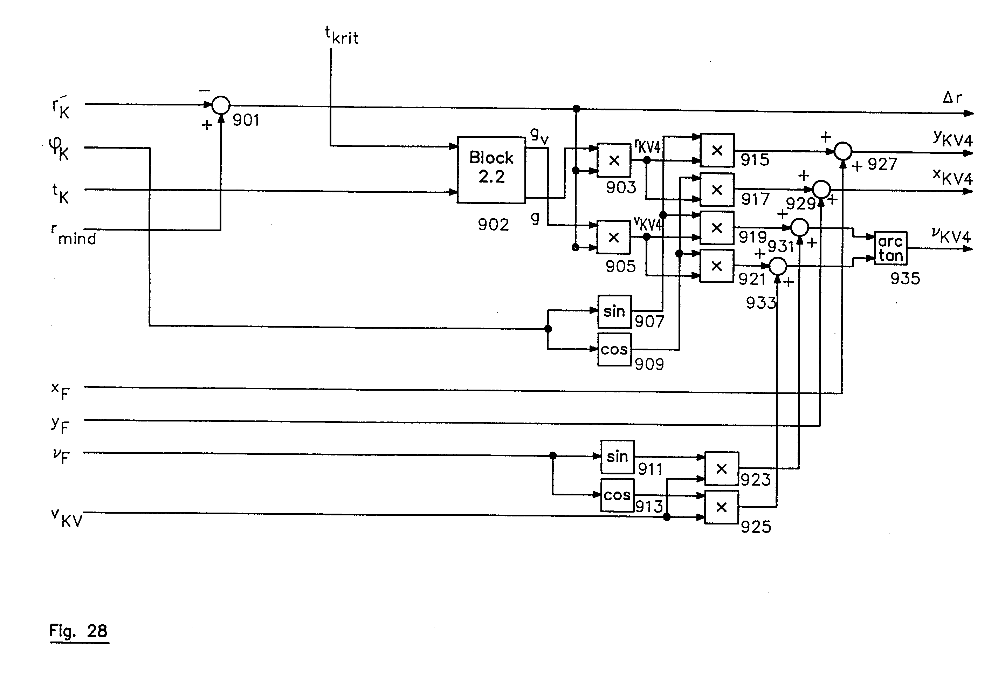

Die Einrichtung KV4 zur Kollisionsvermeidung nach dem beschriebenen Verfahren ist in Fig. 28 dargestellt. Der Summierer 901 bildet die Größe $\Delta r$, indem er das Eingangssignal $r_K$ vom Eingangssignal $r_{mind}$ subtrahiert. Die Größe $\Delta r$ wird im Multiplizierer 903 mit dem Ausgangssignal g und im Multiplizierer 905 mit dem Ausgangssignal $g_v$ des Übertragungsgliedes 902 vom Typ Block 2.2 multipliziert, wobei das Übertragungsglied 902 in der in Fig. 2.2 dargestellten und in Abschnitt 6.3 beschriebenen Weise aufgebaut ist und als Eingangsgrößen das Signal $t_K$ und den Parameter $t_{krit}$ besitzt. Die Ausgangsgröße $r_{KV4}$ des

Multiplizierers 903 wird im Multiplizierer 915 mit dem im Sinusglied 907 bestimmten Sinus der Eingangsgröße $\phi_K$ und im Multiplizierer 917 mit dem Cosinusglied 909 bestimmten Cosinus des Winkels $\phi_K$ multipliziert. Entsprechend wird die Ausgangsgröße $v_{KV4}$ des Multiplizierers 905 im Multiplizierer 919 mit dem Sinus des Winkels $\phi_K$ und im Multiplizierer 921 mit den, Cosinus des Winkels $\phi_K$ multipliziert. Das Eingangssignal $v_{KV}$ wird im Multiplizierer 923 mit dem im Sinusglied 911 gebildeten Sinus des Winkels $v_F$ und im Multiplizierer 925 mit dem im Cosinusglied 913 gebildeten Cosinus des Winkels $v_F$ multipliziert. Im Summierer 927 wird die Größe $y_{KV4}$ durch Addition des Ausgangssignals des Multiplizierers 915 und des Eingangssignals $y_F$ bestimmt. Entsprechend bestimmt der Summierer 929 die Größe $x_{KV4}$ durch Addition des Ausgangssignals des Multiplizierers 917 und des Eingangssignals $x_F$. Das Arcustangensglied 935 ermittelt den Winkel $v_{KV4}$ mit dem Ausgangssignal des Summierers 931 als Gegenkathete und dem Ausgangssignal des Summierers 933 als Ankathete, wobei der Summierer 931 das Ansgangssignal des Multiplizierers 923 zum Ausgangssignal des Multiplizierers 919 addiert und der Summierer 933 das Ausgangssignal des Multiplizierers 925 zum Ausgangssignal des Multiplizierers 921 addiert.

Nachdem das Fahrzeug das Hindernis mit einer um $\Delta r$ unter dem Winkel $\phi_K$ verschobenen Position im Sicherheitsabstand $r_{mind}$ passiert hat, führt eine Einrichtung R4 die Sollposition des Fahrzeuges in einem stetigen Übergang innerhalb der Zeit $t_{rück}$ auf die ursprüngliche Sollbahn zurück. Dazu wird zum Zeitpunkt der engsten Annäherung, d.h. wenn $t_K$ negativ wird und kg von 1 auf -1 umschaltet, die augenblickliche Positionsverschiebung $g(t_K)\Delta r$ gleich $r_{KV4,um}$ der Sollposition und der augenblickliche Winkel $\phi_K$ gleich $\phi_{K,um}$ gespeichert. Während der Zeitspanne $t_{rück}$ nach dem Zeitpunkt der Umschaltung der Größe kg, der ohne Beschränkung der Allgemeinheit der folgenden Betrachtungen als gleich Null betrachtet wird, bestimmt die Rückführeinrichtung R4 die Sollposition $x_{R4}$, $y_{R4}$ und den Sollkurswinkel $v_{R4}$ wie folgt:

$$x_{R4} = x_F + \tilde{g}(t)\, r_{KV4,um}\, \cos(\varphi_{K,um})$$

$$y_{R4} = y_F + \tilde{g}(t)\, r_{KV4,um}\, \sin(\varphi_{K,um})$$

$$v_{R4} = \arctan \frac{v_{KV}\, \sin v_F - \tilde{g}_v\, r_{KV4,um}\, \sin \varphi_{K,um}}{v_{KV}\, \cos v_F - \tilde{g}_v\, r_{KV4,um}\, \cos \varphi_{K,um}}$$

mit

$$\tilde{g}(t) = 2\left(\frac{t}{t_{rück}}\right)^3 - 3\left(\frac{t}{t_{rück}}\right)^2 + 1$$

$$\dot{\tilde{g}}_v = -\frac{6}{t_{rück}}\left(\left(\frac{t}{t_{rück}}\right)^2 - \frac{t}{t_{rück}}\right)$$

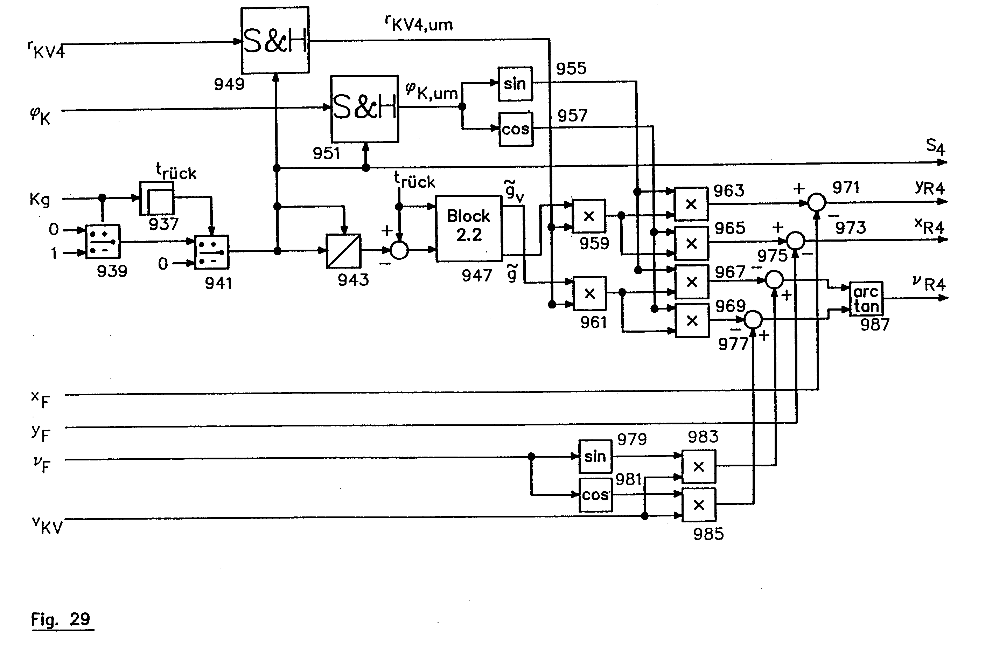

Eingangssignale der Einrichtung R4 (Fig. 29) zur Rückführung der Fahrzeugsollposition auf die ursprüngliche Sollbahn sind die Ausgangsgrößen $r_{KV4}$ und $\phi_{KV4}$ der Einrichtung KV4, die Ausgangsgröße kg der Einrichtung KE und die Signale $v_F$, $v_{KV}$, $x_F$ und $y_F$. Das Eingangssignal kg wird im Totzeitglied 937 um die Zeitspanne $t_{rück}$ verzögert. Die Größe kg ist Steuersignal des Schaltgliedes 939, das bei positivem kg den Wert 0 und sonst den Wert 1 durchschaltet. Das Ausgangssignal des Totzeitgliedes 937 steuert das Schaltglied 941, das bei positivem Steuersignal das Ausgangssignal des Schaltgliedes 939 und sonst den Wert 0 durchschaltet. Das mit $S_4$ bezeichnete Ausgangssignal des Schaltgliedes 941 nimmt nach dem Umschalten der Größe kg von +1 auf -1 für eine Zeitspanne $t_{rück}$ den Wert 1 an und hat sonst den Wert Null. Mit der positiven Flanke des Ausgangssignals des Schaltgliedes 941 wird der Intergrierer 943 auf den Wert 0 gesetzt und das Sample & Hold-Glied 949 tastet das Signal $r_{KV4}$ ab und hält den augenblicklichen Wert $r_{KV4,um}$ bis zur nächsten positiven Flanke. Entsprechend tastet das Sample & Hold-Glied 951 bei positiver Flanke des Signals $S_4$ die Eingangsgröße $\phi_K$ ab und hält den augenblicklichen Wert $\phi_{K,um}$ bis zur nächsten positiven Flanke. Der Integrierer 943 integriert das Ausgangssignal des Schaltgliedes 941 auf. Der Summierer 945 subtrahiert das Ausgangssignal des Integrierers 943 vom Parameter $t_{rück}$. Die Größe $r_{KV4,um}$ wird im Multiplizierer 959 mit dem Ausgangssignal $\tilde{g}$ und im Multiplizierer 961 mit dem Ausgangssignal $\tilde{g}_v$ des Übertragungsgliedes 947 vom Typ Block 2.2 multipliziert, wobei das Übertragungsglied 947 in der in Fig. 22 dargestellten und in Abschnitt 6.3 beschriebenen Weise aufgebaut ist und als Eingangsgrößen das Ausgangssignal des Summierers 945 und den Parameter $t_{rück}$ besitzt. Die Ausgangsgröße des Multiplizierers 959 wird im Multiplizierer 963 mit dem im Sinusglied 955 bestimmten Sinus der Größe $\phi_{K,um}$ und im Multiplizierer 965 min dem im Cosinusglied 957 bestimmten Cosinus der Größe $\phi_{K,um}$ multipliziert. Entsprechend wird die Ausgangsgröße des Multiplizierers 961 im Multiplizierer 967 mit dem Sinus der Größe $\phi_{K,um}$ und im Multiplizierer 969 mit dem Cosinus der Größe $\phi_{K,um}$ multipliziert. Das Eingangssignal $v_{KV}$ wird im Multiplizierer 983 mit dem im Sinusglied 979 gebildeten Sinus des Winkels $\nu_F$ und im Multiplizierer 985 mit dem im Cosinusglied 981 gebildeten Cosinus des Winkels $\nu_F$ multipliziert. Im Summierer 971 wird die Größe $y_{R4}$ durch Addition des Ausgangssignals des Multiplizierers 963 und des Eingangssignals $y_F$ bestimmt. Entsprechend bestimmt der Summierer 973 die Größe $x_{R4}$ durch Addition des Ausgangssignals des Multiplizierers 965 und des Eingangssignals $x_F$. Das Arcustangensglied 987 ermittelt den Winkel $\nu_{R4}$ mit dem Ausgangssignal des Summierers 975 als Gegenkathete und dem Ausgangssignal des Summierers 977 als Ankathete, wobei der Summierer 975 das Ausgangssignal des Multiplizierers 967 vom Ausgangssignal des Multiplizierers 983 subtrahiert und der Summierer 977 das Ausgangssignal des Multiplizierers 969 vom Ausgangssignal des Multiplizierers 985 subtrahiert.

## 6.7 Ausführungsbeispiel 2 für eine Anordnung zur automatischen Kollisionsvermeidung

Dem Ausführungsbeispiel 2 liegen der Aufbau und die Gesamtstruktur der Fahrzeugführung zugrunde, wie sie in Fig. 1 und 2 dargestellt und in Abschnitt 6.1 bereits erläutert wurden.

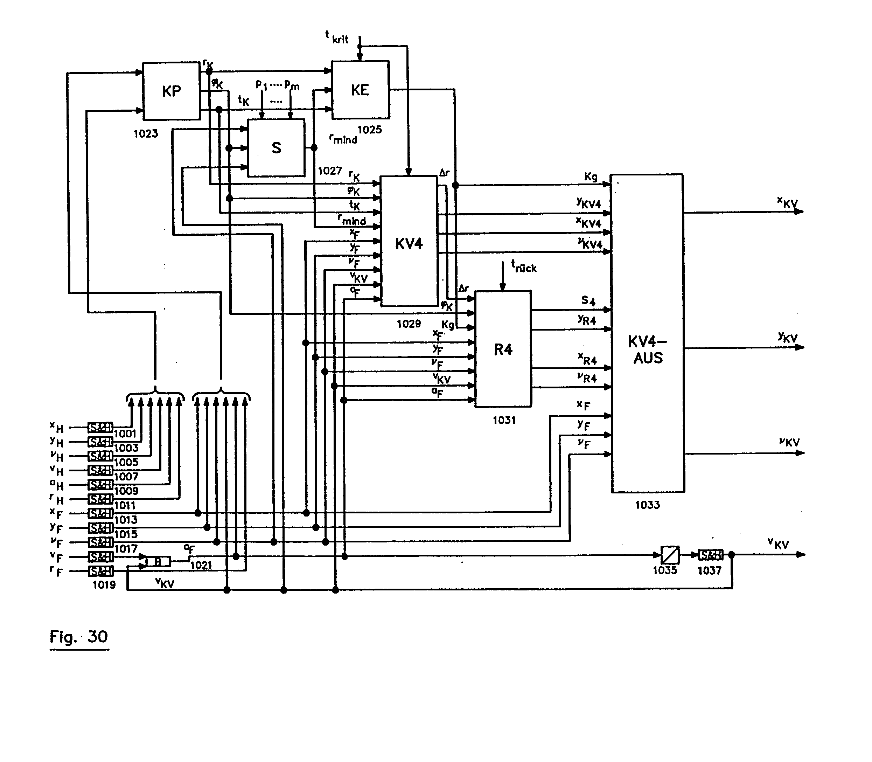

Die Anordnung (Fig. 30) setzt sich im wesentlichen aus den Einrichtungen B (1021), KP (1023), S (1027), KE (1025), KV4 (1029), R4 (1031) und dem Ausgangsblock KV4 AUS zusammen. Eingangssignale der Anordnung sind die aus der Ebene der Sollbahnvorgabe bzw. der Hinderniserkennung vorgegebenen Größen $x_F$, $y_F$, $\nu_F$, $v_F$, $r_F$, $x_H$, $y_H$, $\nu_H$, $v_H$, $a_H$ und $r_H$. Die Eingangssignale werden von den Sample & Hold-Gliedern 1001 bis 1019 in Abständen $\Delta t$ abgetastet und über einen Zeitschritt $\Delta t$ konstant gehalten.

Der Block B (1021) bestimmt aus der rückgekoppelten Ansangsgröße $v_{KV}$ und dem Eingangssignal $v_F$ die Fahrzeugbeschleunigung $a_F$. Zusammen mit den Signalen $x_F, y_F$, $\nu_F$, $v_{KV}$, $r_F$, $x_H$, $y_H$, $\nu_H$, $v_H$, $a_H$ und $r_H$ ist $a_F$ Eingangssignal der Einrichtung KP (1023) zur Bestimmung der Kollisionsparameter $r_K$, $\phi_K$ und $t_K$. Die Einrichtung S (1027) ermittelt aus den Größen $\phi_K$, $\nu_F$ und $r_{KV}$ den Mindestabstand $r_{mind}$. Aus den Eingangsgrößen $r_K$, $r_{mind}$ und $t_K$ sowie dem Parameter $t_{krit}$ legt die Einrichtung KE (1025) zur Kollisionserkennung die Ausgangsgröße kg fest, die bei Kollisionsgefahr den Wert 1 und sonst den Wert -1 hat.

Die Kollisionsvermeidungseinrichtung KV4 (1029) bestimmt aus den Eingangsgrößen $r_K$, $\nu_K$, $t_K$, $r_{mind}$, $x_F$, $y_F$, $\nu_F$, $v_{KV}$ und $a_F$ die Positionsverschiebung $\Delta r$, die Position $x_{KV4}$, $y_{KV4}$ und den Kurswinkel $\nu_{KV4}$.

Die Einrichtung R4 (1031) ermittelt aus den Größen $\Delta r$, $\phi_K$, kg, $x_F$, $y_F$, $\nu_F$, $v_{KV}$ und $a_F$ das Schaltsignal $S_4$, die Position $x_{R4}$, $y_{R4}$ und den Kurswinkel $\nu_{R4}$. Sämtliche Ausgangsgrößen der Einrichtungen KE (1025), KV4 (1029) und R4 (1031) und zusätzlich die Signale $x_F$, $y_F$ und $\nu_F$ sind Eingangsgrößen der Einrichtung KV4-AUS, die die Ausgangsgrößen $x_{KV}$, $y_{KV}$ und $\nu_{KV}$ bestimmt. Die Ausgangsgröße $v_{KV}$ der Anordnung wird durch Aufintegration (Integrierer 1035) und anschließendes Abtasten in Zeitschritten $\Delta t$ und Halten über einen Zeitschritt (Sample & Hold-Glied 1037) aus der Ansangsgröße $a_F$ der Einrichtung B gebildet. Die Signale $x_{KV}$, $y_{KV}$, $\nu_{KV}$ und $v_{KV}$ werden als Ausgangssignale der Kollisionsvermeidungsanordnung an die Ebene der Regelung weitergegeben.

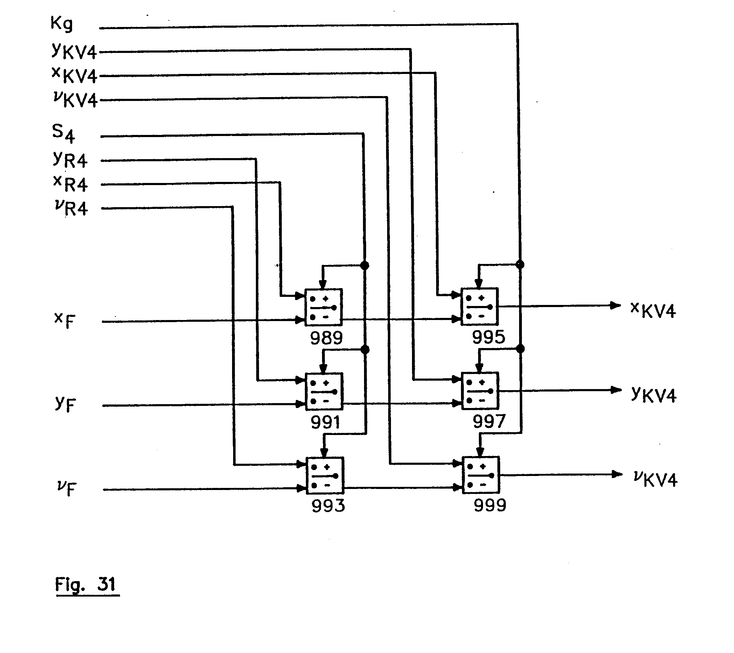

Der Aufbau der Einrichtung KV4-AUS (1033) ist in Fig. 31 dargestellt. Eingangsgrößen der Vorrichtung KV4-AUS sind die Signale kg, $y_{KV4}$, $x_{KV4}$, $\nu_{KV4}$, $S_4$, $y_{R4}$, $x_{R4}$ und $\nu_{R4}$. Das Eingangssignal $S_4$ steuert die Schaltglieder 989, 991 und 993, wobei bei positivem $S_4$ Schaltglied 989 die Größe $X_{R4}$, Schaltglied 991 die Größe $y_{R4}$ und Schaltglied 993 die Größe $\nu_{R4}$ und bei negativem $S_4$ Schaltglied 989 die Größe $x_F$, Schaltglied 991 die Größe $y_F$ und Schaltglied 993 die Grüße $\nu_F$ durchschaltet. Das Eingangssignal kg steuert die Schaltglieder 995, 997 und 999, wobei bei positivem kg Schaltglied 995 die Größe $X_{KV4}$, Schaltglied 997 die

Größe $y_{KV4}$ und Schaltglied 999 die Größe $\nu_{KV4}$ durchschaltet. Bei negativen, kg schaltet Schaltglied995 das Ausgangssignal von Schaltglied 989, Schaltglied 997 das Ausgangssignal von Schaltglied 991 und Schaltglied 999 das Ausgangssignal von Schaltglied 993 durch.

**Patentansprüche**

1. Verfahren zur automatischen Kollisionsvermeidung für automatisch fuhrbare Fahrzeuge für Echtzeitbetrieb, bei dem die Fahrzeug- und die Hindernisbahn vorausschauend extrapoliert und der Abstand und die Zeit der voraussichtlich engsten Annäherung bestimmt werden, wobei in Abhängigkeit des Abstandes der engsten Annäherung eine eventuelle Kollisionsgefahr anhand von vorwählbaren Parametern feststell- und eine kollisionskursändernde Ansteuerung der Fahrzeug-Stellglieder durchführbar ist, wobei für das Fahrzeug zumindest die Ist-Größe für die Position, die Geschwindigkeit und den Lenkwinkeleinschlag und für das bewegte Hindernis zumindest die Ist-Größe für die Position, die Geschwindigkeit und der Kurswinkel ermittelt und/oder bereitgestellt werden, **gekennzeichnet durch** ein mehrstufig hierarchisch strukturiertes Verfahren, bei dem aus den gegebenenfalls vom Fahrer zumindest vorgegebenen Sollsignalen bzw. -größen für den Sollkurswinkel und die Sollgeschwindigkeit und aus den über eine sensorische Fahrbahn- und Fahrzeugerfassung erfaßten Signalen und Daten in einer ersten Hierarchiestufe die aktuellen Sollsignale und Solldaten bezüglich der Sollposition, des Sollkurswinkels, der Sollgeschwindigkeit und der Sollbeschleunigung erzeugt und diese Solisignale und -daten und die durch am Fahrzeug angebrachte Sensoren ermittelten und/oder ganz oder teilweise durch eine externe Einrichtung mittels Datenübertragung zum Fahrzeug übermittelten und/oder ganz oder teilweise aus der zeitlichen Änderung der Fahrzeugsollposition und der Hindernisposition bestimmten aktuellen Daten über die Position, den Kurswinkel, die Geschwindigkeit und die Beschleunigung an eine eine Kollisionsvermeidung bewirkende zweite Hierarchiestufe weitergeleitet werden, wobei eine Kollisionsgefahr in Abhängigkeit von bezüglich des Abstandes der engsten Annäherung einerseits und der noch verbleibenden Zeit bis zur engsten Annäherung andererseits vorwählbaren Parametern feststellbar und bei Bedarf entsprechende Kollisionsvermeidungs-Sollsignale und -daten für eine gegebenenfalls geänderte Kollisionsvermeidungs-Sollposition, einen gegebenenfalls geänderten Kollisionsvermeidungs-Sollkurswinkel und/oder die Kollisionsvermeidungs-Sollgeschwindigkeit und /oder die -sollbeschleunigung ohne Rückwirkung auf die in der ersten Hierarchiestufe ermittelten Sollsignale bzw. -größen derart erzeugt werden, daß das Fahrzeug das Hindernis unter Einhaltung eines Mindestabstandes durch Einleitung eines Brems- oder Beschleunigungsmanövers, durch Überführung in eine seitlich von der eigentlichen Sollbahn abweichende kollisionsfreie Sollbahn passiert oder dem Hindernis unter Einhaltung eines Mindestabstandes folgt, und daß schließlich die ursprünglichen oder im Falle einer Kollisionsgefahr in der zweiten Hierarchiestufe erzeugten Kollisionsvermeidungs-Sollbahnsignale bzw. -daten einer eine Einrichtung zur Fahrzeugregelung umfassenden dritten Hierarchiestufe zugeführt werden, über die die Stellglieder für die Lenkung und /oder den Antrieb und die Bremsanlage des Fahrzeuges betätigt werden.

2. Verfahren nach Anspruch 1, **dadurch gekennzeichnet,** daß in der ersten Hierarchiestufe auch noch die aktuellen Sollsignale und Solldaten des Krümmungsradius bezüglich der extrapolierten Sollbahn des Fahrzeugs erzeugt und zusammen mit den anderen Sollsignalen und -daten und den durch am Fahrzeug angebrachten Sensoren ermittelten und /oder ganz oder teilweise durch eine externe Einrichtung mittels Datenübertragung zum Fahrzeug übermittelten und /oder ganz oder teilweise aus der zeitlichen Änderung der Fahrzeugsollposition und der Hindernisposition bestimmten aktuellen Daten über den Krümmungsradius der Bahn des Hindernisses an die eine Kollisionsvermeidung bewirkende zweite Hierarchiestufe weitergeleitet werden, in der vorzugsweise zusätzlich der Winkel der engsten Annäherung auf den extrapolierten Bahnen bestimmt und ermittelt wird.

3. Verfahren nach Anspruch 1 oder 2, **dadurch gekennzeichnet,** daß zur näherungsweisen Bestimmung der noch verbleibenden Zeitspanne bis zur engsten Annäherung zwischen Fahrzeug und Hindernis zusätzlich die aktuellen Signale bzw. Daten der in der ersten Hierarchiestufe ermittelbaren Krümmungsradien der Fahrzeugsollbahn und die aktuellen Signale bzw. Daten der Hindernisbahn der zweiten Hierarchiestufe zur kreisbogenförmigen Extrapolation der Fahrzeugsollbahn und der Hindernisbahn zugeführt werden, wobei das für die geradenförmige Extrapolation der Fahrzeugsollbahn und der Hindernisbahn zugrundegelegte Verfahren zur Bestimmung des Zeitpunktes der engsten Annäherung bezüglich eines fiktiven Fahrzeuges und eines fiktiven Hindernisses auf geradenförmigen Tangentenbahnen an den kreisförmigen Extrapolationen der Fahrzeugsollbahn und der Hindernisbahn durchgeführt wird, wobei die Signale bzw. Daten für die Sollgeschwindigkeit des fiktiven Fahrzeuges und die Geschwindigkeit des fiktiven Hindernisses den Geschwindigkeiten des realen Fahrzeuges und des realen Hindernisses entsprechen und die Tangentenbahn so an die kreisförmigen Bahnextrapolationen angelegt werden, daß sich das fiktive Fahrzeug und das reale Fahrzeug bzw. das fiktive Hindernis und das reale Hindernis zu einem aus der Kollisions-Vorgeschichte bekannten Zeitpunkt der zu erwartenden engsten Annäherung zwischen Fahrzeug und Hindernis im jeweiligen Berührungspunkt der kreisförmigen Bahnextrapolation und der Tangentenbahn treffen, und die so ermittelte verbleibende Zeitspanne bis zur engsten Annäherung in die Ermittlung der gegebenenfalls veränderten Sollsignale bzw. -daten zur Ansteuerung der Fahrzeugregelung eingeht.

4. Verfahren nach einem der Ansprüche 1 bis 3, **dadurch gekennzeichnet,** daß in einem Verfahrensschritt die ermittelte Zeitspanne bis zur extrapolierten engsten Annäherung des Fahrzeuges und des Hindernisses mit einer vorgebbaren kritischen Zeitspanne und in einem weiteren Verfahrensschritt die extrapolierte engste Annäherung zwischen dem Fahrzeug und dem Hindernis mit einem Mindestabstand verglichen werden, und daß Kollisionsvermeidungs-Sollsignale bzw. -daten zur Änderung des an sich ermittelten Sollkurses des Fahrzeuges nur dann erzeugt werden, wenn die extrapolierte Zeitspanne kleiner ist als die vorgegebene kritische Zeitspanne und gleichzeitig der extrapolierte Abstand der engsten Annäherung kleiner ist als der vorgebbare Mindestabstand.

5. Verfahren nach Anspruch 4, **dadurch gekennzeichnet,** daß die vorgebbare Zeitspanne und der vorgebbare geringste kritische Mindestabstand in nachfolgenden Steuerungszyklen um einen bestimmten Wert vergrößert werden, wenn in der vorzugsweise unmittelbar zurückliegenden Steuerungsphase bereits eine Kollisionsgefahr feststellbar war.

6. Verfahren nach einem der Ansprüche 1 bis 5, **dadurch gekennzeichnet,** daß bei festgestellter Kollisionsgefahr eine gezielte Änderung der Sollbeschleunigung und der Sollgeschwindigkeit zur aus der ersten Hierarchiestufe gegebenen Beschleunigung des Fahrzeuges derart durchgeführt wird, daß das Fahrzeug das Hindernis unter Einhaltung des Mindestabstandes passiert, wobei jeweils der extrapolierte zu erwartende Abstand zum Zeitpunkt der engsten Annäherung sowie die Änderung des extrapolierten zu erwartenden Abstandes der engsten Annäherung jeweils bei einer Änderung der in der Kollisions-Vorgeschichte ermittelten Sollbeschleunigung um einen frei vorgebbaren Betrag bei der Bestimmung der neuen geänderten Sollbeschleunigung so eingeht, daß ein größerer oder zumindest ein gleicher Abstand als der Mindestabstand bezüglich der engsten Annäherung erzielbar ist, wozu die Sollgeschwindigkeit durch Integration der Sollbeschleunigung bestimmt wird.

7. Verfahren nach einem der Ansprüche 1 bis 4, **dadurch gekennzeichnet,** daß bei festgestellter Kollisionsgefahr Kollisionsvermeidungs-Sollsignale bzw. -daten für die Fahrzeugregelung mit einer gezielten Verschiebung der Fahrzeugsollposition quer zur Sollkursrichtung und eine entsprechende Änderung dem Sollkurswinkels des Fahrzeuges zur Passierung des Hindernisses unter Einhaltung des Mindestabstandes erzeugt werden, wobei aus der Extrapolation des zu erwartenden Abstandes der engsten Annäherung aus der ursprünglichen aktuellen Sollposition des Fahrzeuges heraus und aus der Extrapolation des zu erwartenden Abstandes der engsten Annäherung aus einer in der Kollisions-Vorgeschichte bestimmten verschobenen Sollposition des Fahrzeuges heraus eine neue Verschiebung der Sollposition des Fahrzeuges ermittelt wird, aus der heraus ein Abstand mit einer engsten Annäherung zwischen Fahrzeug und Hindernis erzielbar ist, der größer oder gleich dem vorwählbaren Mindestabstand ist.

8. Verfahren nach Anspruch 7, **dadurch gekennzeichnet,** daß nach Überführung der Sollposition des Fahrzeuges durch die ermittelten Kollisions-Vermeidungs-Sollsignale bzw. -daten in einem stetigen Übergang bis zum Zeitpunkt der engsten Annäherung aus der ursprünglichen in eine seitliche verschobene, eine Kollision vermeidende Lage ab dem Zeitpunkt der engsten Annäherung die Sollposition des Fahrzeuges in einem umgekehrten stetigen Übergang auf die ursprüngliche Fahrzeug-Sollbahn durch entsprechend ermittelte Sollsignale bzw. -daten zurückgeführt wird.

9. Verfahren nach einem der Ansprüche 1 bis 4, **dadurch gekennzeichnet,** daß die Sollbeschleunigung und die Sollgeschwindigkeit des Fahrzeuges in einer Anordnung so verändert werden, daß das Fahrzeug dem Hindernis unter Einhaltung eines Mindestabstandes folgt, wobei die Sollbeschleunigung aus dem Abstand des Fahrzeuges zum Hindernis und aus der Relativgeschwindigkeit zwischen Fahrzeug und Hindernis bestimmt und die Sollgeschwindigkeit durch Integration der Sollbeschleunigung gebildet wird.

10. Verfahren nach Anspruch 6, **dadurch gekennzeichnet,** daß bei festgestellter Kollisionsgefahr und entsprechend erzeugten Kollisionsvermeidungs-Sollsignalen bzw. -daten vor Ansteuerung der Stellglieder der Fahrzeugregelung diese Kollisionsvermeidungs-Sollsignale bzw. -daten mit zulässigen, durch die physikalischen und technisch bedingten Grenzen des Fahrzeuges vorgegebenen Beschleunigungssignalen bzw. -daten verglichen und nur bei innerhalb dieses Zulässigkeitsbereiches liegenden Sollsignalen bzw. -daten zur Ansteuerung der Stellglieder der Fahrzeugregelung freigegeben werden.

11. Verfahren nach Anspruch 7, **dadurch gekennzeichnet,** daß bei festgestellter Kollisionsgefahr und entsprechend erzeugten Sollsignalen bzw. -daten zur Sollpositionsverschiebung quer zur Sollkursrichtung diese Sollsignale bzw. -daten mit Signalen und Daten zur Überprüfung eines Zulässigkeitsbereiches verglichen und nur bei innerhalb dieses Zulässigkeitsbereiches liegenden Werten an die Stellglieder der Fahrzeugregelung weitergegeben werden, wobei die Signale und Daten für den Zulässigkeitsbereich durch den seitlich links und rechts der Sollbahn zur Verfügung stehenden Raum festgelegt und beispielsweise in Abhängigkeit der Fahrbahnbreite fest vorgebbar sind.

12. Verfahren nach einem der Ansprüche 1 oder 4 bis 9, **dadurch gekennzeichnet,** daß der bei der Ermittlung der Sollsignale zur Ansteuerung der Stellglieder der Fahrzeugregelung zugrundegelegte Mindestabstand bei der engsten Annäherung zwischen Fahrzeug und Hindernis, in Abhängigkeit anderer dynamischer Größen, wie beispielsweise der Fahrzeuggeschwindigkeit oder des Winkels der engsten Annäherung, als veränderbare Signalgröße gewichtet wird.

13. Verfahren nach Anspruch 7, **dadurch gekennzeichnet,** daß die Sollposition des Fahrzeuges in einem stetigen Übergang in eine um die Differenz zwischen dem Mindestabstand und dem Abstand der engsten Annäherung in Richtung des Winkels der engsten Annäherung verschobene Lage in einem stetigen Übergang überführt wird.

14. Vorrichtung zur Durchführung des Verfahrens nach einem der Ansprüche 1 bis 13, mit einer Einrichtung zur Erfassung der Bahnsignale des Fahrzeugs und des Hindernisses und mit einer Einrichtung (KP) zur Bestimmung der Zeitspanne bis zur engsten Annäherung zwischen dem Fahrzeug und dem Hindernis sowie des Abstandes bis zum Zeitpunkt der engsten Annäherung mittels Extrapolation der Fahrzeug- und der Hindernisbahn zumindest unter Berücksichtigung der Signale und/oder Daten für die Position, den Kurswinkel und die Geschwindigkeit oder davon hergeleitete Signalgrößen oder -daten, **dadurch gekennzeichnet,** daß mittels der Einrichtung KP neben der Bestimmung der Zeitspanne bis zur engsten Annäherung zwischen dem Fahrzeug und dem Hindernis sowie des Abstandes auch der Winkel zum Zeitpunkt der engsten Annäherung mittels Extrapolation der Fahrzeugsollbahn und der Hindernisbahn ausgehend zumindest von den Eingangssignalen, Sollposition, Sollkurswinkel, Sollgeschwindigkeit, Sollbeschleunigung und vorzugsweise Sollbahnkrümmungsradius des Fahrzeuges zum einen und neben den Signalen Position, Kurswinkel und Geschwindigkeit den weiteren Signalen Beschleunigung und vorzugsweise Bahnkrümmungsradius des Hindernisses zum anderen oder davon insgesamt hergeleitete Signalgrößen bzw. -daten ermittelbar ist und daß ferner eine Einrichtung KE zur Feststellung und zum Anzeigen der Kollisionsgefahr in Abhängigkeit der Zeitspanne bis zur engsten Annäherung und des Abstandes der engsten Annäherung vorgesehen ist, und daß zumindest eine Kollisionsvermeidungs-Einrichtung KV1 und/oder KV2 und/oder KV3 zur Erzeugung einer Kollisionsvermeidungs-Sollbahn ohne Rückwirkung auf die in der ersten Hierarchiestufe ermittelten Sollsignale bzw. -größen allein durch ein Beschleunigungs- oder Bremsverfahren, durch Erzeugung einer Kollisionsvermeidungs-Sollbahn unter Passieren des Hindernisses unter Einhaltung des Mindestabstandes bzw. durch Folgen des Hindernisses unter Einhaltung eines Mindestabstandes ohne seitliche Abweichung von der Sollbahn vorgesehen ist, und daß eine Einrichtung B zur Sollbeschleunigung vorgesehen ist, mittels der ein am Ausgang der Kollisionsvermeidungs-Einrichtung anstehende momentane Sollgeschwindigkeit auf die in der Sollbahnvorgabe vorgegebene Sollgeschwindigkeit nachführbar ist, wobei das Ausgangssignal der Einrichtung B in die Extrapolation der Sollbahneingeht.

15. Vorrichtung nach Anspruch 14, **dadurch gekennzeichnet,** daß ferner eine Einrichtung R zu einer stetigen Rückführung der Sollposition und des Sollkurswinkels auf die ursprüngliche Sollbahn nach Durchführung eines vorausgegangenen Kollisionsvermeidungsmanövers ab dem Zeitpunkt der engsten Annäherung vorgesehen ist.

16. Vorrichtung nach Anspruch 14 oder 15, **dadurch gekennzeichnet,** daß die Einrichtung KV1, KV2 und KV3 und vorzugsweise die Einrichtung R parallel arbeiten und ihre Ausgänge mit der Einrichtung KV-AUS verbunden sind, weiche bei angezeigter Kollisionsgefahr abhängig von der Zulässigkeit der seitlichen Positionsverschiebungen die ursprünglichen Sollgrößen für die Position und den Kurswinkel des Fahrzeuges durch die von der Einrichtung KV2 bzw. R neu bestimmten Sollwerte ersetzt oder die ursprüngliche Sollbeschleunigung abhängig von deren Zulässigkeit durch die von der Einrichtung KV1 oder von der Einrichtung KV3 neu bestimmte Sollbeschleunigung ersetzt.

17. Vorrichtung nach Anspruch 14, **dadurch gekennzeichnet,** daß die Einrichtung KP eine Einrichtung (1.1) umfaßt, mit der aus den Eingangssignalen $x_F$, $y_F$, $\nu_F$, $v_{KV}$, $a_F$, $x_H$, $y_H$, $\nu_H$, $v_H$ und $a_H$ die Koeffizienten $c_2$, $c_1$ und $c_0$ der kubischen Gleichung

$$t_K^3 + c_2\, t_K^2 + c_1\, t_K + c_0 = 0 \,\cdot$$

zur Ermittelung des Zeitpunktes $t_K$ der engsten Annäherung so bildbar sind, daß gilt

$$c_2 = 3\ \frac{a_x v_x + a_y v_y}{a_x^2 + a_y^2}$$

$$c_1 = 2\ \frac{v_x^2 + xa_x + v_y^2 + ya_y}{a_x^2 + a_y^2}$$

$$c_0 = 2\ \frac{xv_x + yv_y}{a_x^2 + a_y^2}\ ,$$

indem in der Einrichtung (1.2) die kubische Gleichung auf eine reduzierte kubische Gleichung transformierbar und in einer Einrichtung (1.3) die Nullstellen der reduzierten kubischen Gleichung bestimmbar und auf die ursprüngliche kubische Gleichung zurücktransformierbar sind, und daß in einer Einrichtung (1.4) aus den Nullstellen der kubischen Gleichung und der in der Einrichtung (1.1) gebildeten Zeitspanne bis zur engsten Annäherung im Falle einer unbeschleunigten Relativbewegung zwischen dem Fahrzeug und dem Hindernis die relevante Zeitspanne bis zur engsten Annäherung bestimmbar ist.

18. Vorrichtung nach Anspruch 17, **dadurch gekennzeichnet,** daß aus der ermittelten relevanten Zeitspanne bis zur engsten Annäherung in einer nachgeordnete Einrichtung (1.5) zum einen für das Fahrzeug wie für das Hindernis die während der Zeitspanne bis zur engsten Annäherung zurückgelegte Strecke und der Kurswinkel zum Zeitpunkt der engsten Annäherung, in einer Einrichtung (1.6) für das Fahrzeug und das Hindernis die zum Zeitpunkt der engsten Annäherung zu erwartende Position, in einer Einrichtung (1.7) der Abstand zwischen Fahrzeug und Hindernis zum Zeitpunkt der engsten Annäherung und der Winkel des Abstandes bezogen auf ein festes Koordinatensystem ermittelbar ist.

19. Vorrichtung nach einem der Ansprüche 14 bis 18, **dadurch gekennzeichnet,** daß mittels der Einrichtung KE eine Kollisionsgefahr anzeigbar ist, wenn die Zeitspanne bis zur engsten Annäherung kleiner ist als das Produkt der frei vorgebbaren kritischen Zeitspanne mit einem Gewichtungsfaktor und wenn der Abstand der engsten Annäherung kleiner ist als das Produkt des Mindestabstandes mit dem Gewichtungsfaktor, wobei der Gewichtungsfaktor den Wert 1 hat, wenn im vorhergehenden Zeitschritt keine Kollisionsgefahr angezeigt wurde und einen Wert größer 1 hat, wenn im vorhergehenden Zeitschritt Kollisionsgefahr angezeigt wurde, und wobei der Mindestabstand als konstante Größe oder durch eine Einrichtung S als in Abhängigkeit von anderen Größen veränderbare Größe vorgebbar ist.

20. Vorrichtung nach einem der Ansprüche 14 bis 19, **dadurch gekennzeichnet,** daß die Einrichtung KV1 zwei Einrichtungen KP umfaßt, von denen eine Einrichtung KP den zu erwartenden Abstand der engsten Annäherung bei der Sollbeschleunigung des Fahrzeuges, die im letzten Zeitschritt durch die Einrichtung KV1 bestimmt wurde, ermittelt und die zweite Einrichtung KP den zu erwartenden Abstand der engsten Annäherung bei einer gegenüber der ersten Einrichtung KP um einen vorab frei vorgebbaren Betrag geänderten Sollbeschleunigung ermittelt und durch nachgeordnete Übertragungsglieder aus der Änderung des zu erwartenden Abstandes der engsten Annäherung bei der veränderten Sollbeschleunigung eine neue Sollbeschleunigung mit einem Abstand bei der engsten Annäherung größer oder gleich dem Mindestabstand bestimmbar ist, und daß eine Einrichtung (1.8) zur Anzeige, ob die Sollbeschleunigung des Fahrzeuges innerhalb eines frei vorgebbaren Zulässigkeitsbereiches liegt und ob das Fahrzeug mit der neuen Sollbeschleunigung im Zeitpunkt der engsten Annäherung eine zum Hindernis relative Geschwindigkeit größer als ein frei vorgebbarer Grenzwert hat und somit das Hindernis passiert, vorgesehen ist.

21. Vorrichtung nach einem der Ansprüche 14 bis 20, **dadurch gekennzeichnet,** daß eine Einrichtung KV2 mit Einrichtungen (2.1, 2.2 und 2.3) vorgesehen ist, mit der Einrichtung (2.1) zur Ermittlung der Verschiebung der Sollposition des Fahrzeuges quer zur Kursrichtung bei einem Ausweichmanöver nach links und einem Ausweichmanöver nach rechts und der Einrichtung (2.2) zur Bestimmung der Gewichtungsfaktoren für einen stetigen Übergang der Fahrzeugsollposition von der ursprünglichen Lage in die verschobene Lage, wobei die Ausgänge der Einrichtung (2.1) zur Ermittlung der Verschiebung der Sollposition des Fahrzeuges nach links oder nach rechts mit den Eingängen der Einrichtung (2.3) zur Auswahl der Verschiebungsrichtung der Sollposition und zur Anzeige, ob die neue Position innerhalb eines vorab frei vorgegebenen Zulässigkeitsbereiches liegt, verbunden sind, und daß diese Einrichtung (2.3) sowie die Einrichtung (2.2) mit den dort gebildeten Gewichtungsfaktoren Übertragungsglieder zur Überführung der Sollposition des Fahrzeuges in einem stetigen Übergang von der ursprünglichen Sollbahn in eine um die in der Einrichtung (2.3) festgelegte Strecke verschobene Lage und zur Bestimmung des Sollkurswinkels derart ansteuern, daß der Abstand der engsten Annäherung größer oder gleich dem Mindestabstand wird.

22. Vorrichtung zur Durchführung des Verfahrens nach einem der Ansprüche 1 bis 13, mit einer Einrichtung zur Erfassung der Bahnsignale des Fahrzeugs und des Hindernisses und mit einer Einrichtung (KP) zur Bestimmung der Zeitspanne bis zur engsten Annäherung zwischen dem Fahrzeug und dem Hindernis sowie des Abstandes bis zum Zeitpunkt der engsten Annäherung mittels Extrapolation der Fahrzeug- und der Hindernisbahn zumindest unter Berücksichtigung der Signale und/oder Daten für die Position, den Kurswinkel und die Geschwindigkeit oder davon hergeleitete Signalgrößen oder -daten, **dadurch gekennzeichnet,** daß mittels der Einrichtung KP neben der Bestimmung der Zeitspanne bis zur engsten Annäherung zwischen dem Fahrzeug und dem Hindernis sowie des Abstandes auch der Winkel zum Zeitpunkt der engsten Annäherung mittels Extrapolation der Fahrzeugsollbahn und der Hindernisbahn ausgehend zumindest von den Eingangssignalen, Sollposition, Sollkurswinkel, Sollgeschwindigkeit, Sollbeschleunigung und vorzugsweise Sollbahnkrümmungsradius des Fahrzeugs zum einen und neben den Signalen Position, Kurswinkel und Geschwindigkeit den weiteren Signalen Beschleunigung und vorzugsweise Bahnkrümmungsradius des Hindernisses zum anderen oder davon insgesamt hergeleitete Signalgrößen bzw. -daten ermittelbar sind, und daß ferner eine Einrichtung KE zur Feststellung und zum Anzeigen der Kollisionsgefahr in Abhängigkeit der Zeitspanne bis zur engsten Annäherung und des Abstandes der engsten Annäherung vorgesehen ist und daß eine Einrichtung KV4, R4 und KV4-AUS vorgesehen ist, mit der Einrichtung KV4 zur Überführung der Sollposition des Fahrzeugs in einem stetigen Übergang bis zum Zeitpunkt der engsten Annäherung in eine um die Differenz zwischen dem Mindestabstand und dem zu erwartenden Abstand der engsten Annäherung zwischen Fahrzeug und Hindernis in Richtung des Winkels der engsten Annäherung verschobene Lage und zur Bestimmung des Sollkurswinkels, und mit der Einrichtung R4 zur Rückführung der Kollisions-vermeidungs-Sollposition des Fahrzeugs in einem umgekehrten stetigen Übergang auf die ursprüngliche Sollbahn nach dem Zeitpunkt der engsten Annäherung und zur Neubestimmung des Sollkurswinkels, wobei mittels der Einrichtung KV4-AUS die ursprünglichen Werte für die Sollposition und den Sollkurswinkel des Fahrzeugs bei angezeigter Kollisionsgefahr durch die von der Einrichtung KV4 neu bestimmten Werte für die Sollposition und den Sollkurswinkel und nach dem Zeitpunkt der engsten Annäherung durch die von der Einrichtung R4 neu bestimmten Werte für die Sollposition und den Sollkurswinkel ersetzbar sind, und daß eine Einrichtung B zur Sollbeschleunigung vorgesehen ist, mittels der ein am Ausgang der Kollisionsvermeidungs-Einrichtung anstehende momentane Kollisions-vermeidungs-Sollgeschwindigkeit auf die in der Sollbahnvorgabe vorgegebene Sollgeschwindigkeit nachführbar ist, wobei das Ausgangssignal der Einrichtung B in die Extrapolation der Sollbahn eingeht.

**Claims**

1. A method for the automatic prevention of collisions for automatically steered vehicle in a real time mode, in the case of which the vehicle and the obstacle path is predictively extrapolated and the distance and the time of the probably closest proximity are ascertained, wherein in a manner dependent on the distance of the closest proximity a possible of danger of collision is able to be ascertained on the basis of preselectable parameter and a control of the vehicle servo-members, which changes the collision course, is able to be performed, in which respect for the vehicle at least the actual quantity for the position, the speed and the setting of the steering angle and for the moved obstacle at least the actual quantity for the position the speed and the course angle are ascertained and/or made available, characterized by a multi-stage, hierarchically structured method in the case of which from the desired signals, which in the given case are at least preset by the driver, or, respectively, quantities for the desired course angle and for the desired speed and from the signals and data signals which are detected by means of a sensor-type path and vehicle detecting means, in a first hierarchy stage the current desired signals and the desired data in relation to the desired position, the desired course angle, the desired speed and the desired acceleration are produced and these desired signal and the current data which are ascertained by sensors secured to the vehicle and/or which are transmitted through an external means by means of data transmission to the vehicle and/or are completely or partly determined from the change with time of the position of the vehicle and the position of the obstacle, as regards the position, the course angle, the speed and the acceleration are transmitted to a second hierarchy stage effecting the prevention of a collision, the danger of a collision being able to be detected in a manner dependent on parameters which are able to be preselected on the one hand in connection with the distance of the closest proximity and on the other hand in connection with the time still remaining until the closest proximity, and in the case of need corresponding collision preventing, desired signals and data for any possibly changed collision preventing desired position, a possibly changed collision preventing course angle and/or the collision preventing desired speed and/or the collision preventing desired acceleration, are so produced without any mutual effect on the desired signals or, respectively, quantities as ascertained in the first hierarchy stage, that the vehicle moves past the obstacle while maintaining a minimum distance by starting a braking or acceleration maneuver, by a change to a desired collision-free path departing from the desired path as such, or follows the obstacle while maintaining a minimum distance and that finally the original collision preventing desired path signals or, respectively, data, or in the case of a danger of collision such signals or data produced in the second hierarchy stage, are supplied to a third hierarchy comprising a device for regulation of the vehicle, via which the servo members for steering and/or drive and brake system of the vehicle are actuated.

2. The method as claimed in claim 1, characterized in that in the first hierarchy stage furthermore the current desired signals and the desired data of the radius of curvature in relation to the extrapolated desired path of the vehicle are produced and together with the other desired signals and data, and the current data which are ascertained by sensors mounted on the vehicle and/or completely or partly transferred by an external device by means of data transmission to the vehicle and/or completely or partly derived from the change with time of the desired position of the vehicle and the desired position of the obstacle as regards the radius of curvature of the path of the obstacle, are transferred to the second hierarchy stage responsible prevention of a collision, in which stage preferably in addition the angle of the closest proximity to the extrapolated paths is determined and ascertained.

3. The method as claimed in claim 1 or in claim 2, characterized in that for the determination by way of approximation of the still remaining period of time until the closest proximity between the vehicle and the obstacle in addition the current signals or, respectively, data of the radii of curvature, able to be ascertained in the first hierarchy stage, of the desired vehicle path and the current signals or, respectively, data of the obstacle path are supplied to the second hierarchy stage for circular arcuate extrapolation of the desired vehicle path and of the obstacle path, the method, which is taken as a basis for the linear extrapolation of the desired vehicle path and of the obstacle path, for the determination of the point in time of the closest proximity with respect to a fictional vehicle and a fictional obstacle on linear tangential paths are performed on the circular extrapolations of the desired vehicle path and the obstacle path, the signals or, respectively, data for the desired speed of the fictional vehicle and the speed of the fictional obstacle correspond to the speeds of the real vehicle and of the real obstacle and the tangential paths are so placed on the circular path extrapolations that the fictional vehicle and the real vehicle or, respectively, the fictional obstacle and the real obstacle meet at a point in time, known from the history of the collision, of the closest proximity to be expected in the respective point of contact of the circular path extrapolation and the tangential path of the vehicle and of the obstacle as far as the closest proximity enters into the the determination of any changed desired signals or, respectively, data for control of the vehicle regulation means.

4. The method as claimed in any one of the claims 1 through 3, characterized in that in one method step the period of time ascertained as far as the extrapolated closest proximity of the vehicle and of the obstacle is compared with a presettable critical period of time and in a further method step the extrapolated closest proximity between the vehicle and of the obstacle is compared with a minimum distance and in that the collision preventing desired signals or, respectively, data for changing the inherently ascertained desired course of the vehicle are only produced, if the extrapolated period of time is less than the preset critical period of time and simultaneously the extrapolated distance of the closest proximity is less than the presettable minimum distance.

5. The method as claimed in claim 4, characterized in that the presettable period of time and the presettable leapt critical minimum distance are enlarged in subsequent control cycles by a given quantity, if any danger of collision has been detected in the preferably immediately preceding control phase.

6. The method as claimed in any one of the claims 1 through 5, characterized in that if a danger of collision is detected a systematic modification in the desired acceleration and in the desired speed is performed for vehicle acceleration, as given by the first hierarchy stage in such a manner that the vehicle moves past the obstacle while maintaining the minimum distance, the extrapolated distance to be expected at the point in time of closest proximity and the modification of the extrapolated distance to be expected of the closest proximity in each case in a modification, by a freely presettable quantity in the determination of the desired acceleration ascertained in the collision history enters into the new, changed desired acceleration in such a manner that a larger or at least equal distance is able to be determined as the minimum distance in relation to the closest proximity, for which purpose the desired speed is determined by integration of the desired acceleration.

7. The method as claimed in any one of the claims 1 through 4, characterized in that on a danger of collision having been ascertained collision preventing desired signals or, respectively, data are produced for the regulation of the vehicle with a systematic displacement of the desired position of the vehicle transversely in relation to the desired course direction and a corresponding modification of the desired course angle of the vehicle for passing by the obstacle while maintaining the minimum distance is produced, a new displacement of the desired position of the vehicle being determined from the extrapolation of the distance to be expected of the closest proximity from the original current desired position of the vehicle and from the extrapolation of the distance to be expected of the closest proximity from a displaced desired position, determined by the history of the collision, of the vehicle a new displacement of the desired position of the vehicle is determined, from which a distance with a minimum proximity between the vehicle and the obstacle is able to be obtained, which is larger or is equal to the preselectable minimum distance.

8. The method as claimed in claim 7, characterized in that after transfer of the desired position of the vehicle by the ascertained collision preventing desired signals or, respectively, data in a continuous transition as far as the point in time of the closest proximity from the original position into a laterally displaced position preventing any collision as from the point in time of the closest proximity the desired position of the vehicle is returned in a reverse, continuous transition to the original vehicle desired path by suitably ascertained desired signals or, respectively, data.

9. The method as claimed in any one of the claims 1 through 4, characterized in that desired acceleration and the desired speed of the vehicle are so changed in an arrangement that the vehicle follows the obstacle while maintaining a minimum distance, the desired acceleration being determined in accordance with the distance of the vehicle from the obstacle and the relative speed between the vehicle and the obstacle and the desired speed is set by integration of the desired acceleration.

10. The method as claimed in claim 6, characterized in that on a danger of a collision being detected and in the case of the production of correspondingly collision preventing desired signals or, respectively, data to prior to operation of the servo members of the vehicle regulation means such collision preventing desired signals or, respectively, data are compared with permissible acceleration signals or, respectively, data, as predetermined by the physical and technical limit of the vehicle and it is only in the case of desired signal or, respectively, data coming within this permissible range that the same are released for operation of the servo members of the vehicle control means.

11. The method as claimed in claim 7, characterized in that on a danger of a collision being detected and in the case of production of correspondingly desired signals or, respectively, data for displacement of the desired position transversely in relation to the desired course direction these desired signals or, respectively, data are compared with signals and data for checking a permissible range and it is only in the case of quantities within this permissible range that they are transferred on to the servo members of the vehicle regulation means, the signals and data for the permissible range being set in accordance with the space available on the left and on the right of the desired path and for example are able to be preset permanently in a manner dependent on the width of the path of the vehicle.

12. The method as claimed in any one of the claims 1 or 4 through 9, characterized in that the minimum distance taken as a basis during ascertainment of the desired signals for control of the servo members of the vehicle regulation means is weighted at the closest proximity between the vehicle and the obstacle, in a manner dependent on other dynamic quantities, such as for example the speed of the vehicle or the angle of the closest proximity, as a changeable signal quantity.

13. The method as claimed in claim 7, characterized in that the desired position of the vehicle is transferred in a continuous transition into a position, which is displaced by the difference between the minimum distance and the distance of the closest proximity in the direction of the angle of the closest proximity, in a continuous transition.

14. An apparatus for performing the method as claimed in any one of the claims 1 through 13, comprising a device for detection of the path signals of the vehicle and of the obstacle and a device (KP) for determination of the period of time as far as the closest proximity between the vehicle and the obstacle and furthermore of the distance as far as the point in time of the closest proximity by means of extrapolation of the vehicle path and the obstacle path at least taking into account the signals and/or data for the position, the course angle and the speed or signal quantities or data derived therefrom, characterized in that by means of the device KP in addition to the determination of the period in time as far as the closest proximity between the vehicle and the obstacle and of the distance furthermore the angle at the point in time of the closest proximity is determined by means of extrapolation of the vehicle's desired path and the obstacle path on the basis of at least input signals, that is to say: desired position, desired course angle, desired speed, desired acceleration and preferably desired curvature of the desired path of the vehicle on the one hand and in addition to other signals, that is to say, for position, course angle and speed the further signals acceleration and preferably radius of curvature of the path of the obstacle on the one hand or of signal quantities or, respectively, data derived from the same generally, and in that furthermore there is a device KE for ascertaining and for indication of the danger of collision in accordance with the period of time as far as the closest proximity and of the distance of the closest proximity, and in that at least one collision preventing device KV1 and/or KV2 and/or KV3 is provided for the production of a collision preventing desired path without any effect on the desired signals or, respectively, quantities ascertained in the first hierarchy stage only by a acceleration or braking method, by producing an obstacle preventing path passing the obstacle while maintaining the minimum distance or, respectively, by following the obstacle while maintaining a minimum distance without laterally leaving the desired path and in that a device B is provided for desired acceleration, by means of which the instantaneous desired speed present at the output of the obstacle preventing device is able to be made equal to the predetermined desired speed given in the set quantity for the desired path, the output signal of the device B entering into the extrapolation of the desired path.

15. An apparatus as claimed in claim 15, characterized in that furthermore a device R is provided for a continuous return of the desired position and of the desired course angle to the original desired path after performance of a preceding collision preventing manoeuver as from the point in time of the closest proximity.

16. An apparatus as claimed in claim 14 or in claim 15, characterized in that the device KV1, KV2 and KV3 and preferably the device R operate in parallel and the outputs thereof are connected with the device KV-AUS, which in the case of an indication of a danger of collision replaces, in a manner dependent on the permissibility of the lateral position displacements , the original desired quantities for the position and the course desired angle of the vehicle by the desired quantities, newly determined by the device KV2 or, respectively, R, or replaces the original desired acceleration in a manner dependent on their permissibility by the desired acceleration as newly determined by the device KV1 or by the device KV3.

17. An apparatus as claimed in claim 14, characterized in that the device KP comprises a device (1.1) with which from the input signals $x_F$, $y_F$, $\nu_F$, $v_{KV}$, $a_F$, $x_H$, $y_H$, $\nu_H$, $v_H$ and $a_H$ the coefficients $c_2$, $c_2$ and $c_0$ of the cubic equation

$$t_K^3 + c_2 t_K^2 + c_1 t_K + c_0 = 0$$

for the determination of the point in time $t_K$ of the closest proximity may be so evolved that the following applies:

$$c_2 = 3 \frac{a_x v_x + a_y v_y}{a_x^2 + a_y^2}$$

$$c_1 = 2 \frac{v_x^2 + x a_x + v_v^2 + y a_y}{a_x^2 + a_y^2}$$

$$c_0 = 2 \frac{x v_x + y v_y}{a_x^2 + a_y^2}$$

in such a way that in the device (1.2) the cubic equation is able to be transformed to a reduced cubic equation and in a device (1.3) the zero digits of the reduced cubic equation are able to be determined and are able to be transformed back to the original cubic equation and in that the relevant period of time as far as the closest proximity is able to be determined in a device (1.4) from the zero digits of the cubic equation and the period of time formed in the device (1.1) as far as the closest proximity in the case of a non-accelerated relative movement between the vehicle and the obstacle .

18. The apparatus as claimed in claim 17, characterized in that from the determined period of time as far as the closest proximity in a device (1.5) arranged on the output side on the one hand for the vehicle as also for the obstacle the path traveled during the period of time as far as the closest proximity and the course angle at the point in time of the closest proximity may be ascertained, in a device (1.6) for the vehicle and the obstacle the position which is to be expected at the point in time of the closest proximity is able to be ascertained and in a device (1.7) the distance between the vehicle and the obstacle at the point in time of the closest proximity is able to be ascertained and the angle of the distance related to a fixed coordinate system are able to be ascertained.

19. The apparatus as claimed in claim 17, characterized in that danger of a collision may be indicated by means of the device KE when the period of time as far as the closest proximity is smaller than the product of the freely settable critical period and a weighting factor and when the distance of the closest proximity is smaller than the product of the minimum distance with the weighting factor, the weighting factor having the value of 1 if in the preceding time step no of danger of collision was indicated and has a value larger than 1, when in the preceding time step a danger of a collision was indicated, the minimum distance being able to be set as a constant quantity or by a device S being able to be set as a quantity able to be changed in accordance with other quantities.

20. The apparatus as claimed in any one of the claims 14 through 19, characterized in that the device KV1 comprises two devices KP, of which one device KP determines the distance to be expected of the closest proximity in the case of a desired acceleration of the vehicle, which was determined in the last time step by the device KV1 and the second device KP determines the distance to be expected of the closest proximity in the case of a desired acceleration changed by a freely settable quantity previously to depart from the first device KP and by means of following transmission members from the modification of the distance to be expected of the closest proximity in the case of the changed desired acceleration a new desired acceleration is able to be determined with a distance at the closest proximity larger than or equal to the minimum distance and in that a device (1.8) is provided in order to indicate whether the desired acceleration of the vehicle is within a freely settable permissibility range and whether the vehicle has, with the new desired acceleration at the point in time of the closest proximity, a relative speed towards the obstacle which is larger than a freely settable limit value and consequently passes the obstacle.

21. The apparatus as claimed in any one of the claims 14 through 20, characterized in that a device KV2 is provide which has means (2.1, 2.2 and 2.3), has the device (2.1) for the determination of the displacement of the desired position of the vehicle transversely in relation to the course direction in the case of an avoiding manoeuver to the left and an avoiding manoeuver to the right and has the device (2.2) for the determination of the weighting factor for a continuous transition of the desired position of the vehicle out of the original position into the displaced position, the outputs of the device (2.1) for the determination of the displacement of the desired position of the vehicle to the left or to the right being connected with the inputs of the device (2.3) for the selection of the direction of displacement of the desired position and for indicating whether the new position is within a freely settable permissibility range, and in that this device (2.3) and furthermore the device (2.2) with the weighting factors formed in it so operates transmission members for the transfer of the desired position of the vehicle in a continuous transition from the original desired path in position displaced by the path set in the device (2.3) and for the determination of the desired course angle in such a manner that the distance of the closest proximity becomes larger than or equal to the minimum distance.

22. The apparatus for performing the method as claimed in any one of the claims 1 through 13, comprising a device, for detection of the path signals of the vehicle and of the obstacle and a device (KP) for determination of the period of time as far as the closest proximity between the vehicle and the obstacle and furthermore of the distance as far as the point in time of the closest proximity by means of extrapolation of the vehicle path and the obstacle path at least taking into account the signals and/or data for the position, the course angle and the speed or signal quantities or data derived therefrom, characterized in that by means of the device KP in addition to the determination of the period in time as far as the closest proximity between the vehicle and the obstacle and of the distance furthermore the angle at the point in time of the closest proximity is determined by means of extrapolation of the vehicle's desired path and the obstacle path on the basis of at least input signals, that is to say: desired position, desired course angle, desired speed, desired acceleration and preferably desired curvature of the desired path of the vehicle on the one hand and in addition to other signals, that is to say, for position, course angle and speed the further signals acceleration and preferably radius of curvature of the path of the obstacle on the one hand or of signal quantities or, respectively, data derived from the same generally, and in that furthermore there is a device KE for ascertaining and for indication of the danger of collision in accordance with the period of time as far as the closest proximity and of the distance of the closest proximity, and in that a device KV4, R4 and KV4-AUS is provided, with the device KV4 for the transfer of the desired position of the vehicle in a continuous transition as far as the point in time of the closest proximity into a position which is displaced by the difference between the minimum distance and the distance to be expected of the closest proximity between the vehicle and the obstacle in the direction of the angle of the closest proximity and for the determination of the desired course angle, and with the device R4 for return of the collision preventing desired position of the vehicle in a reversed continuous transition to the original desired path after the point in time of the closest proximity and for redetermination of the desired course angle, the device KV4-AUS being able to replace the original quantities for the desired position and the desired course angle of the vehicle when danger of a collision is indicated by the values newly determined by the device KV4 for the desired position and the desired course angle and after the point in time of the closest proximity by the values new determined by the device R4 for the desired position and the desired course angle and in that a device B is provided for desired acceleration by means of which the instantaneous, collision avoiding speed present at the output of the collision avoiding device is able to be made equal to the desired speed present in the preset value for the desired path, the output signal of the device B entering into the extrapolation of the desired path.

## Revendications

1. Procédé pour éviter automatiquement des collisions des véhicules à guidage automatique pour fonctionnement en temps réel, dans laquel le trajet du véhicule et de l'obstacle est extrapolé de manière prévisionnelle et dans lequel la distance et le temps du rapprochement le plus étroit prévisible sont déterminés tandis que, en fonction de la distance du rapprochement le plus étroit, un risque éventuel de collision peut être déterminé sur base de paramètres présélectionnables et une commande des éléments de réglage du véhicule modifiant le cours de la collision est réalisable, dans lequel - pour le véhicule au moins - la grandeur réelle de la position, de la vitesse et de l'angle de direction et, pour l'obstacle mobile, au moins la grandeur réelle de la position, de la vitesse et de l'angle de parcours sont déterminés et/ou sont établis, caractérisé par un procédé à structure hiérarchique à plusieurs étages dans lequel les signaux ou valeurs de consigne prédéterminés, au moins éventuellement, par le conducteur pour l'angle de parcours de consigne et la vitesse de consigne et les signaux et données saisis par une détection du trajet et du véhicule par détecteurs créent, dans un premier étage hiérarchique, les signaux de consigne et les données de consigne actuels relatifs à la position de consigne à l'angle de parcours de consigne, à la vitesse de consigne et à l'accélération de consigne et transmettent à un deuxième étage hiérarchique, assurant l'évitement de la collision, ces signaux et données de consigne et les données actuelles déterminées par des détecteurs montés sur le véhicule et/ou transmis au véhicule par un dispositif externe au moyen d'une transmission de données et/ou déterminé, totalement ou partiellement, d'après la modification dans le temps de la position de consigne du véhicule et de la position de l'obstacle concernant la position, l'angle de parcours, la vitesse et l'accélération, dans lequel un risque de collision peut être déterminé en fonction, d'une part, de la distance du rapprochement le plus étroit et du temps restant encore jusqu'au rapprochement le plus étroit et, d'autre part, d'après des paramètres présélectionnables et en créant au besoin des signaux et des données de consigne pour éviter la collision avec une position de consigne évitant la collision éventuellement modifiée, avec un angle de parcours de consigne évitant la collision éventuellement modifié et/ou avec une vitesse de consigne évitant la collision et/ou avec une accélération de consigne sans rétroaction sur les signaux ou grandeurs de consigne provenant du premier étage hiérarchique, de façon que le véhicule passe l'obstacle en maintenant une distance minimale en réalisant une manoeuvre de freinage ou d'accélération par évitement en passant par un parcours de consigne sans risque de collision différant du parcours de consigne proprement dit ou bien suive l'obstacle en maintenant une distance minimale et que, enfin, les signaux ou données de parcours de consigne initiaux ou produits dans le deuxième étage hiérarchique pour éviter la collision en cas de risque de collision sont envoyés à un dispositif de régulation du véhicule comprenant un troisième étage hiérarchique par lequel les éléments de réglage de la direction et/ou de la transmission et de l'installation de freinage du véhicule sont activés.

2. Procédé selon la revendication 1, caractérisé en ce que,dans le premier étage hiérarchique, les signaux de consigne actuels et les données de consigne du rayon de courbure relatifs au parcours de consigne

EP 0 433 351 B1

extrapolé du véhicule sont produits et sont envoyés avec les autres signaux et données et les données actuelles déterminées par les détecteurs montés sur le véhicule et/ou transmises au véhicule par un dispositif externe par une transmission de données et/ou déterminés, totalement ou partiellement, d'après la modification dans le temps de la position du véhicule et de la position de l'obstacle concernant le rayon de courbure du parcours de l'obstacle au deuxième étage hiérarchique assurant l'évitement de la collision dans lequel, de préférence, l'angle du rapprochement le plus étroit est déterminé et calculé en outre d'après les parcours extrapolés.

3. Procédé selon la revendication 1 ou 2, caractérisé en ce que, pour déterminer approximativement la durée de temps restant encore jusqu'au rapprochement le plus étroit entre le véhicule et l'obstacle, les signaux ou données actuels des rayons de courbure du parcours de consigne du véhicule déterminables par le premier étage hiérarchique et les signaux ou données actuels du parcours de l'obstacle sont envoyés en outre au deuxième étage hiérarchique en vue des extrapolations circulaires du parcours de consigne du véhicule et du parcours de l'obstacle, dans lequel le procédé permettant l'extrapolation linéaire du parcours du véhicule et de la course de l'obstacle est mis en oeuvre pour déterminer le moment du rapprochement le plus étroit pour ce qui concerne un véhicule fictif et un obstacle fictif sur des pistes tangentielles linéaires d'après les extrapolations circulaires du parcours de consigne du véhicule et du parcours de l'obstacle, dans lequel les signaux ou données concernant la vitesse de consigne du véhicule fictif et la vitesse de l'obstacle fictif correspondent aux vitesses du véhicule réel et de l'obstacle réel, tandis que les parcours tangentiels sont appliqués aux extrapolations circulaires de parcours de façon que le véhicule fictif et le véhicule réel , d'une part, et l'obstacle fictif et l'obstacle réel , d'autre part, se rencontrent à un moment du rapprochement le plus étroit à prévoir entre le véhicule et l'obstacle, qui est connu d'après l'histoire antérieure de la collision en tous points de contact des extrapolations circulaires du parcours et du parcours tangentiel et que la durée de temps restant ainsi déterminée jusqu'au rapprochement le plus étroit est introduite en vue de la création de signaux ou données de consigne éventuellement modifiés pour commander le réglage du véhicule.

4. Procédé selon l'une des revendications 1 à 3, caractérisé en ce que,au cours d'une étape du procédé, la durée de temps déterminée jusqu'au rapprochement le plus étroit extrapolé du véhicule et de l'obstacle est comparée à une durée de temps critique pouvant être introduite à l'avance, que, au cours d'une autre étape du procédé, le rapprochement le plus étroit extrapolé entre le véhicule et l'obstacle est comparé à une distance minimale et que des signaux ou données de consigne évitant la collision sont créés pour modifier le parcours de consigne du véhicule déterminé en soi lorsque la durée de temps extrapolée est inférieure à la durée de temps critique prédéterminée et que, simultanément, la distance extrapolée du rapprochement le plus étroit est inférieure à la distance minimale déterminable d'avance.

5. Procédé selon la revendication 4,caractérisé en ce que la durée de temps déterminable d'avance et la distance minimale critique la plus faible déterminable d'avance sont augmentées d'une valeur déterminée au cours des cycles de commande ultérieurs si un risque de collision a été observable de préférence au cours de la phase de commande immédiatement antérieure .

6. Procédé selon l'une des revendications 1 à 5, caractérisé en ce que, en cas de risque de collision constaté, une modification volontaire de l'accélération de consigne et de la vitesse de consigne est effectuée d'après l'accélération du véhicule provenant du premier étage hiérarchique, de façon que le véhicule passe l'obstacle en maintenant la distance minimale, tandis que la distance extrapolée à escompter au moment du rapprochement le plus étroit ainsi que la modification de la distance extrapolée à escompter au moment du rapprochement le plus étroit en cas de modification de l'accélération de consigne déterminée par l'histoire antérieure de la collision atteignant une valeur déterminable librement d'avance pour la détermination de la nouvelle accélération de consigne modifiée, de façon qu'une distance plus grande ou au moins égale à la distance minimale relative au rapprochement le plus étroit soit réalisable tandis que la vitesse de consigne est déterminée à cet effet par intégration de l'accélération de consigne.

7. Procédé selon l'une des revendications 1 à 4, caractérisé en ce que, en cas de risque de collision constaté, des signaux ou des données de consigne évitant la collision sont créés avec un déplacement volontaire de la position de consigne du véhicule transversalement par rapport à la direction du parcours de consigne et qu'une modification correspondante de l'angle de parcours de consigne du véhicule pour passer l'obstacle en maintenant la distance minimale, pour lequel la position de consigne du véhicule modifiée et déterminée d'après l'extrapolation de la distance à escompter du rapprochement le plus étroit d'après la position de consigne actuelle initiale du véhicule et d'après la distance à escompter d'après l'extrapolation pour le rapprochement le plus étroit d'après l'histoire antérieure de la collision, détermine un nouveau déplacement de la position de consigne du véhicule, ce qui permet de déterminer une distance au moment du rapprochement le plus étroit entre le véhicule et l'obstacle qui est plus grande ou égale à la distance minimale présélectionnable.

**8.** Procédé selon la revendication 7,caractérisé en ce que, après transmission de la position de consigne du véhicule par les signaux ou les données de consigne évitant la collision suivant une transition continue jusqu'au moment du rapprochement le plus étroit d'après la position initiale déplacée latéralement et évitant une collision à partir du moment du rapprochement le plus étroit, la position de consigne du véhicule est renvoyée suivant une transition continue inversée au parcours de consigne initial du véhicule par des signaux ou des données déterminés de manière correspondante.

**9.** Procédé selon l'une des revendications 1 à 4, caractérisé en ce que l'accélération de consigne et la vitesse de consigne du véhicule sont modifiées d'une manière telle que le véhicule suive l'obstacle en maintenant une distance minimale, tandis que l'accélération de consigne est déterminée d'après la distance du véhicule par rapport à l'obstacle et d'après la vitesse relative entre le véhicule et l'obstacle et que la vitesse de consigne est formée par intégration de l'accélération de consigne.

**10.** Procédé selon la revendication 6, caractérisé en ce que, en cas de risque de collision constaté et de création de signaux ou de données de consigne évitant la collision, ces signaux ou données évitant la collision sont comparés à des signaux ou données d'accélération introduits d'avance et dépendant des limites physiques et techniques du véhicule avant de commander les organes de commande de la régulation du véhicule et ne sont autorisés, pour la commande des organes de réglage de la régulation du véhicule, qu'au cas où ces signaux de données de consigne se trouvent dans le domaine admissible.

**11.** Procédé selon la revendication 7,caractérisé en ce que, en cas de risque de collision constaté et de création de signaux ou de données de consigne pour déplacer la position de consigne transversalement par rapport au parcours de consigne, ces signaux ou données sont comparés aux signaux et données pour vérifier le domaine admissible et ne sont transmis aux organes de réglage de la régulation du véhicule que si ces valeurs sont situées dans le domaine admissible, tandis que les signaux et données pour le domaine admissible pour l'espace restant disponible latéralement à gauche et à droite du parcours de consigne sont déterminés et peuvent être introduits d'avance, par exemple, en fonction de la largeur de la piste de roulement.

**12.** Procédé selon l'une des revendications 1 à 4 ou 9, caractérisé en ce que la distance minimale au moment du rapprochement le plus étroit entre le véhicule et l'obstacle, définie par la détermination des signaux de consigne pour la commande des organes de réglage de la régulation du véhiucle, est pondérée en fonction d'autres grandeurs dynamiques comme, par exemple, la vitesse du véhicule ou l'angle au moment de rapprochement le plus étroit, sous forme de signaux de grandeur variable.

**13.** Procédé selon la revendication 7,caractérisé en ce que la position de consigne du véhicule est transformée suivant une transition continue en une position déplacée à raison de la différence entre la distance minimale et la distance au moment du rapprochement le plus étroit en direction de l'angle du rapprochement le plus étroit, suivant une transition continue.

**14.** Dispositif pour mettre en oeuvre le procédé selon l'une des revendications 1 à 13, avec un dispositif pour détecter les signaux de parcours du véhicule et de l'obstacle et avec un dispositif (KP) pour déterminer la durée de temps jusqu'au rapprochement le plus étroit entre le véhicule et l'obstacle ainsi que la distance jusqu'au moment du rapprochement le plus étroit par extrapolation du parcours du véhicule et de l'obstacle, en tenant compte au moins des signaux et/ou des données pour la position, l'angle de parcours et la vitesse ou des grandeurs de signaux ou données qui en dérivent, caractérisé en ce que, au moyen du dispositif KP, outre la détermination de la durée de temps jusqu'au rapprochement le plus étroit entre le véhicule et l'obstacle ainsi que de la distance, on détermine également l'angle jusqu'au moment du rapprochement le plus étroit par extrapolation du parcours de consigne du véhicule et du parcours de l'obtacle, au moins sur base des signaux d'entrée de la position de consigne, de l'angle de parcours de consigne et de la vitesse de consigne, de l'accélération de consigne et,de préférence, du rayon de courbure du parcours de consigne du véhicule, d'une part et qu'on peut créer, d'une part, outre les signaux de position, d'angle de parcours et de vitesse, les autres signaux d'accélération et, de préférence, de rayon de courbure du parcours de l'obstacle, d'autre part, ou l'ensemble des grandeurs des signaux ou des données qui en dérive et en ce qu'il est prévu, en outre, un dispositif KE pour déterminer et pour indiquer le risque de collision en fonction de la durée de temps du rapprochement le plus étroit et de la distance jusqu'au rapprochement le plus étroit et en ce qu'il est prévu au moins un dispositif KV1 et/ou KV2 et/ou KV3 pour éviter la collision pour produire, sans rétroaction sur les signaux ou grandeurs de consigne déterminés dans le premier étage hiérarchique, un parcours de consigne évitant la collision uniquement par une opération d'accélération ou de freinage en déterminant un parcours de consigne évitant la collision en passant l'obstacle, en maintenant la distance minimale ou en suivant l'obstacle en maintenant une distance minimale sans écart latéral par rapport à la piste de consigne et en ce qu'il est prévu un dispositif B pour l'accélération de consigne au moyen duquel la vitesse de consigne momentanée appliquée à la sortie du dispositif évitant la collision peut être adaptée à la vitesse de consigne prédéterminée dans le parcours de consigne introduit tandis que le signal de sortie du dispositif B est utilisé pour l'extrapolation du parcours de consigne.

15. Dispositif selon la revendication 14, caractérisé en ce qu'il est prévu en outre un dispositif R pour renvoyer en continu la position de consigne et l'angle du parcours de consigne au parcours de consigne initial après avoir effectué une manoeuvre préalable évitant la collision à partir du moment du rapprochement le plus étroit.

16. Dispositif selon la revendication 14 ou 15, caractérisé en ce que les dispositifs KV1, KV2 et KV3 et, de préférence, le dispositif R fonctionnent en parallèle et que leurs sorties sont connectées au dispositif KV-AUS qui remplace , en cas de risque de collision indiqué et en fonction de la possibilité de déplacements latéraux de la position, les grandeurs de consigne initiales pour la position et l'angle de parcours du véhicule par les valeurs de consigne nouvellement déterminées par les dispositifs KV2 ou R, ou qui remplace l'accélération de consigne initiale en fonction de là possibilité de celle-ci par l'accélération de consigne nouvellement déterminée par le dispositif KV1 ou par le dispositif KV3.

17. Dispositif selon la revendication 14, caractérisé en ce que le dispositif KP comprend un dispositif (1.1) au moyen duquel, d'après les signaux d'entrée $x_F$, $y_F$, $\nu_F$, $v_{KV}$, $a_F$, $x_H$, $y_H$, $\nu_H$, $v_H$ et $a_H$ , les coefficients $c_2$, $c_1$ et $c_0$, de l'équation cubique pour déterminer le moment $t_K$ du rapprochement le plus étroit peuvent être formés, de façon que l'équation suivante soit applicable

$$t_K^3 + c_2\, t_K^2 + c_1\, t_K + c_0 = 0$$

pour déterminer le moment du rapprochement le plus étroit ce qui permet d'obtenir alors :

$$c_2 = 3 \frac{a_x v_x + a_y v_y}{a_x^2 + a_y^2}$$

$$c_1 = 2 \frac{v_x^2 + x a_x + v_y^2 + y a_y}{a_x^2 + a_y^2}$$

$$c_0 = 2 \frac{x v_x + y v_y}{a_x^2 + a_y^2} \quad ,$$

si, dans le dispositif (1.2), l'équation cubique peut être transformée en une équation cubique réduite et que, dans un dispositif (1.3), les points de passage à zéro de l'équation cubique réduite peuvent être déterminés et être retransformés en équation cubique initiale et en ce que, dans un dispositif (1.4) d'après les points zéro de l'équation cubique et la durée de temps formée dans le dispositif (1:1) jusqu'au rapprochement le plus étroit dans le cas d'un déplacement relatif sans accélération entre le véhicule et l'obstacle, la durée de temps correspondante jusqu'au rapprochement le plus étroit peut être déterminée.

**18.** Dispositif selon la revendication 17, caractérisé en ce que, d'après la durée de temps correspondante déterminée jusqu'au rapprochement le plus étroit, un dispositif (1.5) situé en aval peut déterminer, d'une part, pour le véhicule tout comme pour l'obstacle, le parcours parcouru pendant la durée de temps jusqu'au rapprochement le plus étroit et l'angle de parcours jusqu'au moment du rapprochement le plus étroit et que, dans un dispositif (1.6), on peut déterminer pour le véhicule et l'obstacle la position à escompter au moment du rapprochement le plus étroit et, dans un dispositif (1.7), la distance entre le véhicule et l'obstacle au moment du rapprochement le plus étroit et l'angle de la distance rapportée à un système de coordonnées fixes.

**19.** Dispositif selon l'une des revendications 14 à 18, caractérisé en ce qu'un risque de collision peut être indiqué au moyen du dispositif KE si la durée de temps jusqu'au rapprochement le plus étroit est inférieure au produit de la durée de temps critique prédéterminable librement par un facteur de pondération et si la distance du rapprochement le plus étroit est inférieure au produit de la distance minimale par le facteur de pondération, dans lequel le facteur de pondération a la valeur 1 si aucun risque de collision n'a été indiqué pendant la période de temps précédente et une valeur supérieure à 1 si, au cours de la période de temps précédente, un risque de collision a été indiqué et dans lequel la distance minimale peut être introduite sous forme d'une grandeur constante ou sous forme d'une grandeur variable par un dispositif S, en fonction d'autres grandeurs.

**20.** Dispositif selon l'une des revendications 14 à 19, caractérisé en ce que le dispositif KV1 comprend deux dispositifs KP, dont un dispositif KP détermine la distance à prévoir du rapprochement le plus étroit par l'accélération de consigne du véhicule qui a été établie par le dispositif KV1 au cours de la dernière phase de temps et le deuxième dispositif KP détermine la distance à prévoir au moment du rapprochement le plus étroit pour une accélération de consigne modifiée par rapport au premier dispositif KP d'une quantité prédéterminée librement d'avance tandis que des organes de transmission situés en aval peuvent établir, d'après la modification de la distance à prévoir du rapprochement le plus étroit pour l'accélération de consigne modifiée, une nouvelle accélération de consigne avec une distance au moment du rapprochement le plus étroit qui est supérieure ou égale à la distance minimale et en ce qu'il est prévu un dispositif (1.8) pour indiquer si l'accélération de consigne du véhicule se trouve dans un domaine admissible déterminable librement et si le véhicule avec la nouvelle accélération de consigne a, au moment du rapprochement le plus étroit, une vitesse relative par rapport à l'obstacle qui est supérieure à une valeur limite librement déterminable d'avance et passe donc l'obstacle.

21. Dispositif selon l'une des revendications 14 à 20, caractérisé en ce qu'il est prévu un dispositif KV2 avec des dispositifs (2.1, 2.2 et 2.3), avec le dispositif (2.1) pour déterminer le déplacement de la position de consigne du véhicule transversalement par rapport à la direction du parcours en cas de manoeuvre d'évitement vers la gauche et de manoeuvre d'évitement vers la droite et avec le dispositif (2.2) pour déterminer les facteurs de pondértion pour une transition continue de la position de consigne du véhicule de la position initiale à une position déplacée, tandis que les sorties du dispositif (2.1) pour déterminer le déplacement de la position de consigne vers la gauche ou vers la droite sont connectées aux entrées du dispositif (2.3) pour choisir la direction de déplacement de la position de consigne et pour indiquer si la nouvelle position se trouve dans un domaine admissible déterminable d'avance, et en ce que ce dispositif (2.3) ainsi que le dispositif (2.2) avec les facteurs de pondération qui y sont formés commandent les organes de transmission pour faire passer la position de consigne du véhicule suivant une transition continue du parcours de consigne initial à une position déplacée d'un intervalle déterminé dans le dispositif (2.3) et pour établir l'angle de consigne du parcours de façon que la distance au moment de rapprochement le plus étroit devienne plus grande ou égale à la distance minimale.

22. Dispositif pour mettre en oeuvre le procédé selon l'une des revendications 1 à 13, avec un dispositif pour détecter les signaux de parcours du véhicule et de l'obstacle et avec un dispositif KP pour déterminer la durée de temps jusqu'au rapprochement le plus étroit entre le véhicule et l'obstacle ainsi que la distance jusqu'au moment du rapprochement le plus étroit, par extrapolation du parcours du véhicule et de l'obstacle en tenant compte au moins des signaux et/ou des données pour la position, l'angle de parcours et la vitesse ou les grandeurs de signaux ou les données qui en sont dérivées, caractérisé en ce que le dispositif KP est utilisé non seulement pour la détermination de la durée de temps jusqu'au rapprochement le plus étroit entre le véhicule et l'obstacle ainsi que de la distance, mais également de l'angle au moment du rapprochement le plus étroit par extrapolation du parcours de consigne du véhicule et du parcours de l'obstacle en se basant au moins sur les signaux d'entrée de la position de consigne, de l'angle de parcours de consigne, de la vitesse de consigne, de l'accélération de consigne et, de préférence, du rayon de courbure du parcours de consigne du véhicule d'une part et sur les signaux de position, d'angle de parcours, de vitesse, d'accélération et, de préférence, de rayon de courbure du parcours de l'obstacle, d'autre part ou de l'ensemble des grandeurs ou données de signaux qui peuvent en être dérivés, en ce qu'il est prévu, en outre, un dispositif KE pour déterminer et pour indiquer le risque de collision en fonction de la durée de temps jusqu'au rapprochement le plus étroit et de la distance du rapprochement le plus étroit et en ce qu'il est prévu un dispositif KV4, R4 et KV4-AUS, le dispositif KV4 servant à modifier la position de consigne du véhicule suivant une transition continue jusqu'au moment du rapprochement le plus étroit en une position déplacée à raison de la différence entre la distance minimale et la distance prévue au moment du rapprochement le plus étroit entre le véhicule et l'obstacle dans la direction de l'angle du rapprochement le plus étroit et à déterminer l'angle du parcours de consigne et avec le dispositif R4 servant à renvoyer la position de consigne évitant la collision du véhicule suivant une transition continue inverse du parcours de consigne initial après le moment du rapprochement le plus étroit et pour déterminer à nouveau l'angle du parcours de consigne tandis que, au moyen du dispositif KV4-AUS, les valeurs initiales pour la position de consigne et l'angle de parcours de consigne du véhicule peuvent être remplacées en cas de risque de collision indiqué par les valeurs nouvellement déterminées par le dispositif KV4 pour la position de consigne et l'angle de parcours de consigne et après le moment du rapprochement le plus étroit par les valeurs nouvellement déterminées par le dispostiif R4 pour la position de consigne et l'angle de parcours de consigne, et en ce qu'il est prévu un dispositif B pour l'accélération de consigne au moyen duquel la vitesse de consigne évitant la collision appliquée momentanément à la sortie du dispositif évitant la collision peut être adaptée à la vitesse de consigne prédéterminée pour le parcours de consigne, tandis que le signal de sortie du dispositif B est utilisé pour l'extrapolation du parcours de consigne.

43

Fig. 1

Fig. 2

Fig. 3

Fig. 4

EP 0 433 351 B1

Fig. 5

Fig. 6

EP 0 433 351 B1

49

Fig. 7

EP 0 433 351 B1

50

Fig. 8

EP 0 433 351 B1

51

Fig. 9

Fig. 10

Fig. 11

Bahnabschätzung
für das Hindernis

Hindernis
$t = t_0$

fiktives Hindernis
auf der Tangentenbahn

$t = t_0 + t_{K,alt} - \Delta t$

Linearisierung der Bahnen
durch Tangenten

Sollbahnabschätzung für
das Fahrzeug

Fahrzeug
$t = t_0$

fiktives Fahrzeug auf
der Tangentenbahn

Fig. 12

EP 0 433 351 B1

Fig. 13

$t_{krit}$

$r_K$

$r_{mind}$

301

× 303

$t_K$

+ − 305

+ − 307

1

−1

309

−1

311

$K_g$

$\Delta t$

313

hy

+ −

315

1.5

1.0

57

Fig. 14

Fig. 15

$r_{q,max}$

$v_F$

$v_H$

$r_{q,min}$

Fahrzeug
$v_F > v_H$

Hindernis

EP 0 433 351 B1

Fig. 16

Fig. 17

EP 0 433 351 B1

60

EP 0 433 351 B1

Fig. 18

Fig. 19

Fig. 20

Fig. 21

64

Fig. 22

Fig. 23

Fig. 24

Fig. 25

Fig. 26

Fig. 27

EP 0 433 351 B1

Fig. 28

71

Fig. 29

72

Fig. 30

Fig. 31